# EUROPEAN PATENT APPLICATION

(11) **EP 4 517 396 A2**
(43) Date of publication of application: **05.03.2025**
(21) Application number: 25151842.9
(22) Date of filing: 11.12.2022
(51) Int. Cl.: G02B 5/18

(54) **SYSTEM AND METHOD FOR FABRICATING HOLOGRAPHIC OPTICAL ELEMENTS USING POLARIZATION HOLOGRAM MASTER**

(30) Priority: 14.12.2021 US 202163289535 P; 28.09.2022 US 202217954326
(62) Divisional of application: 22851105.1
(71) Applicant: Meta Platforms Technologies, LLC, Menlo Park, CA 94025 (US)
(72) Inventor: Oh, Chulwoo, Menlo Park (US); Song, Hyunmin, Menlo Park (US); Jang, Changwon, Menlo Park (US); Leibovici, Matthieu Charles Raoul, Menlo Park (US); Lee, Yun-Han, Menlo Park (US)
(74) Representative: Murgitroyd & Company

(57) **Abstract**

A system includes a light outputting element configured to output a first beam propagating toward a beam interference zone from a first side of the beam interference zone. The system also includes a wavefront shaping assembly disposed at a second side of the beam interference zone and including a polarization hologram, the wavefront shaping assembly being configured to reflect the first beam as a second beam propagating toward the beam interference zone from the second side. The first beam and the second beam are linearly polarized beams, and are configured to interfere with one another within the beam interference zone to generate an interference pattern that is recordable in a recording medium layer disposed in the beam interference zone.

## Description

### TECHNICAL FIELD

The present disclosure relates generally to systems and methods for fabricating optical elements and, more specifically, to a system and a method for fabricating holographic optical elements using a polarization hologram master.

### BACKGROUND

Holographic optical elements ("HOEs") are diffractive optical elements based on the principle of holography . Holography is a technique that enables a wavefront to be recorded and later re-constructed. In principle, it is possible to fabricate a hologram for reconstructing any wavefront of interest. A hologram is fabricated by superimposing a reference beam on a signal beam having a wavefront of interest, thereby generating an interference pattern which is recorded within a photosensitive material. When only the reference beam illuminates the recorded hologram, the reference beam is diffracted by the recorded hologram to recreate the wavefront of interest.

Holographic optical elements ("HOEs") possess useful properties originating from their volumetric grating structures, such as selectivity and multiplexability. Selectivity indicates the capability of an HOE to diffract beams having specific incidence angles or specific wavelengths. Multiplexability indicates the capability of the HOE to superpose different volume gratings that respond to different incidence angles or different wavelengths into a single HOE. For example, an HOE including volume gratings that are independently recorded in red, green, and blue wavelengths can generate a full-color image. An HOE can function as a mirror, a lens, or a directional diffuser, etc., and may be configured to perform an optical function of, e.g., focusing beams, collimating beams, or correcting aberrations, etc. HOEs can replace heavy and complicated optical elements, and have been widely applied in a variety of fields such as hologram memories, holographic projection screens, holographic printers, artificial reality systems, etc. Freeform HOEs may be constructed with a high degree of flexibility, which enables redirection of highly oblique beams (or beams having large angles of incidence) and aberration correction of the highly oblique beams. For example, freeform HOEs can provide off-axis focusing of beams without tilting, or with tilting at smaller angles as compared with the conventional lenses Thus, freeform HOEs can reduce a form factor of an optical system. Moreover, freeform HOEs may perform two or more functions simultaneously, such as deflecting beams, focusing beams, aberration correction of beams, etc.

### SUMMARY OF THE DISCLOSURE

According to a first aspect of the present disclosure, there is provided a system comprising: a light outputting element configured to output a first beam propagating toward a beam interference zone from a first side of the beam interference zone; a wavefront shaping assembly including a polarization hologram, the wavefront shaping assembly being disposed at a second side of the beam interference zone, and configured to reflect the first beam transmitted through the beam interference zone as a second beam propagating toward the beam interference zone from the second side; wherein the first beam and the second beam are linearly polarized beams, and are configured to interfere with one another within the beam interference zone to generate an interference pattern that is recordable in a recording medium layer disposed in the beam interference zone.

In some embodiments, the polarization hologram may be configured with a predetermined phase profile, and the second beam may be configured with a predetermined wavefront that is associated with the predetermined phase profile.

In some embodiments, the polarization hologram may include a reflective polarization volume hologram ("PVH") element.

In some embodiments, the wavefront shaping assembly may further include a waveplate disposed between the polarization hologram and the beam interference zone, the waveplate may be configured to convert the first beam received from the light outputting element into a first polarized beam having a predetermined handedness toward the polarization hologram, the polarization hologram may be configured to reflect the first polarized beam back to the waveplate as a second polarized beam having the predetermined handedness, and the waveplate may be configured to convert the second polarized beam received from the polarization hologram into the second beam propagating toward the beam interference zone from the second side.

In some embodiments, the first beam and the second beam may have the same polarization direction, and the interference pattern may be an intensity interference pattern.

According to a second aspect of the present disclosure, there is provided a system comprising: a light outputting element configured to output a first beam propagating toward a beam interference zone from a first side of the beam interference zone; a wavefront shaping assembly including a polarization hologram, the wavefront shaping assembly being disposed between the light outputting element and the beam interference zone, and configured to convert the first beam into a second beam propagating toward the beam interference zone from the first side; wherein the second beam is configured to interfere with a third beam within the beam interference zone to generate an interference pattern that is recordable in a recording medium layer disposed in the beam interference zone; and wherein the third beam propagates toward the beam interference zone from a second side of the beam interference zone.

In some embodiments, the first beam and the third beam may be linearly polarized beams having the same polarization direction, and the interference pattern may be an intensity interference pattern.

In some embodiments, the wavefront shaping assembly may further include a waveplate disposed between the polarization hologram and the beam interference zone, and a polarizer disposed between the waveplate and the beam interference zone.

In some embodiments, the polarization hologram may include a transmissive polarization volume hologram ("PVH") element or a Pancharatnam-Berry phase ("PBP") element.

In some embodiments, the first beam may be a polarized input beam having a first handedness, the polarization hologram may be configured with a predetermined phase profile, and may be configured to convert the first beam into a first polarized beam having a second handedness that is opposite to the first handedness and a second polarized beam having the first handedness, and the first polarized beam may be configured with a predetermined wavefront associated with the predetermined phase profile of the polarization hologram.

In some embodiments, the wavefront shaping assembly may further include a waveplate disposed between the polarization hologram and the beam interference zone, and a polarizer disposed between the waveplate and the beam interference zone, wherein the waveplate may be configured to respectively convert the first polarized beam and the second polarized beam into a first linearly polarized beam and a second linearly polarized beam having orthogonal polarization directions toward the polarizer, and wherein the polarizer may be configured to transmit the first linearly polarized beam as the second beam propagating toward the beam interference zone from the first side, and block the second linearly polarized beam.

In some embodiments, the light outputting element may be a first light outputting element, and the system may further comprise: a second light outputting element disposed at the second side of the beam interference zone, and configured to output the third beam propagating toward the beam interference zone from the second side.

In some embodiments, the light outputting element may be a first light outputting element, the wavefront shaping assembly may be a first wavefront shaping assembly, the polarization hologram may be a first polarization hologram, and the system may further comprise: a second light outputting element disposed at the second side of the beam interference zone, and configured to output a fourth beam propagating toward the beam interference zone from the second side, and a second wavefront shaping assembly including a second polarization hologram, the second wavefront shaping assembly being disposed between the second light outputting element and the beam interference zone, and configured to convert the fourth beam into the third beam propagating toward the beam interference zone from the second side.

In some embodiments, the first wavefront shaping assembly may further include a first waveplate disposed between the first polarization hologram and the beam interference zone, and a first polarizer disposed between the first waveplate and the beam interference zone, and the second wavefront shaping assembly may further include a second waveplate disposed between the second polarization hologram and the beam interference zone, and a second polarizer disposed between the second waveplate and the beam interference zone.

In some embodiments, the second polarization hologram may include a transmissive polarization volume hologram ("PVH") element or a Pancharatnam-Berry phase ("PBP") element.

According to a third aspect of the present disclosure, there is provided a system comprising: a first light outputting element configured to output a first beam propagating toward a beam interference zone from a first side of the beam interference zone; a first wavefront shaping assembly including a first polarization hologram, the first wavefront shaping assembly being disposed between the first light outputting element and the beam interference zone, and configured to convert the first beam into a second beam propagating toward the beam interference zone from the first side; a second wavefront shaping assembly including a second polarization hologram, the second wavefront shaping assembly being disposed at a second side of the beam interference zone, and configured to reflect the second beam back as a third beam propagating toward the beam interference zone from the second side; wherein the second beam and the third beam are linearly polarized beams, and are configured to interfere with one another within the beam interference zone to generate an interference pattern that is recordable in a recording medium layer disposed in the beam interference zone.

In some embodiments, the first wavefront shaping assembly may further include: a first waveplate disposed between the first polarization hologram and the beam interference zone, and a first polarizer disposed between the first waveplate and the beam interference zone.

In some embodiments, the second wavefront shaping assembly may further include a second waveplate disposed between the second polarization hologram and the beam interference zone.

In some embodiments, the first polarization hologram may include a transmissive polarization volume hologram ("PVH") element or a Pancharatnam-Berry phase ("PBP") element, and the second polarization hologram may include a reflective PVH element.

In some embodiments, the first polarization hologram may be configured with a first predetermined phase profile, the second polarization hologram may be configured with a second predetermined phase profile, the second beam may be configured with a first predetermined wavefront associated with the first predetermined phase profile, and the third beam may be configured with a second predetermined wavefront associated with the first predetermined phase profile and the second predetermined phase profile.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The following drawings are provided for illustrative purposes according to various disclosed embodiments and are not intended to limit the scope of the present disclosure. In the drawings:
FIGs. 1A-1C schematically illustrate conventional systems for fabricating holographic optical elements ("HOEs");
FIG. 2A schematically illustrates a system for generating an interference pattern in a recording medium layer, according to one or more embodiments of the present disclosure;
FIG. 2B schematically illustrates a system for generating an interference pattern in a recording medium layer, according to one or more embodiments of the present disclosure;
FIG. 3A schematically illustrates a system for generating an interference pattern in a recording medium layer, according to one or more embodiments of the present disclosure;
FIG. 3B schematically illustrates a system for generating an interference pattern in a recording medium layer, according to one or more embodiments of the present disclosure;
FIG. 4A is a flowchart illustrating a method for generating an interference pattern in a recording medium layer, according to one or more embodiments of the present disclosure;
FIG. 4B is a flowchart illustrating a method for generating an interference pattern in a recording medium layer, according to one or more embodiments of the present disclosure;
FIG. 4C is a flowchart illustrating a method for generating an interference pattern in a recording medium layer, according to one or more embodiments of the present disclosure;
FIG. 4D is a flowchart illustrating a method for generating an interference pattern in a recording medium layer, according to one or more embodiments of the present disclosure;
FIG. 5A illustrates a schematic three-dimensional ("3D") view of a liquid crystal polarization hologram ("LCPH"), according to one or more embodiments of the present disclosure;
FIGs. 5B-5D schematically illustrate various views of a portion of the LCPH element shown in FIG. 5A, showing in-plane orientations of optically anisotropic molecules in the LCPH element, according to various embodiments of the present disclosure;
FIGs. 5E-5H schematically illustrate various views of a portion of the LCPH element shown in FIG. 5A, showing out-of-plane orientations of optically anisotropic molecules in the LCPH element, according to various embodiments of the present disclosure;
FIGs. 6A and 6B schematically illustrate in-plane orientations of optically anisotropic molecules in the LCPH element shown in FIG. 5A functioning as an on-axis focusing spherical lens, according to one or more embodiments of the present disclosure;
FIGs. 6C and 6D schematically illustrate in-plane orientations of optically anisotropic molecules in the LCPH element shown in FIG. 5A functioning as an off-axis focusing spherical lens, according to one or more embodiments of the present disclosure;
FIG. 6E schematically illustrates fringes of the LCPH element shown in FIG. 5A functioning as an on-axis focusing spherical lens, according to one or more embodiments of the present disclosure;
FIG. 6F schematically illustrates fringes of the LCPH element shown in FIG. 5A functioning as an off-axis focusing spherical lens, according to one or more embodiments of the present disclosure;
FIG. 6G schematically illustrates fringes of the LCPH element shown in FIG. 5A functioning as an on-axis focusing aspherical lens, according to one or more embodiments of the present disclosure;
FIG. 6H schematically illustrates fringes of the LCPH element shown in FIG. 5A functioning as an off-axis focusing aspherical lens, according to one or more embodiments of the present disclosure,
FIG. 7A schematically illustrates in-plane orientations of optically anisotropic molecules in the LCPH element shown in FIG. 5A functioning as an on-axis focusing cylindrical lens, according to one or more embodiments of the present disclosure;
FIG. 7B schematically illustrates a side view of the LCPH element shown in FIG. 5A functioning as an on-axis focusing cylindrical lens, according to one or more embodiments of the present disclosure;
FIG. 7C schematically illustrates in-plane orientations of optically anisotropic molecules in the LCPH element shown in FIG. 5A functioning as an off-axis focusing cylindrical lens, according to one or more embodiments of the present disclosure;
FIG. 7D schematically illustrates a side view of the LCPH element shown in FIG. 5A functioning as an off-axis focusing cylindrical lens, according to one or more embodiments of the present disclosure;
FIG. 8A schematically illustrates diffraction and transmission of the LCPH element shown in FIG. 5A functioning as a transmissive polarization volume hologram ("PVH") element, according to one or more embodiments of the present disclosure;
FIG. 8B schematically illustrates diffraction and transmission of the LCPH element shown in FIG. 5A functioning as a reflective PVH element, according to one or more embodiments of the present disclosure; and
FIG. 8C schematically illustrates diffraction of the LCPH element shown in FIG. 5A functioning as a Pancharatnam-Berry phase ("PBP") element, according to one or more embodiments of the present disclosure.

### DETAILED DESCRIPTION

Embodiments consistent with the present disclosure will be described with reference to the accompanying drawings, which are merely examples for illustrative purposes and are not intended to limit the scope of the present disclosure. Wherever possible, the same reference numbers are used throughout the drawings to refer to the same or similar parts, and a detailed description thereof may be omitted.

Further, in the present disclosure, the disclosed embodiments and the features of the disclosed embodiments may be combined. The described embodiments are some but not all of the embodiments of the present disclosure. Based on the disclosed embodiments, persons of ordinary skill in the art may derive other embodiments consistent with the present disclosure. For example, modifications, adaptations, substitutions, additions, or other variations may be made based on the disclosed embodiments. Such variations of the disclosed embodiments are still within the scope of the present disclosure. Accordingly, the present disclosure is not limited to the disclosed embodiments. Instead, the scope of the present disclosure is defined by the appended claims.

As used herein, the terms "couple," "coupled," "coupling," or the like may encompass an optical coupling, a mechanical coupling, an electrical coupling, an electromagnetic coupling, or any combination thereof. An "optical coupling" between two optical elements refers to a configuration in which the two optical elements are arranged in an optical series, and a light output from one optical element may be directly or indirectly received by the other optical element. An optical series refers to optical positioning of a plurality of optical elements in a light path, such that a light output from one optical element may be transmitted, reflected, diffracted, converted, modified, or otherwise processed or manipulated by one or more of other optical elements. In some embodiments, the sequence in which the plurality of optical elements are arranged may or may not affect an overall output of the plurality of optical elements. A coupling may be a direct coupling or an indirect coupling (e.g., coupling through an intermediate element).

The phrase "at least one of A or B" may encompass all combinations of A and B, such as A only, B only, or A and B. Likewise, the phrase "at least one of A, B, or C" may encompass all combinations of A, B, and C, such as A only, B only, C only, A and B, A and C, B and C, or A and B and C. The phrase "A and/or B" may be interpreted in a manner similar to that of the phrase "at least one of A or B." For example, the phrase "A and/or B'' may encompass all combinations of A and B, such as A only, B only, or A and B. Likewise, the phrase "A, B, and/or C" has a meaning similar to that of the phrase "at least one of A, B, or C." For example, the phrase "A, B, and/or C" may encompass all combinations of A, B, and C, such as A only, B only, C only, A and B, A and C, B and C, or A and B and C.

When a first element is described as "attached," "provided," "formed," "affixed," "mounted," "secured," "connected," "bonded," "recorded," or "disposed," to, on, at, or at least partially in a second element, the first element may be "attached," "provided," "formed," "affixed," "mounted," "secured," "connected," "bonded," "recorded," or "disposed," to, on, at, or at least partially in the second element using any suitable mechanical or non-mechanical manner, such as depositing, coating, etching, bonding, gluing, screwing, press-fitting, snap-fitting, clamping, etc. In addition, the first element may be in direct contact with the second element, or there may be an intermediate element between the first element and the second element. The first element may be disposed at any suitable side of the second element, such as left, right, front, back, top, or bottom.

When the first element is shown or described as being disposed or arranged "on" the second element, term "on" is merely used to indicate an example relative orientation between the first element and the second element. The description may be based on a reference coordinate system shown in a figure, or may be based on a current view or example configuration shown in a figure. For example, when a view shown in a figure is described, the first element may be described as being disposed "on" the second element. It is understood that the term "on" may not necessarily imply that the first element is over the second element in the vertical, gravitational direction. For example, when the assembly of the first element and the second element is turned 180 degrees, the first element may be "under" the second element (or the second element may be "on" the first element). Thus, it is understood that when a figure shows that the first element is "on" the second element, the configuration is merely an illustrative example. The first element may be disposed or arranged at any suitable orientation relative to the second element (e.g., over or above the second element, below or under the second element, left to the second element, right to the second element, behind the second element, in front of the second element, etc.).

When the first element is described as being disposed "on" the second element, the first element may be directly or indirectly disposed on the second element. The first element being directly disposed on the second element indicates that no additional element is disposed between the first element and the second element. The first element being indirectly disposed on the second element indicates that one or more additional elements are disposed between the first element and the second element.

The term "processor" used herein may encompass any suitable processor, such as a central processing unit ("CPU"), a graphics processing unit ("GPU"), an application-specific integrated circuit ("ASIC"), a programmable logic device ("PLD"), or any combination thereof. Other processors not listed above may also be used. A processor may be implemented as software, hardware, firmware, or any combination thereof.

The term "controller" may encompass any suitable electrical circuit, software, or processor configured to generate a control signal for controlling a device, a circuit, an optical element, etc. A "controller" may be implemented as software, hardware, firmware, or any combination thereof. For example, a controller may include a processor, or may be included as a part of a processor.

The term "non-transitory computer-readable medium" may encompass any suitable medium for storing, transferring, communicating, broadcasting, or transmitting data, signal, or information. For example, the non-transitory computer-readable medium may include a memory, a hard disk, a magnetic disk, an optical disk, a tape, etc. The memory may include a read-only memory ("ROM"), a random-access memory ("RAM"), a flash memory, etc.

The term "film," "layer," "coating," or "plate" may include rigid or flexible, self-supporting or free-standing film, layer, coating, or plate, which may be disposed on a supporting substrate or between substrates. The terms "film," "layer," "coating," and "plate" may be interchangeable. The term "film plane" refers to a plane in the film, layer, coating, or plate that is perpendicular to the thickness direction. The film plane may be a plane in the volume of the film, layer, coating, or plate, or may be a surface plane of the film, layer, coating, or plate. The term "in-plane" as in, e.g., "in-plane orientation," "in-plane direction," "in-plane pitch," etc., means that the orientation, direction, or pitch is within the film plane. The term "out-of-plane" as in, e.g., "out-of-plane direction," "out-of-plane orientation," or "out-of-plane pitch" etc., means that the orientation, direction, or pitch is not within a film plane (i.e., non-parallel with a film plane). For example, the direction, orientation, or pitch may be along a line that is perpendicular to a film plane, or that forms an acute or obtuse angle with respect to the film plane. For example, an "in-plane" direction or orientation may refer to a direction or orientation within a surface plane, an "out-of-plane" direction or orientation may refer to a thickness direction or orientation non-parallel with (e.g., perpendicular to) the surface plane.

The term "orthogonal" as in "orthogonal polarizations" or the term "orthogonally" as in "orthogonally polarized" means that an inner product of two vectors representing the two polarizations is substantially zero. For example, two lights or beams with orthogonal polarizations (or two orthogonally polarized lights or beams) may be two linearly polarized lights (or beams) with two orthogonal polarization directions (e.g., an x-axis direction and a y-axis direction in a Cartesian coordinate system) or two circularly polarized lights with opposite handednesses (e.g., a left-handed circularly polarized light and a right-handed circularly polarized light).

The wavelength ranges, spectra, or bands mentioned in the present disclosure are for illustrative purposes. The disclosed optical device, system, element, assembly, and method may be applied to a visible wavelength band, as well as other wavelength bands, such as an ultraviolet ("UV") wavelength band, an infrared ("IR") wavelength band, or a combination thereof. The term "substantially" or "primarily" used to modify an optical response action, such as transmit, reflect, diffract, block or the like that describes processing of a light means that a major portion, including all, of a light is transmitted, reflected, diffracted, or blocked, etc. The major portion may be a predetermined percentage (greater than 50%) of the entire light, such as 100%, 98%, 90%, 85%, 80%, etc., which may be determined based on specific application needs.

As used herein, the phrase "aperture of a lens" refers to an effective light receiving area of the lens. A "geometry center" of a lens refers to a center of a shape of the effective light receiving area (e.g., aperture) of the lens. The geometry center may be a point of intersection (i.e., a crossing point) between a first symmetric axis and a second symmetric axis of the shape of the aperture. When the entire area of the lens constitutes the effective light receiving area of the lens, the geometry center of the lens is the center of the shape of the lens. For example, when the aperture has a circular shape, the geometry center is a point of intersection between a first diameter (also a first symmetric axis) and a second diameter (also a second symmetric axis) of the aperture of the lens When the aperture has a rectangular shape, the geometry center is a point of intersection between a longitudinal symmetric axis (also a first symmetric axis) and a lateral symmetric axis (also a second symmetric axis) of the aperture of the lens.

The term "optic axis" may refer to a direction in a cry stal. A light propagating in the optic axis direction may not experience birefringence (or double refraction). An optic axis may be a direction rather than a single line: lights that are parallel to that direction may experience no birefringence.

The term "freeform" refers to a configuration of an element having no translational or rotational symmetry about an optical axis of the element. A freeform optical element may have an aspheric design. A freeform optical element may operate in an off-axis manner, e.g., to redirect, focus, defocus, or collimate, etc., an off-axis beam.

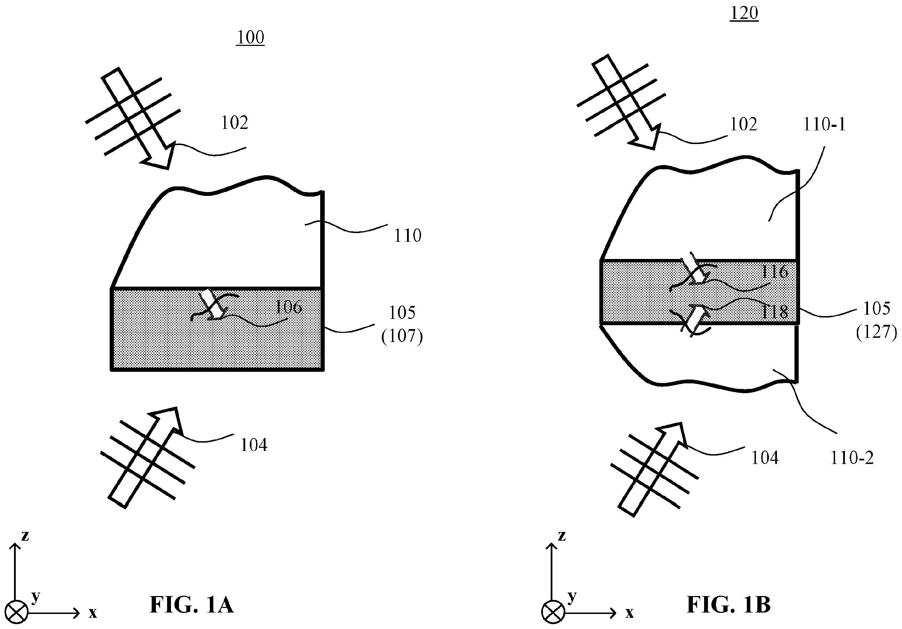

An HOE may be fabricated by recording an interference pattern generated by two coherent beams (e.g., a signal beam and a reference beam) within a photosensitive material to generate a volume grating. FIG. 1A schematically illustrates a conventional system 100 for generating an intensity interference pattern that may be recorded in a recording medium layer, such as a photosensitive material layer 105, to fabricate an HOE. As shown in FIG. 1A, the system 100 may include a master 110 arranged in a stack configuration with the photosensitive material layer 105. The master 110 may be configured to transmit a beam 102 having a first planar wavefront as a signal beam 106 having a predetermined wavefront. The system 100 may be referred to as a one-arm recording system.

The signal beam 106 may be incident onto a first surface (e.g., an upper surface) of the photosensitive material layer 105. A reference beam 104 having a second planar wavefront may be incident onto a second surface (e.g., a lower surface) of the photosensitive material layer 105. The second surface and the first surface may be opposite surfaces of the photosensitive material layer 105 in the thickness direction. The second wavefront may be the same as, similar to, or different from the first planar wavefront.

The signal beam 106 and the reference beam 104 may be coherent beams with the same linear polarization. The signal beam 106 and the reference beam 104 may interfere with one another to generate an intensity interference pattern within a space in which the photosensitive material layer 105 is disposed. A portion of, or the entire volume of the photosensitive material layer 105 may be exposed to the intensity interference pattern. The intensity interference pattern may cause a refractive index modulation pattern within the volume of the photosensitive material layer 105. Thus, the wavefront information of the signal beam 106 and the reference beam 104 are converted into the refractive index modulation pattern recorded in the photosensitive material layer 105. After a sufficient exposure to the intensity interference pattern generated by the signal beam 106 and the reference beam 104, the photosensitive material layer 105 may become a recorded HOE 107. When the recorded HOE 107 is illuminated by the reference beam 104 having the second planar wavefront, the recorded HOE 107 may diffract the reference beam 104 having the second planar wavefront as the signal beam 106 having the predetermined wavefront. Thus, the predetermined wavefront may be reconstructed.

In conventional technologies, the master 110 may be a prism made of an optical material that is substantially transparent to the beam 102, e.g., a glass, a polymer, or a resin, etc. Such a master may be referred to as a prism master or prism 110. The prism 110 may be configured to have a predetermined geometry surface profile (or shape), thereby providing a predetermined phase profile to a beam transmitted therethrough. For example, the prism 110 may transmit the beam 102 having the first planar wavefront as the signal beam 106 having the predetermined wavefront. For example, when the prism 110 has a spherical surface profile, a cylindrical surface profile, a titled planar surface profile, etc., the signal beam 106 may have a spherical wavefront, a cylindrical wavefront, or a planar wavefront that is tilted with respective to the first planar wavefront of the beam 102, etc. Accordingly, the recorded HOE 107 may function as a spherical lens, a cylindrical lens, or a prism, etc. When the surface profile of the prism 110 has a freeform (or the prism 110 is a freeform prism) as shown in FIG 1A, the signal beam 106 may have a freeform wavefront. Accordingly, the recorded HOE 107 may be a freeform HOE.

FIG. 1B schematically illustrates a conventional system 120 for generating an intensity interference pattern that may be recorded in a recording medium layer, such as the photosensitive material layer 105 to fabricate an HOE. As shown in FIG. 1B, the system 120 may include two prisms 110-1 and 110-2 disposed at both sides of the photosensitive material layer 105. The prisms 110-1 and 110-2 may be disposed at two opposing surfaces of the photosensitive material layer 105. Each of the prisms 110-1 and 110-2 may be similar to the prism 110 shown in FIG. 1A. Each of the prisms 110-1 and 110-2 may be configured to transmit a beam having a first planar wavefront (or a second planar wavefront) as a beam having a predetermined wavefront. The system 120 may be referred to as a two-arm recording system.

For example, the prism 110-1 may be configured with a first surface profile, and may transmit the beam 102 having the first planar wavefront as a first beam 116 with a first predetermined wavefront. The prism 110-2 may be configured with a second surface profile, and may transmit the beam 104 having the second planar wavefront as a second beam 118 with a second predetermined wavefront. The first beam 116 and the second beam 118 may be coherent beams with the same linear polarization. One of the first beam 116 and the second beam 118 may be a reference beam, and the other of the first beam 116 and the second beam 118 may be a signal beam. The first beam 116 and the second beam 118 may interfere with one another to generate an intensity interference pattern that is recorded in the photosensitive material layer 105.

As shown in FIG 1B, both of the prisms 110-1 and 110-2 are configured with freeform surface profiles. That is, the prisms 110-1 and 110-2 are freeform prisms or freeform lenses. Thus, the prism 110-1 may transmit the beam 102 having the first planar wavefront as the first beam 116 having a first freeform wavefront, and the prism 110-2 may transmit the beam 104 having the second planar wavefront as the second beam 118 having a second freeform wavefront. A recorded HOE 127 may be a freeform HOE.

HOEs fabricated by the one-arm recording system 100 including a single prism may reconstruct limited type of wavefronts. In addition, as the complexity of the surface profile of the prism increases, the difficulty and the cost of fabrication significantly increase. Thus, it is challenging to fabricate complicated freeform HOEs using the one-arm recording system 100. The two-arm recording system 120 including two prisms may be used to fabricate HOEs that reconstruct a large variety of types of wavefronts. For example, the two-arm recording system 120 may be used to fabricate a variety of freeform HOEs. However, due to the non-planar surface profiles of the two freeform prisms, the two-arm recording system 120 may be bulky and heavy. It is challenging to place the two-arm recording system 120 in a mass production line, especially in a mass production line involving roll-to-roll process.

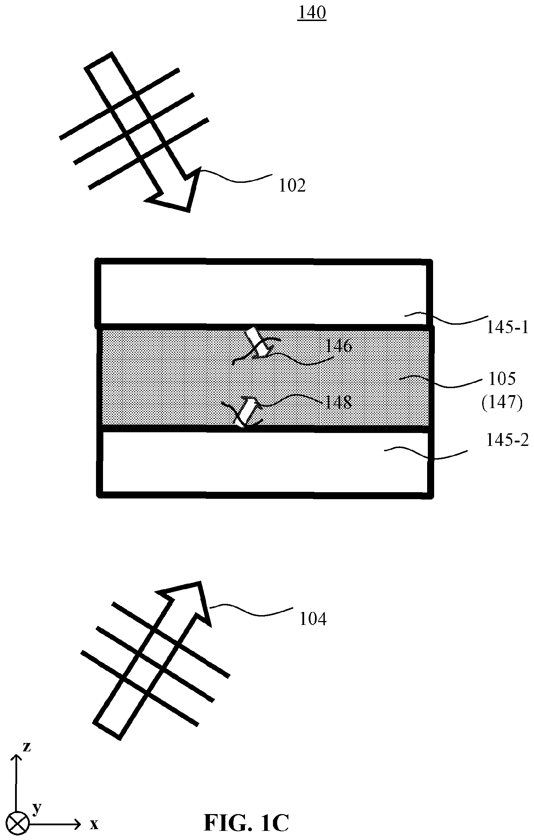

FIG. 1C schematically illustrates a conventional system 140 for generating an intensity interference pattern that may be recorded in a recording medium layer, such as the photosensitive material layer 105 to fabricate an HOE. As shown in FIG. 1C, the system 140 may include two HOE masters 145-1 and 145-2 disposed at opposite surfaces of the photosensitive material layer 105. Each of the HOE masters 145-1 and 145-2 may be configured to transmit a beam having a planar wavefront as a beam having a predetermined wavefront. The system 140 may be referred to as a two-arm recording system. The HOE master 145-1 or 145-2 may have flat surfaces. The HOE master 145-1 may be configured to provide a first phase profile to the beam 102 having a planar wavefront, and transmit the beam 102 as a first beam 146 having a first wavefront (corresponding to the first phase profile). The HOE master 145-2 may be configured to provide a second phase profile to the beam 104 having a planar wavefront and transmit the beam 104 as a second beam 148 with a second wavefront (corresponding to the second phase profile). The first beam 146 and the second beam 148 may be coherent beams with the same linear polarization. One of the first beam 146 and the second beam 148 may be a reference beam, and the other of the first beam 146 and the second beam 148 may be a signal beam. The first beam 146 and the second beam 148 may interfere with one another to generate an intensity interference pattern that is recorded in the photosensitive material layer 105. As shown in FIG 1C, both of the HOE masters 145-1 and 145-2 are configured to provide freeform phase profiles (or the HOE masters 145-1 and 145-2 are freeform HOE masters). The HOE master 145-1 may transmit the beam 102 as the first beam 146 having a first freeform wavefront, and the HOE master 145-2 may transmit the beam 104 as the second beam 148 having a second freeform wavefront. An HOE 147 recorded using the system 140 may be a freeform HOE.

The HOE master 145-1 or 145-2 may replace the prism master (e.g., 110 in FIG. 1A, or 110-1 or 110-2 in FIG. 1B) with a non-planar surface profile to reduce the size, weight, and complexity of the recording system. The complexity of placing the two-arm recording system 140 in a mass production line (especially in a mass production line involving roll-to-roll process) may be reduced. However, one or more prism masters are still needed to fabricate the HOE master 145-1 or 145-2. That is, the fabrication of the HOE master 145-1 or 145-2 may still involve using a recording system including one or more prisms, such as the system 100 shown in FIG. 1A or the system 120 shown in FIG. 1B. In addition, due to a limited spectral or angular bandwidth of the HOE master 145-1 or 145-2, it is challenging to record high quality HOEs using HOE masters.

In view of the limitations in the conventional technologies, the present disclosure provides systems and methods for recording HOEs using a polarization hologram as the master. Such a polarization hologram may be referred to as a polarization hologram master The polarization hologram may be configured with a desirable predetermined phase profile, and may convert an input beam into an output beam having a wavefront associated with the predetermined phase profile. That is, the phase information (or the predetermined phase profile) of the polarization hologram may be encoded into the wavefront of the output beam.

The polarization hologram may be formed by a thin layer of a birefringent medium with an intrinsic or induced (e.g., photo-induced) optical anisotropy, such as liquid crystals ("LC"), a liquid crystal polymer, or an amorphous polymer, etc. A phase profile of the polarization hologram may be determined, in part, by the local orientations of the optic axis of the polarization hologram (or the birefringent medium). Different patterns of the local orientations of the optic axis of the polarization hologram may result in different phase profiles. Thus, through configuring the local orientations of the optic axis of the polarization hologram, the phase profile of the polarization hologram may be configurable. A desirable predetermined phase profile may be directly encoded into the local orientations of the optic axis of the polarization hologram.

In the present disclosure, a polarization hologram used as the master for fabricating HOEs may be fabricated based on various methods, such as holographic interference (e.g., holographic polarization interference), laser direct writing, ink-jet printing, and various other forms of lithography. For example, the laser direct writing may "write" a polarization hologram with desirable local orientations of the optic axis. Accordingly, the polarization hologram may be configured to have a desirable predetermined phase profile. Thus, a "hologram" described herein is not limited to creation by holographic interference, or "holography."

In some embodiments, the polarization hologram may include an LC material. Such a polarization hologram may also be referred to as a liquid crystal polarization hologram ("LCPH"). In some embodiments, the polarization hologram may include a liquid crystal polymer ("LCP") layer that includes polymerized (or cross-linked) liquid crystals ("LCs"), polymer-stabilized LCs, a photosensitive LC polymer, or any combination thereof. In some embodiments, the polarization hologram may include active LCs. The LCs may include nematic LCs, twist-bend LCs, chiral nematic LCs, smectic LCs, or any combination thereof. In some embodiments, the polarization hologram may include a birefringent photo-refractive holographic material other than LCs, such as an amorphous polymer. LCPH elements have features such as flatness, compactness, high efficiency, high aperture ratio, absence of on-axis aberrations, flexible design, simple fabrication, and low cost, etc. Thus, LCPH elements can be implemented in various applications. For discussion purpose, in the present disclosure, the term "LCPH" may encompass polarization holograms based on LCs and polarization holograms based on birefringent photo-refractive holographic materials other than LCs (e.g., an amorphous polymer). Among LCPH elements, Pancharatnam-Berry phase ("PBP") elements and polarization volume hologram ("PVH") elements have been extensively studied. The LCPH element may be a reflective element (e.g., a reflective PVH element, etc.), or a transmissive element (e.g., a PBP element, or a transmissive PVH element, etc.). The LCPH element may be a passive element or an active element. A passive LCPH element may provide a constant phase profile. An active LCPH element may provide a phase profile that is adjustable by an external field, e.g., an electric field.

Due to the flatness, compactness, flexible design, and simple fabrication of the LCPH elements (or LCPH masters), the build space and build cost of the disclosed system including one or more LCPH elements as one or more masters may be reduced, and the complexity of reconfiguring the disclosed system for fabricating various HOEs with different diffraction behaviors may be significantly reduced. The implementation of the disclosed system into a mass production line (e.g., involving roll-to-roll process) of HOEs may be significantly simplified. In addition, as the LCPH elements have a high efficiency (e.g., the efficiency of a PVH element is greater than 95%, the efficiency of a PBP element is greater than 99%), and broadband spectrum range and/or angular range, the HOEs recorded by the disclosed system may have much higher quality than those fabricated using conventional technologies. Through configuring the local orientations of optic axis of the LCPH master, the disclosed system may be used to fabricate various HOEs with different diffraction behaviors with increased quality and process yield.

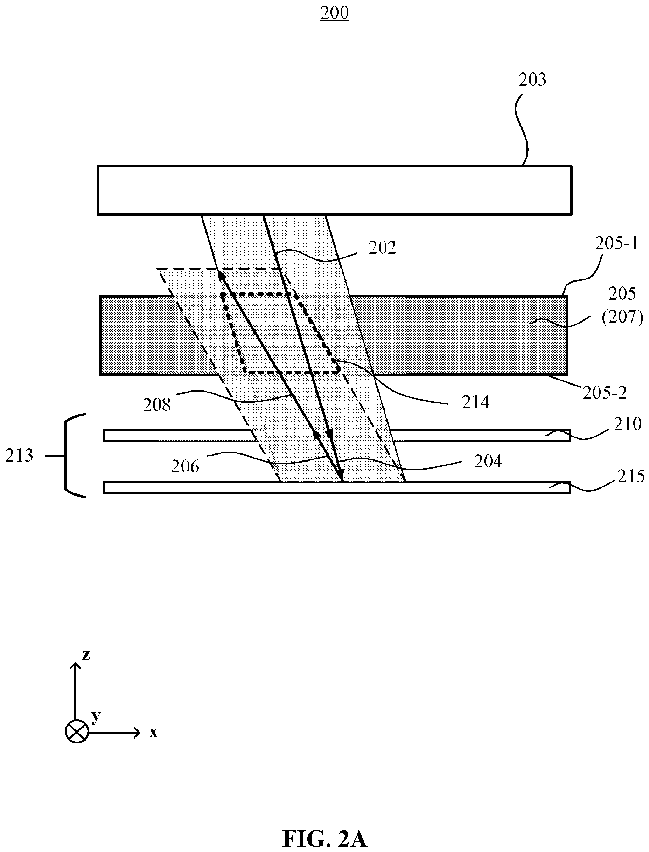

FIG. 2A schematically illustrates a system (e.g., an interference system) 200 configured to generate an intensity interference pattern that may be recorded in a recording medium layer 205, according to an embodiment of the present disclosure. As shown in FIG. 2A, the system 200 may include a beam outputting device (or assembly) 203 and a wavefront shaping assembly (or device) 213. The beam outputting device 203, the recording medium layer 205, and the wavefront shaping assembly 213 may be arranged in an optical series, for example, in a stacked configuration. As shown in FIG. 2A, in some embodiments, the beam outputting device 203 and the wavefront shaping assembly 213 may be disposed at two opposite sides of the recording medium layer 205. The beam outputting device 203 may include a light source, or an optical element (such as a mirror, a lens, a grating, a waveguide, a waveplate, a prism, a polarizer, etc.) configured to output a beam with a predetermined polarization, wavefront, and propagation direction. The beam outputting device 203 may output a beam 202 toward the recording medium layer 205 and the wavefront shaping assembly 213. The beam 202 may propagate through the recording medium layer 205 toward the wavefront shaping assembly 213.

The wavefront shaping assembly 213 may include a waveplate 210 and a polarization hologram 215. The waveplate 210 may be disposed between the beam outputting device 203 (or the recording medium layer 205) and the polarization hologram 215. The polarization hologram 215 may be configured to function as a master for recording HOEs, and may also be referred to as a polarization hologram master 215. Thus, the wavefront shaping assembly (or device) 213 may also be referred to as a master assembly. The system 200 may be referred to as a one-arm recording system. In the embodiment shown in FIG. 2A, the waveplate 210 and the polarization hologram 215 are shown as being spaced apart from one another by a gap. In some embodiments, the recording medium layer 205, the waveplate 210 and the polarization hologram 215 may be stacked together without a gap (e.g.. through direct contact).

In some embodiments, the waveplate 210 may be configured to function as a quarter-wave plate ("QWP") for an input beam having a predetermined wavelength λ₀ (or a predetermined wavelength range including the predetermined wavelength λ₀). In some embodiments, the waveplate (e.g., QWP) 210 may be configured to convert a circularly polarized beam having the wavelength λ₀ to a linearly polarized beam having the wavelength λ₀, or vice versa. In the disclosed embodiments, the waveplate (e.g., QWP) 210 may be a transmissive waveplate configured to substantially maintain the wavelength and the wavefront of a beam transmitted therethrough. The waveplate (e.g., QWP) 210 may be configured as a flat waveplate or a curved waveplate with at least one curved surface.

In the embodiment shown in FIG. 2A, the polarization hologram 215 may be a reflective element, e.g., a reflective PVH element. The polarization hologram 215 may be configured to substantially backwardly diffract a circularly polarized beam having the predetermined wavelength λ₀ (or the predetermined wavelength range including the predetermined wavelength λ₀) and a first handedness. The polarization hologram 215 may be configured to substantially transmit a circularly polarized beam having the predetermined wavelength λ₀ (or the predetermined wavelength range including the predetermined wavelength λ₀) and a second handedness that is opposite to the first handedness, with negligible or zero diffraction. The polarization hologram 215 may substantially maintain the polarization of the circularly polarized beam while diffracting or transmitting the circularly polarized beam. That is, the polarization hologram 215 may be configured to reflect, via backward diffraction, a circularly polarized input beam having the first handedness as a circularly polarized output beam having the first handedness. In some embodiments, both surfaces of the polarization hologram 215 may be flat surfaces. In some embodiments, the polarization hologram 215 may include at least one curved surface.

The polarization hologram 215 may be configured with a desirable predetermined phase profile, and may reflect (e.g., via backward diffraction) a circularly polarized input beam having an input wavefront as a circularly polarized output beam having an output (or a predetermined) wavefront. The output wavefront may be determined by the predetermined phase profile of the polarization hologram 215 and the input wavefront of the circularly polarized input beam. Thus, the circularly polarized output beam may carry, or may be encoded with, the phase information (e.g., the predetermined phase profile) of the polarization hologram 215. For example, the polarization hologram 215 may be configured with a spherical phase profile, a cylindrical phase profile, a linear phase profile, or a freeform phase profile, etc., such that the circularly polarized output beam may have a spherical wavefront, a cylindrical wavefront, a planar wavefront (which may be tilted with respective to the planar wavefront of the circularly polarized input beam), or a freeform wavefront, etc.

As shown in FIG. 2A, the beam 202 output from the beam outputting device 203 may be a first linearly polarized beam (e.g., an s-polarized beam). The first linearly polarized beam (e.g., s-polarized beam) 202 may be incident onto the waveplate 210 from a first side of the waveplate 210. The first linearly polarized beam (e.g., s-polarized beam) 202 may have a wavelength λ₀ and a first wavefront. In some embodiments, the first linearly polarized beam (e.g., s-polarized beam) 202 may be a collimated beam incident onto the waveplate 210 with a predetermined incidence angle. The first linearly polarized beam (e.g., s-polarized beam) 202 may be a plane wave, and the first wavefront may be a planar wavefront. The waveplate 210 may be configured to convert the first linearly polarized beam (e.g., s-polarized beam) 202 into a first circularly polarized beam (e.g., a left-handed circularly polarized ("LHCP") beam) 204 while transmitting the first linearly polarized beam (e.g., s-polarized beam) 202 toward the polarization hologram 215. The first circularly polarized beam 204 may have a wavelength λ₀ and the first wavefront.

The polarization hologram 215 may be configured with a desirable predetermined phase profile, and may reflect (e.g., via backward diffraction) the first circularly polarized beam (e.g., LHCP beam) 204 as a second circularly polarized beam (e.g., LHCP beam) 206 back toward the waveplate 210. In some embodiments, the second circularly polarized beam (e g., LHCP beam) 206 may have a wavelength λ₀ and a second wavefront. The second wavefront may be different from the first wavefront. The second wavefront may be associated with the predetermined phase profile of the polarization hologram 215. Thus, the second circularly polarized beam 206 may carry, or may be encoded with, the phase information (e.g., the predetermined phase profile) of the polarization hologram 215 For example, when the polarization hologram 215 is configured with a spherical phase profile, a cylindrical phase profile, a linear phase profile, or a freeform phase profile, etc., the second circularly polarized beam (e.g., LHCP beam) 206 output from the polarization hologram 215 may have a spherical wavefront, a cylindrical wavefront, a planar wavefront (which may be tilted with respective to the planar wavefront of the first circularly polarized beam 204), or a freeform wavefront, etc.

The second circularly polarized beam (e.g., LHCP beam) 206 may be incident onto the waveplate 210 from a second side of the waveplate 210. That is, the first circularly polarized beam (e.g., LHCP beam) 204 and the second circularly polarized beam (e.g., LHCP beam) 206 may propagate towards (or be incident onto) the waveplate 210 from different (e.g., opposite) sides of the waveplate 210. The waveplate 210 may be configured to convert the second circularly polarized beam (e.g., LHCP beam) 206 into a second linearly polarized beam 208 having a polarization direction that is the same as the polarization direction of the first linearly polarized beam 202. For example, the second linearly polarized beam 208 may be an s-polarized beam. The second linearly polarized beam 208 may have a wavelength λ₀ and the second wavefront. In other words, the waveplate 210 and the polarization hologram 215 together may reflect the first linearly polarized beam 202 propagating in a first direction as the second linearly polarized beam 208 propagating in a second direction that is different from the first direction.

The first linearly polarized beam 202 and the second linearly polarized beam 208 may interfere with one another within a spatial beam interference zone (or region) 214. Within the beam interference zone 214, the first linearly polarized beam 202 and the second linearly polarized beam 208 may at least partially overlap with one another. For illustrative purposes, FIG. 2A shows a portion of the spatial interference region denoted by dashed lines. The beam sizes of the linearly polarized beams 202 and 208 shown in FIG. 2A are for illustrative purposes, and the size and the shape of the beam interference zone 214 shown in FIG. 2A are also for illustrative purposes.

The linearly polarized beams 202 and 208 may propagate toward the beam interference zone 214 from opposite sides of the beam interference zone 214. For example, the first linearly polarized beam 202 may propagate toward the beam interference zone 214 from a first side of the beam interference zone 214, and the second linearly polarized beam 208 may propagate toward the beam interference zone 214 from a second side of the beam interference zone 214. The superposition (or interference) of the linearly polarized beams 202 and 208 may convert the wavefront information of the linearly polarized beams 202 and 208 into an intensity variation of the interference pattern. In some embodiments, the superposition of the linearly polarized beams 202 and 208 may result in a superimposed wave that has a substantially uniform polarization and a varying amplitude in the beam interference zone 214. In other words, the superposition of the linearly polarized beams 202 and 208 may result in an intensity interference pattern in the beam interference zone 214. The intensity interference pattern may include a one-dimensional ("1D") intensity variation or two-dimensional ("2D") intensity variations within a plane (e.g., an x-y plane in FIG. 2A) of the beam interference zone 214 perpendicular to a thickness direction (e.g., a z-axis direction in FIG. 2A) of the beam interference zone 214. Through configuring the predetermined phase profile of the polarization hologram 215, the intensity interference pattern generated in the beam interference zone 214 may be configured.

In some embodiments, the intensity interference pattern generated by the linearly polarized beams 202 and 208 may be recorded in a recording medium layer 205 disposed in the beam interference zone 214. In some embodiments, the first linearly polarized beam 202 may be referred to as a reference beam 202, and the second linearly polarized beam 208 may be referred to as a signal beam 208. Both of the reference beam 202 and the signal beam 208 may also be referred to as recording beams. The wavelength λ₀ of the recording beam 202 or the recording beam 208 may also be referred to as a recording wavelength. The recording wavelength λ₀ may be configured to be within an absorption band of the recording medium layer 205.

The recording medium layer 205 may include a suitable photo-sensitive material (or holographic material) for recording a hologram. For example, the recording medium layer 205 may include, a silver halide emulsion, a dichromated gelatin, a photopolymer (e.g., photo-polymerizable monomers suspended in a polymer matrix), or a photorefractive crystal, etc. The recording medium layer 205 may have an absorption band. In some embodiments, the recording medium layer 205 may be disposed at a substrate (not shown). In some embodiments, the recording medium layer 205 may be disposed between two substrates (not shown). The one or more substrates may provide support and protection to various layers, films, and/or structures formed thereon. In some embodiments, the one or more substrates may be at least partially transparent in a wavelength range including the recording wavelength λ₀. In some embodiments, the substrate on which the recording medium layer 205 is disposed may be mounted on a movable stage (not shown). The movable stage may be configured to be translatable and/or rotatable in one dimension, two dimensions, or three dimensions, thereby translating and/or rotating the substrate (on which the recording medium layer 205 is disposed) in one or more directions (e.g., translating in the x-axis direction, y-axis direction, and/or z-axis direction, and/or rotating around the yaw, roll, and/or pitch axes defined locally with respect to the movable stage). In some embodiments, a controller (not shown) may be communicatively coupled with the movable stage, and may control the operations and/or movements of the movable stage.

The recording medium layer 205 may include a first surface 205-1 and a second surface 205-2 opposite to the first surface 205-1. The waveplate 210 and the polarization hologram 215 may be disposed at the same surface of the recording medium layer 205, e.g., the second surface 205-2. The recoding beams 202 and 208 may propagate towards the recording medium layer 205 from different (e.g., opposite) sides of the recording medium layer 205. When exposed to the superposed wave of the recording beams 202 and 208, the intensity interference pattern generated by the recording beams 202 and 208 may result in a refractive index modulation pattern within the volume of the recording medium layer 205. The refractive index modulation pattern may correspond to the intensity variation of the intensity interference pattern. That is, the local refractive index of the recording medium layer 205 may correspond to the local intensity of the intensity interference pattern to which the recording medium layer 205 is subjected. Different local intensities in the intensity interference pattern may result in different local refractive indices in the respective portions of the recording medium layer 205. Thus, the wavefronts of the recording beams 202 and 208 may be recorded into the recording medium layer 205 as the refractive index modulation pattern. Accordingly, the phase information (e.g., the predetermined phase profile) of the polarization hologram 215 may be recorded into the recording medium layer 205.

After being sufficiently exposed to the interference pattern generated by the recording beams 202 and 208, the recording medium layer 205 may become a recorded HOE 207. When the recorded HOE 207 is illuminated by the reference beam 202 having the planar wavefront, the recorded HOE 207 may diffract the reference beam 202 as the signal beam 206 having a predetermined wavefront. In other words, the recorded HOE 207 may reconstruct the predetermined wavefront that is associated with the predetermined phase profile of the polarization hologram master 215. Through configuring the phase profile of the polarization hologram master 215 (e.g., via configuring the local orientations of the optic axis of the birefringent medium included in the polarization hologram master 215), various HOEs may be fabricated. The recorded HOE 207 may provide a predetermined optical function, e.g., may function as a lens or a lens array (e.g., a spherical lens or lens array, a cylindrical lens or lens array, etc.), a prism or a prism array, a freeform HOE, etc.

In some embodiments, the recording wavelength λ₀ used in multiple exposures may be fixed. Through controlling the movable stage to translate and/or rotate the substrate on which the recording medium layer 205 is disposed, multiple intensity interference patterns of different intensity variations may be recorded in different regions of the recording medium layer 205 through multiple exposures. In some embodiments, multiple intensity interference patterns of different intensity variations may be recorded in the same region of the recording medium layer 205 through multiple exposures.

In some embodiments, the recording wavelength λ₀ used in multiple exposures may be changed. Through controlling the movable stage to translate and/or rotate the substrate on which the recording medium layer 205 is disposed, multiple intensity interference patterns of different intensity variations or the same intensity variation may be recorded in different regions of the recording medium layer 205 through multiple exposures. In some embodiments, multiple intensity interference patterns of different intensity variations or the same intensity variation may be recorded in the same region of the recording medium layer 205 through multiple exposures.

In the embodiments shown in FIG. 2A, the beam outputting device 203 may be a light source configured to emit a beam having the wavelength λ₀, which may be within an absorption band of the recording medium layer 205. In some embodiments, the beam outputting device 203 may be an optical element other than a light source, and an additional light source may be included in the system 200. The light source may emit a light toward the beam outputting device 203. The beam outputting device 203 may guide the light to propagate toward the beam interference zone 214, where the recording medium layer 205 is located. In some embodiments, the beam output from the light source (e.g., the beam outputting device 203) may be an ultra-violet ("UV"), violet, blue, green, red, or infrared beam, etc. In some embodiments, the light source may be a laser light source, e.g., a laser diode, configured to emit a laser beam (e.g., a red laser beam with a center wavelength of about 660 nm). In some embodiments, the system 200 may include a beam conditioning device (or spatial filtering device) configured to condition (e.g., polarize, expand, collimate, filter, remove noise from, etc.) the beam received from the light source to be a collimated beam with a predetermined beam size and a predetermined polarization, e.g., the first linearly polarized beam 202.

In some embodiments, the beam outputting device 203 may be the beam conditioning device, and an additional light source may be included in the system 200. In some embodiments, the beam conditioning device may include one or more lenses and a pinhole aperture arranged in an optical series, configured to expand and collimate the beam received from the light source as a collimated beam with a predetermined beam size. In some embodiments, the beam conditioning device may further include one or more optical elements (e.g., a polarizer, and/or a waveplate, etc.) configured to change the polarization of the beam received from the light source, and output the beam with a predetermined polarization. In some embodiments, the beam outputting device 203 may include a light source and a light conditioning device. In some embodiments, the system 200 may include one or more light deflecting elements, such as a reflector (e.g., a mirror) configured to reflect the beam output from the beam conditioning device as a beam toward the recording medium layer 205.

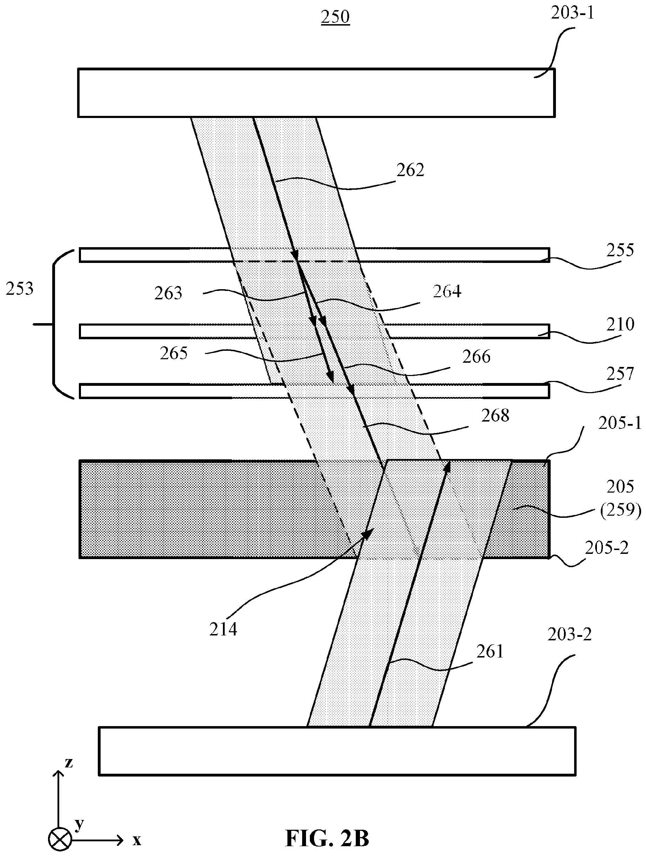

FIG. 2B schematically illustrates a system (e.g., an interference system) 250 configured to generate an intensity interference pattern that may be recorded in the recording medium layer 205, according to an embodiment of the present disclosure. The system 250 may be a one-arm recording system for recording HOEs. The system 250 may include elements, structures, and/or functions that are the same as or similar to those included in the system 200 shown in FIG. 2A. Descriptions of the same or similar elements, structures, and/or functions can refer to the above descriptions rendered in connection with FIG. 2A.

As shown in FIG. 2B, the system 250 may include a first beam outputting device 203-1, a wavefront shaping assembly 253, and a second beam outputting device 203-2 arranged in an optical series. The first beam outputting device 203-1 and the second beam outputting device 203-2 may be similar to the beam outputting device 203 shown in FIG. 2A. Each of the first beam outputting device 203-1 and the second beam outputting device 203-2 may be configured to output a beam with a predetermined polarization, a predetermined wavefront, a predetermined propagation direction, a predetermined beam size, and/or a predetermined intensity, etc. The wavefront shaping assembly 253 may a polarization hologram 255, the waveplate 210, and a polarizer 257 arranged in a stack configuration. The polarization hologram 255 may function as a master for recording HOEs in the recording medium layer 205 disposed in the beam interference zone 214. The polarization hologram 255 may also be referred to as a polarization hologram master 255. Such a system 250 may be referred to as a one-arm recording system.

The first beam outputting device 203-1 and the second beam outputting device 203-2 may be disposed at opposite sides of the recording medium layer 205 (or the beam interference zone 214). The wavefront shaping assembly 253 may be disposed between the first beam outputting device 203-1 and the second beam outputting device 203-2. The first beam outputting device 203-1 and the wavefront shaping assembly 253 may be disposed at the same side of the recording medium layer 205, e.g., at or near the first surface 205-1 of the recording medium layer 205 as shown in FIG. 2B. The waveplate 210 may be disposed between the polarization hologram 255 and the polarizer 257. The polarizer 257 may be disposed between the waveplate 210 and the recording medium layer 205. In the embodiment shown in FIG. 2B, the polarization hologram 255, the waveplate 210, the polarizer 257, and the recording medium layer 205 are shown as being spaced apart from one another by a gap. In some embodiments, the polarization hologram 255, the waveplate 210, the polarizer 257, and the recording medium layer 205 may be stacked without a gap (e.g., through direct contact).

The light outputting device 203-1 may output a beam 262 having the recording wavelength λ₀ toward the wavefront shaping assembly 253. The recording wavelength λ₀ may be configured to be within an absorption band of the recording medium layer 205. For discussion purposes, the beams propagating inside the system 200 are presumed to have the predetermined wavelength λ₀ (or the predetermined wavelength range including the predetermined wavelength λ₀). In the embodiment shown in FIG. 2B, the polarization hologram 255 may be a transmissive element, e.g., a PBP element, or a transmissive PVH element. The polarization hologram 255 may be configured to substantially convert an input beam (e.g., a circularly polarized beam) having a first handedness into a first beam (e.g., a circularly polarized beam) having the first handedness, and a second beam (e.g., a second circularly polarized beam) having a second handedness opposite to the first handedness. The first beam may be a transmitted beam having the same propagation direction and the same wavefront as the input beam. The second beam may be a forwardly deflected beam having a propagation direction different from the input beam and a wavefront different from the input beam. That is, the polarization hologram 255 may be configured to partially forwardly deflect the input beam as the second beam, and partially transmit the input beam as the first beam. In other words, the polarization hologram 255 may forwardly deflect a portion of the input beam as the second beam, and transmit a portion of the input beam as the first beam. The first beam and second beam output from the polarization hologram 255 may have different polarization states, different propagation directions, and different wavefronts.

In some embodiments, both surfaces of the polarization hologram 255 may be flat surfaces. In some embodiments, the polarization hologram 255 may include at least one curved surface. The polarization hologram 255 may be configured with a desirable predetermined phase profile, and may convert the input beam having an input wavefront into the first beam having a first wavefront that is the same as the input wavefront and the second beam having a second wavefront that is different from the input wavefront. The second wavefront may be a predetermined wavefront associated with the predetermined phase profile of the polarization hologram 255 and the input wavefront of the input beam. Thus, the second beam deflected by the polarization hologram 255 may carry or may be encoded with the phase information (e.g., the predetermined phase profile) of the polarization hologram 255. For example, the polarization hologram 255 may be configured with a spherical phase profile, a cylindrical phase profile, a linear phase profile, or a freeform phase profile, etc., such that the second beam deflected by the polarization hologram 255 may have a spherical wavefront, a cylindrical wavefront, a planar wavefront (which may be tilted with respective to the plane wavefront of the input circularly polarized beam), or a freeform wavefront, etc.

In some embodiments, the polarization hologram 255 may be configured to forwardly diffract the input beam (e.g., a circularly polarized beam) having the first handedness as the first beam that is a 0^{th} order diffracted beam, and as the second beam that is a 1^{st} order diffracted beam. The 0^{th} order diffracted beam may be a first circularly polarized beam having the first handedness, and the 1^{st} order diffracted beam may be a second circularly polarized beam having the second handedness opposite to the first handedness. The 0^{th} order diffracted beam may be a transmitted beam, which may experience no diffraction or negligible diffraction while propagating through the polarization hologram 255. That is, the polarization hologram 255 may be configured to partially forwardly deflect the input beam as the 1^{st} order diffracted beam, and partially transmit the input beam as the 0^{th} order diffracted beam. In other words, the polarization hologram 255 may forwardly deflect a portion of the input beam as the 1^{st} order diffracted beam, and transmit a portion of the input beam as the 0^{th} order diffracted beam. The 0^{th} order diffracted beam may have the first wavefront that is the same as the input wavefront of the input beam. The 1^{st} order diffracted beam may have the second wavefront that is a predetermined wavefront associated with the predetermined phase profile of the polarization hologram 255 and the input wavefront of the input beam. Thus, through configuring the polarization hologram 255 with a desirable predetermined phase profile, the polarization hologram 255 may forwardly diffract a circularly polarized input beam having an input wavefront as a circularly polarized output beam having an output (or a predetermined) wavefront associated with the predetermined phase profile of the polarization hologram 255 and the input wavefront of the circularly polarized input beam.

As shown in FIG. 2B, the beam 262 output from the beam outputting device 203-1 may be a first circularly polarized beam (e.g., RHCP beam) 262 having a first wavefront. In some embodiments, the first circularly polarized beam 262 may be a plane wave, and the first wavefront may be a planar wavefront. In some embodiments, the first circularly polarized beam 262 may be a collimated beam incident onto the polarization hologram 255 with a first predetermined incidence angle. The polarization hologram 255 may be configured with a predetermined phase profile, and may forwardly diffract the first circularly polarized beam (e.g., RHCP beam) 262 as a second circularly polarized beam (e.g., RHCP beam) 263 and a third circularly polarized beam (e.g., LHCP beam) 264 propagating toward the waveplate 210. The second circularly polarized beam 263 and the third circularly polarized beam 264 may be a 0^{th} order diffracted beam and a 1^{st} order diffracted beam, respectively. The second circularly polarized beam 263 (0^{th} order diffracted beam) may be a transmitted beam with negligible diffraction. The second circularly polarized beam 263 may have the first wavefront.

The third circularly polarized beam 264 (1^{st} order diffracted beam) may have a second wavefront that is different from the first wavefront. The second wavefront may be associated with the predetermined phase profile of the polarization hologram 255. Thus, the third circularly polarized beam 264 (1^{st} order diffracted beam) may carry or may be encoded with the phase information (e.g., the predetermined phase profile) of the polarization hologram 255. For example, when the polarization hologram 255 is configured with a spherical phase profile, a cylindrical phase profile, a linear phase profile, or a freeform phase profile, etc., the third circularly polarized beam 264 (1^{st} order diffracted beam) output from the polarization hologram 255 may have a spherical wavefront, a cylindrical wavefront, a planar wavefront (which may be tilted with respective to the plane wavefront of the beam 262), or a freeform wavefront, etc.

The waveplate 210 may be configured to convert the second circularly polarized beam 263 (0^{th} order diffracted beam) and the third circularly polarized beam 264 (1^{st} order diffracted beam) into two linearly polarized beams with orthogonal linear polarization directions. For discussion purposes, in the embodiment shown in FIG. 2B, the waveplate 210 may be configured to convert the second circularly polarized beam 263 (0^{th} order diffracted beam) and the third circularly polarized beam 264 (1^{st} order diffracted beam) into a first linearly polarized (e.g., a p-polarized) beam 265 and a second linearly polarized (e.g., an s-polarized) beam 266, respectively. The first linearly polarized beam 265 may have the first wavefront, and the second linearly polarized (e.g., an s-polarized) beam 266 may have the second wavefront.

The first linearly polarized beam 265 and the second linearly polarized beam 266 may propagate toward the polarizer 257. The polarizer 257 may function as a "clean-up" polarizer configured to remove beams of undesirable diffraction orders output from the polarization hologram 255, e.g., the second circularly polarized beam 263 (0^{th} order diffracted beam). For example, the polarizer 257 may be an absorptive linear polarizer configured with a polarization axis (or a transmission axis) that may be parallel with the polarization direction of the second linearly polarized beam 266, and perpendicular to the polarization direction of the first linearly polarized beam 265. Thus, the polarizer 257 may be configured to block the first linearly polarized (e.g., the p-polarized) beam 265 via absorption, and transmit the second linearly polarized (e.g., the s-polarized) beam 266 as a third linearly polarized (e.g., an s-polarized) beam 268 propagating toward the recording medium layer 205. The third linearly polarized beam 268 may have the second wavefront. The third linearly polarized beam 268 may propagate toward the recording medium layer 205 from a first side of the recording medium layer 205.

The second beam outputting device 203-2 may be configured to output a fourth linearly polarized beam 261 propagating toward the recording medium layer 205 from a second side of the recording medium layer 205. In some embodiments, the fourth linearly polarized beam 261 may be a collimated beam incident onto the recording medium layer 205 with a second predetermined incidence angle. The fourth linearly polarized beam 261 may have a third wavefront. In some embodiments, the fourth linearly polarized beam 261 may be a plane wave, and the third wavefront may be a planar wavefront The fourth linearly polarized beam 261 and the third linearly polarized beam 268 may be coherent beams. The fourth linearly polarized beam 261 and the third linearly polarized beam 268 may have the same polarization direction, e.g., s-polarized beams.

The linearly polarized beams 261 and 268 may propagate toward the beam interference zone 214 from opposite sides of the beam interference zone 214. In some embodiments, the fourth linearly polarized beam 261 may be referred to as a reference beam 261, and the third linearly polarized beam 268 having the predetermined wavefront associated with the predetermined phase information of the polarization hologram 255 may be referred to as a signal beam 268. Both of the reference beam 261 and the signal beam 268 may also be referred to as recording beams. The recording beams 261 and 268 may interface with one another to generate an intensity interference pattern within the beam interference zone 214 where the recording medium layer 205 is located. The superposition of the recording beams 261 and 268 may convert the wavefront information of the recording beams 261 and 268 into the intensity interference pattern. In some embodiments, the superposition of the recording beams 261 and 268 may result in a superimposed wave that has a substantially uniform polarization and a varying amplitude within the beam interference zone 214. The intensity variation in the intensity interference pattern may be a 1D intensity variation or 2D intensity variations within a plane (e.g., an x-y plane in FIG. 2B) corresponding to a film plane of the recording medium layer 205. The film plane may be perpendicular to a thickness direction (e.g., a z-axis direction in FIG. 2B) of the recording medium layer 205.

The intensity interference pattern within the beam interference zone 214 where the recording medium layer 205 is located may cause a refractive index modulation pattern in the recording medium layer 205. The refractive index modulation pattern may correspond to the intensity variation of the intensity interference pattern. That is, the local refractive index of the recording medium layer 205 may correspond to the local intensity of the intensity interference pattern. Different local intensities in the intensity interference pattern may result in different local refractive indices in the respective portions of the recording medium layer 205. Thus, the wavefronts of the recording beams 261 and 268 may be recorded into the recording medium layer 205 as the refractive index modulation pattern. Accordingly, the phase information (e.g., the predetermined phase profile) of the polarization hologram 255 may be recorded into the recording medium layer 205.

After being sufficiently exposed to the intensity interference pattern generated by the recording beams 261 and 268, the recording medium layer 205 may become a recorded HOE 259. When the recorded HOE 259 is illuminated by the reference beam 261 having the planar wavefront, the recorded HOE 259 may diffract the reference beam 261 as the signal beam 268 having the predetermined wavefront. In other words, the recorded HOE 259 may reconstruct the predetermined wavefront that is associated with the predetermined phase profile of the polarization hologram master 255. Through configuring the phase profile of the polarization hologram master 255 (e.g., via configuring the local orientations of the optic axis of the birefringent medium), various HOEs may be fabricated. The recorded HOE 259 may provide a predetermined optical function, e.g., functioning as a lens or a lens array (e.g., a spherical lens or lens array, a cylindrical lens or lens array, etc.), a prism or a prism array, or a freeform HOE, etc.

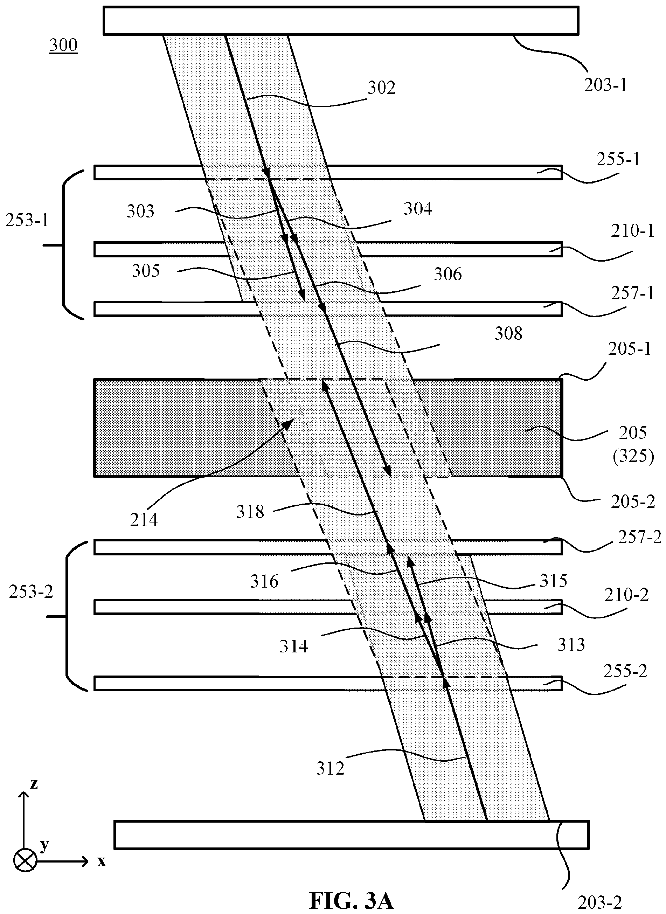

FIG. 3A schematically illustrates a system (e.g., an interference system) 300 configured to generate an intensity interference pattern that may be recorded in the recording medium layer 205, according to an embodiment of the present disclosure. The system 300 may include elements, structures, and/or functions that are the same as or similar to those included in the system 200 shown in FIG. 2A, or the system 250 shown in FIG. 2B. Descriptions of the same or similar elements, structures, and/or functions can refer to the above descriptions rendered in connection with FIG. 2A, or FIG. 2B. As shown in FIG. 3A, the system 300 may include two polarization holograms 255-1 and 255-2 that are used as the masters for recording HOEs. The polarization holograms 255-1 and 255-2 may also be referred to as polarization hologram masters 255-1 and 255-2, respectively. The system 300 may be referred to as a two-arm recording system. The system 300 may be configured to generate an intensity interference pattern defining a suitable refractive index modulation pattern in the recording medium layer 205.

As shown in FIG. 3A, the system 300 may include the first beam outputting device 203-1, a first wavefront shaping assembly 253-1, a second wavefront shaping assembly 253-2, and the second beam outputting device 203-2 arranged in an optical series. The first beam outputting device 203-1 and the second beam outputting device 203-2 have been described above in connection with FIGs. 2A and 2B. Each of the first beam outputting device 203-1 and the second beam outputting device 203-2 may be configured to output a beam with a predetermined polarization, a predetermined wavefront, a predetermined propagation direction, a predetermined beam size, a predetermined intensity, etc.

The first beam outputting device 203-1 and the first wavefront shaping assembly 253-1 may be disposed at a first side of the recording medium layer 205 (or a first side of the beam interference zone 214). The second beam outputting device 203-2 and the second wavefront shaping assembly 253-2 may be disposed at a second side of the recording medium layer 205 (or a second side of the beam interference zone 214). The first wavefront shaping assembly 253-1 may be disposed between the first beam outputting device 203-1 and the recording medium layer 205 (or between the first beam outputting device 203-1 and the beam interference zone 214). The second wavefront shaping assembly 253-2 may be disposed between the second beam outputting device 203-2 and the recording medium layer 205 (or between the second beam outputting device 203-2 and the beam interference zone 214).

Each of the first wavefront shaping assembly 253-1 and the second wavefront shaping assembly 253-2 may be similar to the wavefront shaping assembly 253 shown in FIG. 2B. For example, the first wavefront shaping assembly 253-1 may include a first polarization hologram 255-1 configured with a first predetermined phase profile, a first polarizer (e.g., an absorptive linear polarizer) 257-1, and a first waveplate (e.g., QWP) 210-1 disposed between the first polarization hologram 255-1 and the first polarizer 257-1. The first polarizer 257-1 may be disposed between the first waveplate (e.g., QWP) 210-1 and the recording medium layer 205. The second wavefront shaping assembly 253-2 may include a second polarization hologram 255-2 configured with a second predetermined phase profile, a second polarizer (e.g., an absorptive linear polarizer) 257-2, and a second waveplate (e.g., QWP) 210-2 disposed between the second polarization hologram 255-2 and the second polarizer 257-2. The second polarizer 257-2 may be disposed between the second waveplate (e.g., QWP) 210-2 and the recording medium layer 205. In some embodiments, the first predetermined phase profile may be substantially the same as the second predetermined phase profile, or may be different from the second predetermined phase profile.

Each of the polarization holograms 255-1 and 255-2 may be similar to the polarization hologram 255 shown in FIG. 2B. In some embodiments, each of the polarization holograms 255-1 and 255-2 may be a transmissive element, e.g., a PBP element, or a transmissive PVH element. The polarization holograms 255-1 and 255-2 may be configured with respective predetermined phase profiles, and may forwardly deflect (e.g., via diffraction) respective input beams as respective output beams having respective predetermined wavefronts associated with the respective predetermined phase profiles. Through configuring the respective predetermined phase profiles of the respective polarization holograms 255-1 and 255-2, the system 300 may be used to fabricate HOEs that may reconstruct various desirable wavefronts.

In some embodiments, the polarization holograms 255-1 and 255-2 may be configured with the same polarization selectivity. For example, for a same circularly polarized input beam, the polarization holograms 255-1 and 255-2 may forwardly deflect (e.g., diffract) the circularly polarized input beam in a same direction away from the surface normal of the respective polarization hologram, e.g., in a clockwise or counter-clockwise direction. For example, in some embodiments, both of the polarization holograms 255-1 and 255-2 may forwardly deflect (e.g., diffract) an RHCP beam in the counter-clockwise direction, and forwardly deflect (e.g., diffract) an LHCP beam in the clockwise direction. In some embodiments, both of the polarization holograms 255-1 and 255-2 may forwardly deflect (e.g., diffract) an LHCP beam in the counter-clockwise direction, and forwardly deflect (e.g., diffract) an RHCP beam in the clockwise direction.

In some embodiments, the polarization holograms 255-1 and 255-2 may be configured with different polarization selectivities. For example, for a same circularly polarized input beam, the polarization holograms 255-1 and 255-2 may deflect (e.g., diffract) the input circularly polarized beam in different directions away from the surface normals of the respective polarization holograms, e.g., in the clockwise direction and the counter-clockwise direction. For example, in some embodiments, the polarization hologram 255-1 and the polarization hologram 255-2 may be configured to forwardly deflect (e.g., diffract) the RHCP beam in the clockwise direction and the counter-clockwise direction, respectively. In some embodiments, the polarization hologram 255-1 and the polarization hologram 255-2 may be configured to forwardly deflect (e.g., diffract) the LHCP beam in the counter-clockwise and the clockwise direction, respectively. The polarization holograms 255-1 and 255-2 may transmit a portion of the circularly polarized input beam as a transmitted beam with negligible deflection. For discussion purposes, in the embodiment shown in FIG. 3A, the first polarization hologram 255-1 and the second polarization hologram 255-2 are configured with the same polarization selectivity. For example, the first polarization hologram 255-1 and the second polarization hologram 255-2 may forwardly deflect (e.g., diffract) an RHCP beam in the counter-clockwise direction.

As shown in FIG. 3A, the first light outputting device 203-1 may output a beam 302 having the recording wavelength λ₀ toward the first wavefront shaping assembly 253-1. The recording wavelength λ₀ may be within an absorption band of the recording medium layer 205. For discussion purposes, the beams propagating inside the system 300 are presumed to have the predetermined wavelength λ₀ (or the predetermined wavelength range including the predetermined wavelength λ₀). In some embodiments, the beam 302 may be a first circularly polarized beam (e.g., RHCP beam) 302 having a first wavefront. In some embodiments, the first circularly polarized beam 302 may be a plane wave, and the first wavefront may be a planar wavefront. In some embodiments, the first circularly polarized beam 302 may be a collimated beam incident onto the first polarization hologram 255-1 at a first predetermined incidence angle.

The first polarization hologram 255-1 may be configured with the first predetermined phase profile, and may forwardly diffract the first circularly polarized beam (e.g., RHCP beam) 302 as a second circularly polarized beam (e.g., RHCP beam) 303 and a third circularly polarized beam (e.g., LHCP beam) 304 propagating toward the first waveplate 210-1. The second circularly polarized beam (e.g., RHCP beam) 303 and the third circularly polarized beam (e.g., LHCP beam) 304 may be a 0^{th} order diffracted beam and a 1^{st} order diffracted beam, respectively. The second circularly polarized beam 303 (0^{th} order diffracted RHCP beam) may be a transmitted beam with negligible diffraction. The second circularly polarized beam 303 (0^{th} order diffracted RHCP beam) may have the first wavefront.

The third circularly polarized beam 304 (1^{st} order diffracted LHCP beam) may have a second wavefront that is different from the first wavefront. The second wavefront may be associated with the predetermined phase profile of the first polarization hologram 255-1 and the first wavefront of the first circularly polarized beam (e.g., RHCP beam) 302. Thus, the third circularly polarized beam 304 (1^{st} order diffracted LHCP beam) may carry, or may be encoded with, the phase information (e.g., the predetermined phase profile) of the first polarization hologram 255-1. For example, when the first polarization hologram 255-1 is configured with a spherical phase profile, a cylindrical phase profile, a linear phase profile, or a freeform phase profile, etc., the third circularly polarized beam 304 (1^{st} order diffracted LHCP beam) output from the first polarization hologram 255-1 may have a spherical wavefront, a cylindrical wavefront, a planar wavefront (which may be tilted with respective to the plane wavefront of the beam 302), or a freeform wavefront, etc.

The first waveplate 210-1 may be configured to convert the second circularly polarized beam 303 (0^{th} order diffracted RHCP beam) and the third circularly polarized beam 304 (1^{st} order diffracted LHCP beam) into two linearly polarized beams with orthogonal linear polarization directions. For discussion purposes, in the embodiment shown in FIG. 3A, the first waveplate 210-1 may be configured to convert the second circularly polarized beam 303 (0^{th} order diffracted RHCP beam) and the third circularly polarized beam 304 (1^{st} order diffracted LHCP beam) into a first linearly polarized (e.g., a p-polarized) beam 305 and a second linearly polarized (e.g., an s-polarized) beam 306, respectively. The first linearly polarized beam 305 may have the first wavefront, and the second linearly polarized beam 306 may have the second wavefront.

The first linearly polarized beam 305 and the second linearly polarized beam 306 may propagate toward the first polarizer 257-1. The first polarizer 257-1 may function as a clean-up polarizer configured to remove beam of an undesirable diffraction order output from the first polarization hologram 255-1, e.g., the 0^{th} order diffracted beam (e.g., RHCP beam) 303. For example, the first polarizer 257-1 may be an absorptive linear polarizer configured with a polarization axis (or a transmission axis) that is parallel with the polarization direction of the second linearly polarized beam 306, and perpendicular to the polarization direction of the first linearly polarized beam 305. Thus, the first polarizer 257-1 may be configured to block the first linearly polarized (e.g., the p-polarized) beam 305 via absorption, and transmit the second linearly polarized (e.g., the s-polarized) beam 306 as a third linearly polarized (e.g., an s-polarized) beam 308. The third linearly polarized (e.g., s-polarized) beam 308 may have the second wavefront. The third linearly polarized (e.g., s-polarized) beam 308 may propagate toward the recording medium layer 205 from a first side of the recording medium layer 205.

The second beam outputting device 203-2 may be configured to output a beam 312 having the recording wavelength λ₀ toward the second wavefront shaping assembly 253-2. In some embodiments, the beam 312 may be a fourth circularly polarized beam (e.g., RHCP beam) 312 having a third wavefront. In some embodiments, the fourth circularly polarized beam (e.g., RHCP beam) 312 may be a plane wave, and the third wavefront may be a planar wavefront. In some embodiments, the fourth circularly polarized beam (e.g., RHCP beam) 312 may be a collimated beam incident onto the second polarization hologram 255-2 at a second predetermined incidence angle.

The second polarization hologram 255-2 may be configured with the second predetermined phase profile, and may forwardly diffract the fourth circularly polarized beam (e.g., RHCP beam) 312 as a fifth circularly polarized beam (e.g., RHCP beam) 313 and a sixth circularly polarized beam (e.g., LHCP beam) 314 propagating toward the second waveplate 210-2. The fifth circularly polarized beam (e.g., RHCP beam) 313 and the sixth circularly polarized beam (e.g., LHCP beam) 314 may be a 0^{th} order diffracted beam (e.g., RHCP beam) and a 1^{st} order diffracted beam (e.g., LHCP beam), respectively. The fifth circularly polarized beam 313 (0^{th} order diffracted RHCP beam) may be a transmitted beam with negligible diffraction. The fifth circularly polarized beam 313 (0^{th} order diffracted RHCP beam) may have the third wavefront.

The sixth circularly polarized beam 314 (1^{st} order diffracted LHCP beam) may have a fourth wavefront that is different from the third wavefront. The fourth wavefront may be associated with the predetermined phase profile of the second polarization hologram 255-2 and the third wavefront of the fourth circularly polarized beam (e.g., RHCP beam) 312. Thus, the sixth circularly polarized beam 314 (1^{st} order diffracted LHCP beam) may carry, or may be encoded with, the phase information (e.g., the predetermined phase profile) of the second polarization hologram 255-2. For example, when the second polarization hologram 255-2 is configured with a spherical phase profile, a cylindrical phase profile, a linear phase profile, or a freeform phase profile, etc., the sixth circularly polarized beam 314 (1^{st} order diffracted LHCP beam) output from the second polarization hologram 255-2 may have a spherical wavefront, a cylindrical wavefront, a planar wavefront (which may be tilted with respective to the plane wavefront of the beam 312), or a freeform wavefront, etc.

The second waveplate 210-2 may be configured to convert the fifth circularly polarized beam 313 (0^{th} order diffracted RHCP beam) and the sixth circularly polarized beam 314 (1^{st} order diffracted LHCP beam) into two linearly polarized beams with orthogonal linear polarization directions. For discussion purposes, in the embodiment shown in FIG. 3A, the second waveplate 210-2 is configured to convert the fifth circularly polarized beam 313 (0^{th} order diffracted RHCP beam) and the sixth circularly polarized beam 314 (1^{st} order diffracted LHCP beam) into a fourth linearly polarized (e.g., a p-polarized) beam 315 and a fifth linearly polarized (e.g., an s-polarized) beam 316, respectively. The fourth linearly polarized beam 315 may have the third wavefront, and the fifth linearly polarized beam 316 may have the fourth wavefront.

The fourth linearly polarized beam 315 and the fifth linearly polarized beam 316 may propagate toward the second polarizer 257-2. The second polarizer 257-2 may function as a clean-up polarizer configured remove a beam of an undesirable diffraction order output from the second polarization hologram 255-2, e.g., the 0^{th} order diffracted beam (e.g., RHCP beam) 313. For example, the second polarizer 257-2 may be an absorptive linear polarizer configured with a polarization axis (or a transmission axis) that is parallel with the polarization direction of the fifth linearly polarized beam 316, and perpendicular to the polarization direction of the fourth linearly polarized beam 315. Thus, the second polarizer 257-2 may be configured to block the fourth linearly polarized (e.g., p-polarized) beam 315 via absorption, and transmit the fifth linearly polarized (e.g., s-polarized) beam 316 as a sixth linearly polarized (e.g., an s-polarized) beam 318. The sixth linearly polarized (e.g., s-polarized) beam 318 may have the fourth wavefront. The sixth linearly polarized (e.g., s-polarized) beam 318 may propagate toward the recording medium layer 205 from a second side of the recording medium layer 205.

For discussion purposes, in the embodiment shown in FIG. 3A, the third circularly polarized beam 304 (1^{st} order diffracted LHCP beam) output from the first polarization hologram 255-1 and the sixth circularly polarized beam 314 (1^{st} order diffracted LHCP beam) output from the second polarization hologram 255-2 may be circularly polarized beams having the same handedness. The first waveplate 210-1 and the second waveplate 210-2 may be configured to convert the third circularly polarized beam 304 (1^{st} order diffracted LHCP beam) and the sixth circularly polarized beam 314 (1^{st} order diffracted LHCP beam) into linearly polarized beams 306 and 316 having the same polarization directions. In some embodiments, although not shown, the third circularly polarized beam 304 (1^{st} order diffracted LHCP beam) output from the first polarization hologram 255-1 and the sixth circularly polarized beam 314 (1^{st} order diffracted LHCP beam)output from the second polarization hologram 255-2 may be circularly polarized beams having opposite handednesses. The first waveplate 210-1 and the second waveplate 210-2 may be configured to convert the third circularly polarized beam 304 (1^{st} order diffracted LHCP beam) and the sixth circularly polarized beam 314 (1^{st} order diffracted LHCP beam) into linearly polarized beams 306 and 316 having the same polarization directions. Thus, the first wavefront shaping assembly 253-1 and the second wavefront shaping assembly 253-2 may be configured to convert the circularly polarized beams 302 and 312 into the linearly polarized beams 308 and 318 that have the same polarization direction and propagate toward the recording medium layer 205 from opposite sides of the recording medium layer 205. The linearly polarized beams 308 and 318 may be configured with respective predetermined wavefronts associated with the respective predetermined phase profiles of the respective polarization holograms 255-1 and 255-2.

The linearly polarized beams 308 and 318 may be coherent beams having the same polarization direction, e.g., s-polarized beams. The linearly polarized beams 308 and 318 may propagate toward the beam interference zone 214 from opposite sides of the beam interference zone 214. One of the linearly polarized beams 308 and 318 may be referred to as a reference beam, and the other may be referred to as a signal beam. The reference beam and the signal beam may be exchangeable. For example, in some embodiments, the linearly polarized beam 308 may be the reference beam, and the linearly polarized beam 318 may be the signal beam. In some embodiments, the linearly polarized beam 308 may be the signal beam, and the linearly polarized beam 318 may be the reference beam. Both of the linearly polarized beams 308 and 318 may be referred to as recording beams.

The recording beams 308 and 318 may interface with one another to generate an interference pattern in the beam interference zone 214 in which the recording medium layer 205 is located. The superposition of the recording beams 308 and 318 may convert the wavefront information of the recording beams 308 and 318 into an intensity variation of the interference pattern. In some embodiments, the superposition of the recording beams 308 and 318 may result in a superimposed wave that has a substantially uniform polarization and a varying amplitude within the beam interference zone 214, in which the recording beams 308 and 318 interfere with one another. In other words, the superposition of the recording beams 308 and 318 may result in an intensity interference pattern. The intensity interference pattern may have a ID intensity variation or 2D intensity variations within a plane (e.g., an x-y plane in FIG. 3A). The plane may correspond to a film plane of the recording medium layer 205. The film plane may be perpendicular to a thickness direction (e.g., a z-axis direction in FIG. 3A) of the recording medium layer 205. The intensity interference pattern to which the recording medium layer 205 is exposed may result in a refractive index modulation pattern in the recording medium layer 205. The refractive index modulation pattern may correspond to the intensity variation of the interference pattern. Thus, the wavefronts of the recording beams 308 and 318 may be recorded into the recording medium layer 205 as the refractive index modulation pattern. Accordingly, the phase information (e.g., the first and second predetermined phase profiles) of the polarization holograms 255-1 and 255-2 may be recorded into the recording medium layer 205.

After being exposed sufficiently to the intensity interference pattern generated by the recording beams 308 and 318, the recording medium layer 205 may become a recorded HOE 325. When the recorded HOE 325 is illuminated by the beam 318 having the second predetermined wavefront associated with the second predetermined phase of the second polarization hologram 255-2, the recorded HOE 325 may diffract the beam 318 as the beam 308 having the first predetermined wavefront associated with the first predetermined phase of the first polarization hologram 255-1. In other words, the recorded HOE 325 may reconstruct the first predetermined wavefront associated with the first predetermined phase of the first polarization hologram 255-1. When the recorded HOE 325 is illuminated by the beam 308 having the first predetermined wavefront associated with the first predetermined phase of the first polarization hologram 255-1, the recorded HOE 325 may diffract the beam 308 as the beam 318 having the second predetermined wavefront associated with the second predetermined phase of the second polarization hologram 255-2. In other words, the recorded HOE 325 may reconstruct the second predetermined wavefront associated with the second predetermined phase of the second polarization hologram 255-2. The recorded HOE 325 may also reconstruct wavefronts other than the first predetermined wavefront and the second predetermined wavefront. For example, when the recorded HOE 325 is illuminated by a beam having a wavefront (e.g., a planar wavefront) other than the first predetermined wavefront and the second predetermined wavefront, the recorded HOE 325 may diffract the beam as a diffracted beam having a wavefront that is a superposition of the first predetermined wavefront and the second predetermined wavefront. Through configuring the respective phase profiles provided by the polarization hologram masters 255-1 and 255-2 (e.g., via configuring the local orientations of the optic axis of the birefringent medium in the polarization hologram masters 255-1 and 255-2), various HOEs may be fabricated. The recorded HOE 325 may provide a desirable optical function, e.g., functioning as a lens or a lens array (e.g., a spherical lens or lens array, a cylindrical lens or lens array, etc.), a prism or a prism array, or a freeform HOE, etc.

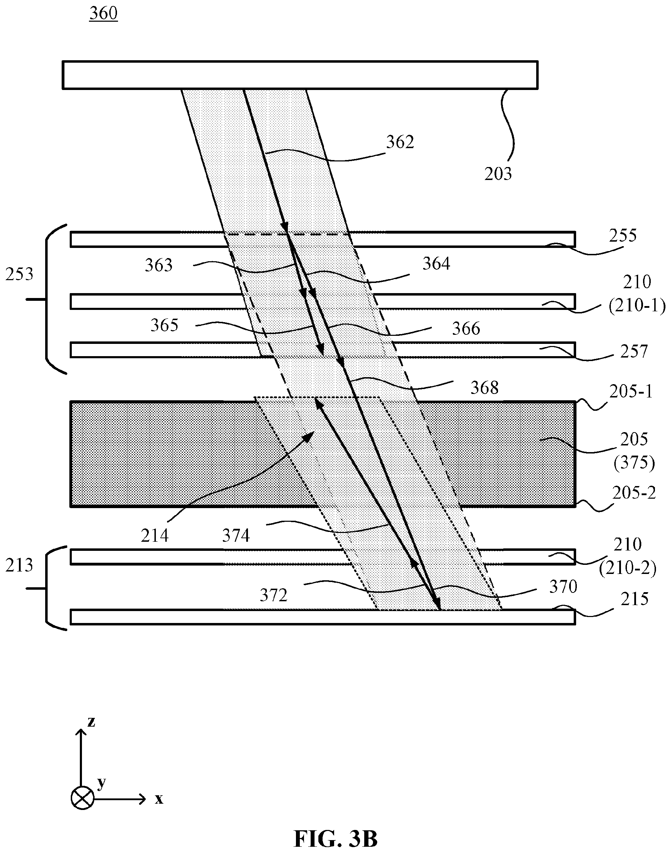

FIG. 3B schematically illustrates a system (e.g., an interference system) 360 configured to generate an intensity interference pattern that may be recorded in the recording medium layer 205, according to an embodiment of the present disclosure. The system 360 may include elements, structures, and/or functions that are the same as or similar to those included in the system 200 shown in FIG. 2A, the system 250 shown in FIG. 2B, or the system 300 shown in FIG. 3A. Descriptions of the same or similar elements, structures, and/or functions can refer to the above descriptions rendered in connection with FIG. 2A, FIG. 2B, or FIG. 3A. As shown in FIG. 3B, the system 360 may include two polarization holograms 255 and 215 that are used as the masters for recording HOEs. The polarization holograms 255 and 215 may also be referred to as polarization hologram masters 255 and 215, respectively. The system 360 may be referred to as a two-arm recording system. The system 360 may be configured to generate an intensity interference pattern defining a suitable refractive index modulation pattern in the recording medium layer 205.

As shown in FIG. 3B, the system 360 may include the beam outputting device 203, the wavefront shaping assembly 253 (referred to as a first wavefront shaping assembly 253 in this embodiment), and the wavefront shaping assembly 213 (referred to as a second wavefront shaping assembly 213 in this embodiment) arranged in an optical series. The beam outputting device 203 may be configured to output a beam with a predetermined polarization, a predetermined wavefront, a predetermined propagation direction, a predetermined beam size, a predetermined intensity, etc. The beam outputting device 203 and the first wavefront shaping assembly 253 may be disposed at a first side of the recording medium layer 205 (or at a first side of the beam interference zone 214). The first wavefront shaping assembly 253 may be disposed between the beam outputting device 203 and the recording medium layer 205 (or between the beam outputting device 203 and the beam interference zone 214). The second wavefront shaping assembly 213 may be disposed at a second side of the recording medium layer 205 (or at a second side of the beam interference zone 214).

As shown in FIG. 3B, the first wavefront shaping assembly 253 may include the polarization hologram 255 configured with a first predetermined phase profile (referred to as a first polarization hologram 255 in this embodiment). The first wavefront shaping assembly 253 may also include the polarizer 257, and the first waveplate 210-1. The first waveplate 210-1 may be disposed between the first polarization hologram 255 and the polarizer 257. The polarizer 257 may be disposed between the first waveplate 210-1 and the recording medium layer 205. The first polarization hologram 255 may be a transmissive element, e.g., a PBP element, and may be configured to have a first predetermined phase profile. Itie second wavefront shaping assembly 213 may include the polarization hologram 215 configured with a second predetermined phase profile (referred to as a second polarization hologram 215 in this embodiment). The second wavefront shaping assembly 213 may also include the second waveplate 210-2. The second waveplate 210-2 may be disposed between the second polarization hologram 215 and the recording medium layer 205. The second polarization hologram 215 may be a reflective element, e.g., a reflective PVH element. In some embodiments, the first predetermined phase profile may be substantially the same as, or may be different from, the second predetermined phase profile.

In some embodiments, the polarization holograms 215 and 255 may be configured with the same polarization selectivity. For example, the polarization holograms 215 and 255 may be configured to deflect circularly polarized input beams having the same predetermined handedness as respective circularly polarized output beams having respective predetermined wavefronts associated with the respective predetermined phase profiles. For example, in some embodiments, the polarization hologram 215 may reflect (e.g., backwardly diffract) an RHCP input beam as an RHCP output beam having a predetermined wavefront associated with the second predetermined phase profile of the polarization hologram 215, and the polarization hologram 255 may forwardly deflect (e.g., forwardly diffract) an RHCP input beam as an LHCP output beam having a predetermined wavefront associated with the first predetermined phase profile of the polarization hologram 255. In some embodiments, the polarization hologram 215 may reflect (e.g., backwardly diffract) an LHCP input beam as an LHCP output beam having a predetermined wavefront associated with the second predetermined phase profile of the polarization hologram 215, and the polarization hologram 255 may forwardly deflect (e.g., forwardly diffract) an LHCP input beam as an RHCP output beam having a predetermined wavefront associated with the first predetermined phase profile of the polarization hologram 255.

In some embodiments, the polarization holograms 215 and 255 may be configured with different polarization selectivities. For example, the polarization holograms 215 and 255 may be configured to deflect circularly polarized input beams having opposite handednesses as respective circularly polarized output beams having respective predetermined wavefronts associated with the respective predetermined phase profiles. For example, in some embodiments, the second polarization hologram 215 may reflect (e.g., backwardly diffract) an RHCP input beam as an RHCP output beam having a predetermined wavefront associated with the second predetermined phase profile of the polarization hologram 215, and the first polarization hologram 255 may forwardly deflect (e.g., forwardly diffract) an LHCP input beam as an RHCP output beam having a predetermined wavefront associated with the first predetermined phase profile of the polarization hologram 255. In some embodiments, the second polarization hologram 215 may reflect (e.g., backwardly diffract) an LHCP input beam as an LHCP output beam having a predetermined wavefront associated with the second predetermined phase profile of the polarization hologram 215, and the first polarization hologram 255 may forwardly deflect (e.g., forwardly diffract) an RHCP input beam as an LHCP output beam having a predetermined wavefront associated with the first predetermined phase profile of the polarization hologram 255.

For discussion purposes, in the embodiment shown in FIG. 3B, the first polarization hologram 255 and the second polarization hologram 215 are configured with the same polarization selectivity. For example, the second polarization hologram 215 may reflect (e.g., backwardly diffract) an RHCP input beam as an RHCP output beam having a predetermined wavefront associated with the second predetermined phase profile of the second polarization hologram 215, and the first polarization hologram 255 may forwardly deflect (e.g., forwardly diffract) an RHCP input beam as an LHCP output beam having a predetermined wavefront associated with the first predetermined phase profile of the first polarization hologram 255.

As shown in FIG. 3B, the light outputting device 203 may output a beam 362 having the recording wavelength λ₀ toward the first wavefront shaping assembly 253. The recording wavelength λ₀ may be within an absorption band of the recording medium layer 205. For discussion purposes, the beams propagating within the system 360 are presumed to have the predetermined wavelength λ₀ (or the predetermined wavelength range including the predetermined wavelength λ₀). In some embodiments, the beam 362 may be a first circularly polarized beam (e.g., RHCP beam) 362 having a first wavefront. In some embodiments, the first circularly polarized beam 362 may be a plane wave, and the first wavefront may be a planar wavefront. In some embodiments, the first circularly polarized beam 362 may be a collimated beam incident onto the first polarization hologram 255 at a predetermined incidence angle.

The first polarization hologram 255 may be configured with the first predetermined phase profile, and may forwardly diffract the first circularly polarized beam (e.g., RHCP beam) 362 as a second circularly polarized beam (e.g., RHCP beam) 363 and a third circularly polarized beam (e.g., LHCP beam) 364 propagating toward the first waveplate 210-1. The second circularly polarized beam (e.g., RHCP beam) 363 and the third circularly polarized beam (e.g., LHCP beam) 364 may be a 0^{th} order diffracted beam and a 1^{st} order diffracted beam, respectively. The second circularly polarized beam 363 (0^{th} order diffracted RHCP beam) may be a transmitted beam with negligible diffraction. The second circularly polarized beam 363 (0^{th} order diffracted RHCP beam) may have the first wavefront.

The third circularly polarized beam 364 (1^{st} order diffracted LHCP beam) may have a second wavefront that is different from the first wavefront. The second wavefront may be associated with the first predetermined phase profile of the first polarization hologram 255 and the first wavefront of the first circularly polarized beam 362 (e.g., RHCP beam). Thus, the third circularly polarized beam 364 (1^{st} order diffracted LHCP beam) may carry, or may be encoded with, the phase information (e.g., the predetermined phase profile) of the first polarization hologram 255. For example, when the first polarization hologram 255 is configured with a spherical phase profile, a cylindrical phase profile, a linear phase profile, or a freeform phase profile, etc., the third circularly polarized beam 364 (1^{st} order diffracted LHCP beam) output from the first polarization hologram 255 may have a spherical wavefront, a cylindrical wavefront, a planar wavefront (which may be tilted with respective to the plane wavefront of the beam 362), or a freeform wavefront, etc.

The first waveplate 210-1 may be configured to convert the second circularly polarized beam 363 (0^{th} order diffracted RHCP beam) and the third circularly polarized beam 364 (1^{st} order diffracted LHCP beam)into two linearly polarized beams with orthogonal linear polarization directions. For discussion purposes, in the embodiment shown in FIG. 3B, the first waveplate 210-1 is configured to convert the second circularly polarized beam 363 (0^{th} order diffracted RHCP beam) and the third circularly polarized beam 364 (1^{st} order diffracted LHCP beam) into a first linearly polarized (e.g., p-polarized) beam 365 and a second linearly polarized (e.g., s-polarized) beam 366, respectively. The first linearly polarized beam 365 may have the first wavefront, and the second linearly polarized beam 366 may have the second wavefront.

The first linearly polarized beam 365 and the second linearly polarized beam 366 may propagate toward the polarizer 257. The polarizer 257 may function as a clean-up polarizer configured to remove a beam of an undesirable diffraction order output from the first polarization hologram 255, e.g., the 0^{th} order diffracted beam (e.g., RHCP beam) 363. For example, the polarizer 257 may be an absorptive linear polarizer configured with a polarization axis (or a transmission axis) that is parallel with the polarization direction of the second linearly polarized beam 366, and perpendicular to the polarization direction of the first linearly polarized beam 365. Thus, the polarizer 257 may block the first linearly polarized (e.g., p-polarized) beam 365 via absorption, and transmit the second linearly polarized (e.g., s-polarized) beam 366 as a third linearly polarized (e.g., s-polarized) beam 368. The third linearly polarized (e.g., s-polarized) beam 368 may have the second wavefront. The third linearly polarized (e.g., s-polarized) beam 368 may propagate toward the recording medium layer 205 from a first side of the recording medium layer 205.

The third linearly polarized (e.g., s-polarized) beam 368 may propagate through the recording medium layer 205 toward the second wavefront shaping assembly 213. The third linearly polarized (e.g., s-polarized) beam 368 may be incident onto the second waveplate 210-2 from a first side of the second waveplate 210-2. The second waveplate 210-2 may be configured to convert the third linearly polarized (e.g., s-polarized) beam 368 into a fourth circularly polarized beam (e.g., an RHCP beam) 370 propagating toward the second polarization hologram 215. The fourth circularly polarized beam (e.g., RHCP beam) 370 may have the second wavefront. The second polarization hologram 215 may be configured to reflect (e.g., via backward diffraction) the fourth circularly polarized beam (e.g., RHCP beam) 370 as a fifth circularly polarized beam (e.g., an RHCP beam) 372 back toward the second waveplate 210-2. The fifth circularly polarized beam (e.g., RHCP beam) 372 may be configured with a third wavefront different from the second wavefront of the fourth circularly polarized beam (e.g., RHCP beam) 370. The third wavefront may be associated with the second predetermined phase profile of the second polarization hologram 215, and the second wavefront of the fourth circularly polarized beam (e.g., RHCP beam) 370. As the second wavefront of the fourth circularly polarized beam (e.g., RHCP beam) 370 is associated with the first predetermined phase profile of the first polarization hologram 255, the third wavefront of the fifth circularly polarized beam (e.g., RHCP beam) 372 output from the second polarization hologram 215 may be associated with both of the first predetermined phase profile of the first polarization hologram 255 and the second predetermined phase profile of the second polarization hologram 215. In some embodiments, the third wavefront of the fifth circularly polarized beam (e.g., RHCP beam) 372 output from the second polarization hologram 215 may be associated with a superposition of the first predetermined phase profile of the first polarization hologram 255 and the second predetermined phase profile of the second polarization hologram 215. Thus, the fifth circularly polarized beam (e.g., RHCP beam) 372 may carry, or may be encoded with, the phase information (e.g., the first predetermined phase profile) of the first polarization hologram 255 and the phase information (e.g., the second predetermined phase profile) of the second polarization hologram 215.

The fifth circularly polarized beam (e.g., RHCP beam) 372 may be incident onto the second waveplate 210-2 from a second side of the waveplate 210. The second waveplate 210-2 may be configured to convert the fifth circularly polarized beam (e.g., RHCP beam) 372 into a fourth linearly polarized (e.g., s-polarized) beam 374 having the third wavefront. The fourth linearly polarized (e.g., s-polarized) beam 374 may propagate toward the recording medium layer 205 from a second side of the recording medium layer 205,

For discussion purposes, in the embodiment shown in FIG. 3B, the first polarization hologram 255 and the second polarization hologram 215 are configured with the same polarization selectivity. For example, the first polarization hologram 255 and the second polarization hologram 215 may deflect RHCP beams as respective deflected beams having respective predetermined wavefronts associated with the respective predetermined phase profiles. The deflected beams, e.g., the third circularly polarized beam 364 (1^{st} order diffracted LHCP beam) and the fifth circularly polarized beam (e.g., RHCP beam) 372, may be circularly polarized beams having opposite handednesses. The first waveplate 210-1 and the second waveplate 210-2 may be configured to convert the third circularly polarized beam 364 (1^{st} order diffracted LHCP beam) and the fifth circularly polarized beam (e.g., RHCP beam) 372 into linearly polarized beams 366 and 374 having the same polarization directions. For example, the linearly polarized beams 366 and 374 may be s-polarized beams.

In some embodiments, although not shown, the first polarization hologram 255 and the second polarization hologram 215 may be configured with different polarization selectivities. The deflected beams, e.g., the third circularly polarized beam 364 (1^{st} order diffracted LHCP beam) and the fifth circularly polarized beam (e.g., RHCP beam) 372, may be circularly polarized beams having the same handedness. The first waveplate 210-1 and the second waveplate 210-2 may be configured to convert the third circularly polarized beam 364 (1^{st} order diffracted LHCP beam) and the fifth circularly polarized beam (e.g., RHCP beam) 372 into linearly polarized beams 366 and 374 having the same polarization direction. Thus, the first wavefront shaping assembly 253 and the second wavefront shaping assembly 213 may be configured to output the linearly polarized beams 368 and 374 that have the same polarization direction and that propagate toward the recording medium layer 205 from opposite sides of the recording medium layer 205.

The linearly polarized beams 368 and 374 may be coherent beams having the same polarization direction, e.g., s-polarization. The linearly polarized beams 368 and 374 may propagate toward the beam interference zone 214 from opposite sides of the beam interference zone 214. One of the linearly polarized beams 368 and 374 may be referred to as a reference beam, and the other may be referred to as a signal beam. The reference beam and the signal beam may be exchangeable. For example, in some embodiments, the linearly polarized beam 368 may be the reference beam, and the linearly polarized beam 374 may be the signal beam. In some embodiments, the linearly polarized beam 368 may be the signal beam, and the linearly polarized beam 374 may be the reference beam. Both of the linearly polarized beam 368 and 374 may be referred to as recording beams.

The recording beams 368 and 374 may interface with one another to generate an interference pattern in the recording medium layer 205. The superposition of the recording beams 368 and 374 may convert the wavefront information of the recording beams 368 and 374 into an intensity variation of the interference pattern. In some embodiments, the superposition of the recording beams 368 and 374 may result in a superimposed wave that has a substantially uniform polarization and a varying amplitude within a spatial region in which the recording beams 368 and 374 interfere with one another. In other words, the superposition of the recording beams 368 and 374 may result in an intensity interference pattern. The intensity variation of the interference pattern may have a 1D intensity variation or 2D intensity variations within a plane (e.g., an x-y plane in FIG. 3B). The plane may correspond to a film plane of the recording medium layer 205. The film plane may be perpendicular to a thickness direction (e.g., a z-axis direction in FIG. 3B) of the recording medium layer 205. The intensity interference pattern to which the recording medium layer 205 is exposed may result in a refractive index modulation pattern in the recording medium layer 205. The refractive index modulation pattern may correspond to the intensity variation of the interference pattern. Thus, the wavefronts of the recording beams 368 and 374 may be recorded into the recording medium layer 205 as the refractive index modulation pattern. Accordingly, the phase information (e.g., the respective phase profiles) of the polarization holograms 255 and 215 may be recorded into the recording medium layer 205.

After being sufficiently exposed to the intensity interference pattern generated by the recording beams 368 and 374, the recording medium layer 205 may become a recorded HOE 375. When the recorded HOE 375 is illuminated by the beam 374 having the second predetermined wavefront that is associated with a superposition of the first predetermined phase profile of the first polarization hologram 255 and the second predetermined phase profile of the second polarization hologram 215, the recorded HOE 375 may diffract the beam 374 as the beam 368 having the first predetermined wavefront associated with the first predetermined phase of the first polarization hologram 255 In other words, the recorded HOE 375 may reconstruct the first predetermined wavefront associated with the first predetermined phase of the first polarization hologram 255. When the recorded HOE 375 is illuminated by the beam 368 having the first predetermined wavefront associated with the first predetermined phase of the first polarization hologram 255, the recorded HOE 375 may diffract the beam 368 as the beam 374 having the second predetermined wavefront that is associated with a superposition of the first predetermined phase profile of the first polarization hologram 255 and the second predetermined phase profile of the second polarization hologram 215. In other words, the recorded HOE 375 may reconstruct the second predetermined wavefront that is associated with a superposition of the first predetermined phase profile of the first polarization hologram 255 and the second predetermined phase profile of the second polarization hologram 215. The recorded HOE 375 may also reconstruct wavefronts other than the first predetermined wavefront and the second predetermined wavefront. Through configuring the respective phase profiles provided by the polarization hologram masters 255 and 215 (e.g., via configuring the local orientations of the optic axis of the birefringent medium in the polarization hologram masters 255 and 215), various HOEs may be fabricated. The recorded HOE 375 may provide a predetermined optical function, e.g., functioning as a lens or a lens array (e.g., a spherical lens or lens array, a cylindrical lens or lens array, etc.), a prism or a prism array, a freeform HOE, etc.

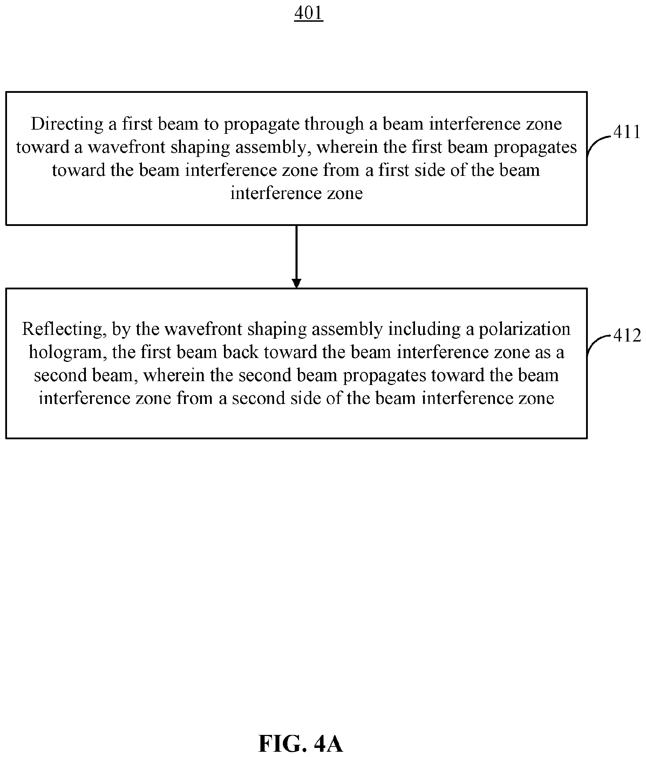

FIG. 4A is a flowchart illustrating a method 401 for generating an interference pattern in a recording medium layer, according to an embodiment of the present disclosure. The method 401 may include directing a first beam to propagate through a beam interference zone toward a wavefront shaping assembly, wherein the first beam propagates toward the beam interference zone from a first side of the beam interference zone (step 411). The method 401 may also include reflecting, by the wavefront shaping assembly including a polarization hologram, the first beam back toward the beam interference zone as a second beam, wherein the second beam propagates toward the beam interference zone from a second side of the beam interference zone (step 412). The polarization hologram may be configured with a predetermined phase profile, and the second beam may be configured to have a predetermined wavefront associated with the predetermined phase profile. The first beam and the second beam may be coherent linearly polarized beams with the same polarization direction, and may be configured to interfere with one another within the beam interference zone to generate an intensity interference pattern.

The method 401 may include other steps or processes described above that are not shown in FIG. 4A. For example, in some embodiments, the polarization hologram may include a reflective polarization volume hologram ("PVH") element, the method 401 may further include reflecting, by the reflective PVH element, a first polarized beam having a predetermined handedness as a second polarized beam having the predetermined handedness and the predetermined wavefront. In some embodiments, the wavefront shaping assembly may include a waveplate disposed between the polarization hologram and the beam interference zone. The method may further include converting, by the waveplate, the first beam into the first polarized beam propagating toward the polarization hologram; and converting, by the waveplate, the second polarized beam output from the polarization hologram into the second beam.

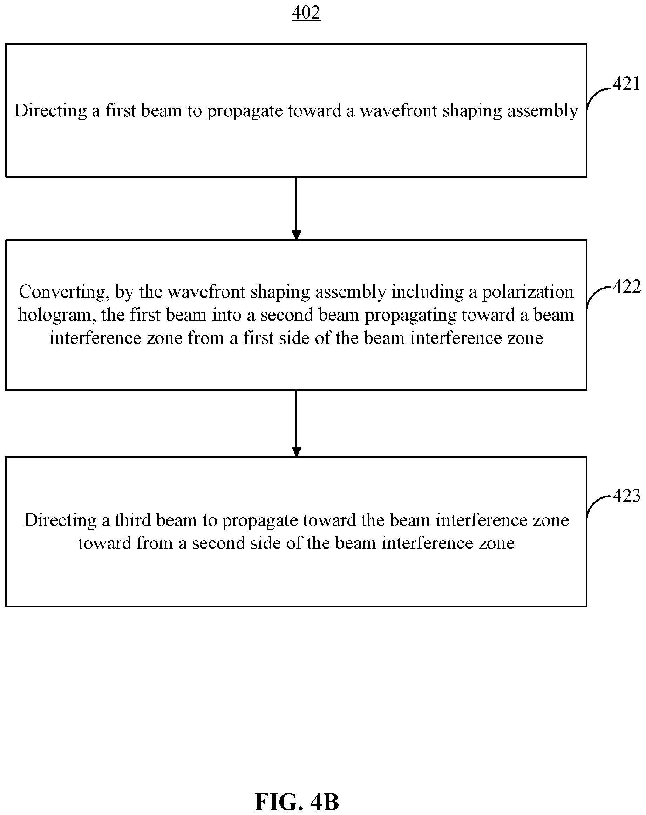

FIG. 4B is a flowchart illustrating a method 402 for generating an interference pattern in a recording medium layer, according to an embodiment of the present disclosure. The method 402 may include directing a first beam to propagate toward a wavefront shaping assembly (step 421). The method 402 may also include converting, by the wavefront shaping assembly including a polarization hologram, the first beam into a second beam propagating toward a beam interference zone from a first side of the beam interference zone (step 422). The method 402 may also include directing a third beam to propagate toward the beam interference zone from a second side of the beam interference zone (step 423). The second beam and the third beam may be coherent linearly polarized beams having the same linearly polarization, and may be configured to interfere with one another within the beam interference zone to generate an intensity interference pattern.

The method 402 may include other steps or processes described above that are not shown in FIG. 4B. For example, the polarization hologram may be configured with a predetermined phase profile. The method 402 may further include converting, by the polarization hologram, the first beam that is a polarized input beam having a first handedness as a first polarized output beam having a predetermined wavefront associated with the predetermined phase profile and a second handedness that is opposite to the first handedness, and a second polarized output beam having the first handedness. In some embodiments, the polarization hologram may include a transmissive PVH element, or a PBP element, etc. In some embodiments, converting, by the polarization hologram, the polarized input beam as the first polarized output beam and the second polarized output beam may include forwardly diffracting, by the polarization hologram, a first portion of the polarized input beam as the first polarized output beam, and transmitting, by the polarization hologram, a second portion of the polarized input beam as the second polarized output beam (with negligible or zero diffraction).

In some embodiments, the wavefront shaping assembly may further include a waveplate disposed between the polarization hologram and the beam interference zone. The method 402 may further include, converting, by the waveplate, the first polarized output beam having the second handedness and the second polarized output beam having the first handedness into a first linearly polarized beam and a second linearly polarized beam having orthogonal polarization directions. In some embodiments, the wavefront shaping assembly may further include a polarizer disposed between the waveplate and the beam interference zone. The method 402 may further include, transmitting, by the polarizer, the first linearly polarized beam as the second beam propagating toward the beam interference zone, and blocking, by the polarizer, the second linearly polarized beam via absorption.

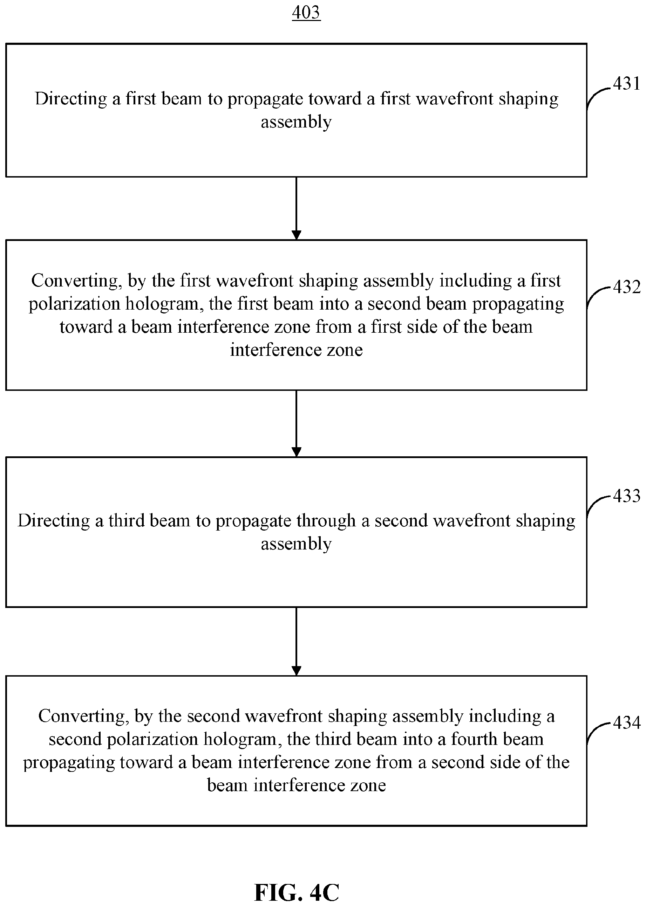

FIG. 4C is a flowchart illustrating a method 403 for generating an interference pattern in a recording medium layer, according to an embodiment of the present disclosure. The method 403 may include directing a first beam to propagate toward a first wavefront shaping assembly (step 431). The method 403 may also include converting, by the first wavefront shaping assembly including a first polarization hologram, the first beam into a second beam propagating toward a beam interference zone from a first side of the beam interference zone (step 432). The method 403 may also include directing a third beam to propagate through a second wavefront shaping assembly (step 433). The method 403 may further include converting, by the second wavefront shaping assembly including a second polarization hologram, the third beam into a fourth beam propagating toward a beam interference zone from a second side of the beam interference zone (step 434). The second beam and the fourth beam may be coherent linearly polarized beams having the same polarization direction, and may be configured to interfere with one another within the beam interference zone to generate an intensity interference pattern.

The method 403 may include other steps or processes described above that are not shown in FIG. 4C. For example, the first polarization hologram may be configured with a first predetermined phase profile, and the method 403 may include converting, by the first polarization hologram, the first beam that is a first polarized input beam having a first predetermined handedness as a first polarized output beam having a first predetermined wavefront associated with the first predetermined phase profile and a handedness that is opposite to the first predetermined handedness, and a second polarized output beam having the first predetermined handedness. In some embodiments, the first polarization hologram may include a transmissive PVH element, or a PBP element, etc. In some embodiments, converting, by the first polarization hologram, the first polarized input beam as the first polarized output beam and the second polarized output beam may include forwardly diffracting, by the first polarization hologram, a first portion of the first polarized input beam as the first polarized output beam, and transmitting, by the first polarization hologram, a second portion of the first polarized input beam as the second polarized output beam (with negligible or zero diffraction).

In some embodiments, the first wavefront shaping assembly may further include a first waveplate disposed between the first polarization hologram and the beam interference zone. The method 403 may further include, converting, by the first waveplate, the first polarized output beam and the second polarized output beam into a first linearly polarized beam and a second linearly polarized beam having orthogonal polarization directions. In some embodiments, the first wavefront shaping assembly may further include a first polarizer disposed between the first waveplate and the beam interference zone. The method 403 may further include, transmitting, by the first polarizer, the first linearly polarized beam as the second beam propagating toward the beam interference zone, and blocking, by the first polarizer, the second linearly polarized beam via absorption.

In some embodiments, the second polarization hologram may be configured with a second predetermined phase profile, and the method 403 may further include converting, by the second polarization hologram, the third beam that is a second polarized input beam having a second predetermined handedness as a third polarized output beam having a second predetermined wavefront associated with the second predetermined phase profile and a handedness that is opposite to the second predetermined handedness, and a fourth polarized output beam having the second predetermined handedness. In some embodiments, the second polarization hologram may include a transmissive PVH element, or a PBP element, etc. In some embodiments, converting, by the second polarization hologram, the second polarized input beam as the third polarized output beam and the fourth polarized output beam may include forwardly diffracting, by the second polarization hologram, a first portion of the second polarized input beam as the third polarized output beam, and transmitting, by the second polarization hologram, a second portion of the second polarized input beam as the fourth polarized output beam (with negligible or zero diffraction).

In some embodiments, the second wavefront shaping assembly may further include a second waveplate disposed between the second polarization hologram and the beam interference zone. The method 403 may further include, converting, by the second waveplate, the third polarized output beam and the fourth polarized output beam into a third linearly polarized beam and a fourth linearly polarized beam having orthogonal polarization directions. In some embodiments, the second wavefront shaping assembly may further include a second polarizer disposed between the second waveplate and the beam interference zone. The method 403 may further include, transmitting, by the second polarizer, the third linearly polarized beam as the fourth beam propagating toward the beam interference zone, and blocking, by the second polarizer, the fourth linearly polarized beam via absorption.

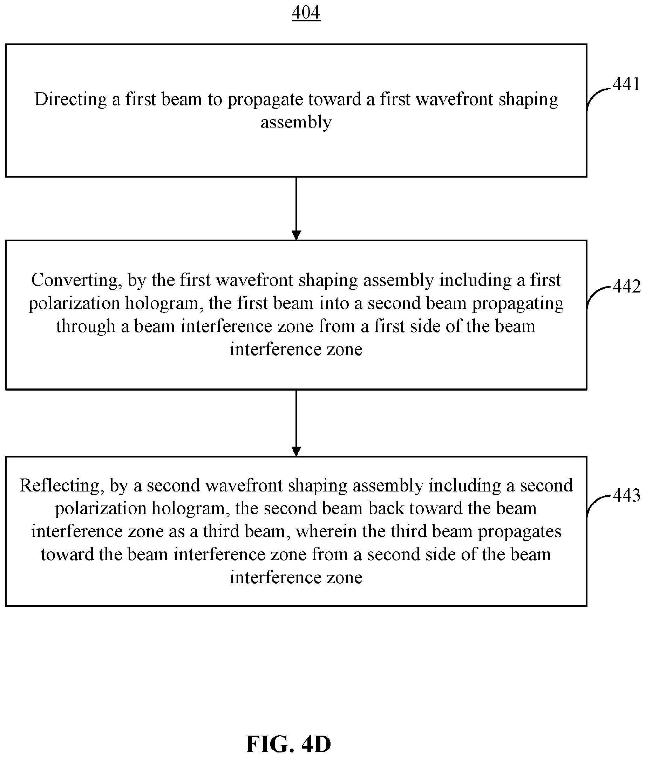

FIG. 4D is a flowchart illustrating a method 404 for generating an interference pattern in a recording medium layer, according to an embodiment of the present disclosure. The method 404 may include directing a first beam to propagate toward a first wavefront shaping assembly (step 441). The method 404 may also include converting, by the first wavefront shaping assembly including a first polarization hologram, the first beam into a second beam propagating through a beam interference zone from a first side of the beam interference zone (step 442). The method 404 may also include reflecting, by a second wavefront shaping assembly including a second polarization hologram, the second beam back toward the beam interference zone as a third beam, wherein the third beam propagates toward the beam interference zone from a second side of the beam interference zone (step 443). The second beam and the third beam may be coherent linearly polarized beams having the same polarization direction, and may be configured to interfere with one another within the beam interference zone to generate an intensity interference pattern.

The method 404 may include other steps or processes described above that are not shown in FIG. 4D. For example, the first polarization hologram may be configured with a first predetermined phase profile, and the method 404 may include converting, by the first polarization hologram, the first beam that is a first polarized input beam having a first predetermined handedness as a first polarized output beam having a first predetermined wavefront associated with the first predetermined phase profile and a handedness that is opposite to the first predetermined handedness, and a second polarized output beam having the first predetermined handedness. In some embodiments, the first polarization hologram may include a transmissive PVH element, or a PBP element, etc. In some embodiments, converting, by the first polarization hologram, the first polarized input beam as the first polarized output beam and the second polarized output beam may include forwardly diffracting, by the first polarization hologram, a first portion of the first polarized input beam as the first polarized output beam, and transmitting, by the first polarization hologram, a second portion of the first polarized input beam as the second polarized output beam (with negligible or zero diffraction).

In some embodiments, the first wavefront shaping assembly may further include a first waveplate disposed between the first polarization hologram and the beam interference zone. The method 404 may further include, converting, by the first waveplate, the first polarized output beam and the second polarized output beam into a first linearly polarized beam and a second linearly polarized beam having orthogonal polarization directions. In some embodiments, the first wavefront shaping assembly may further include a first polarizer disposed between the first waveplate and the beam interference zone. The method 404 may further include, transmitting, by the first polarizer, the first linearly polarized beam as the second beam propagating toward the beam interference zone, and blocking, by the first polarizer, the second linearly polarized beam via absorption.

In some embodiments, the second wavefront shaping assembly may further include a second waveplate disposed between the second polarization hologram and the beam interference zone The second polarization hologram may be configured with a second predetermined phase profile. In some embodiments, the second polarization hologram may include a reflective PVH element. In some embodiments, the method 404 may further include converting, by the second waveplate, the second beam into a first polarized beam having a predetermined handedness. In some embodiments, the method 404 may further include, reflecting, by the second polarization hologram, the first polarized beam having the predetermined handedness as a second polarized beam having the predetermined handedness and a second predetermined wavefront associated with both of the first predetermined phase profile and the second predetermined phase profile. In some embodiments, the method 404 may further include converting, by the second waveplate, the second polarized beam having the predetermined handedness into the third beam.

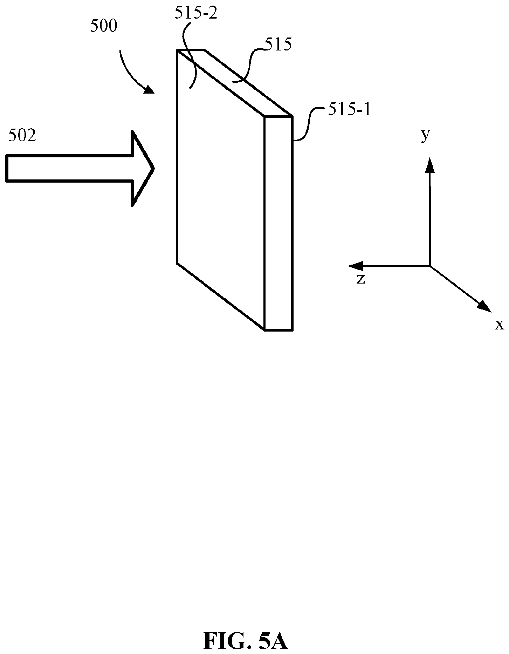

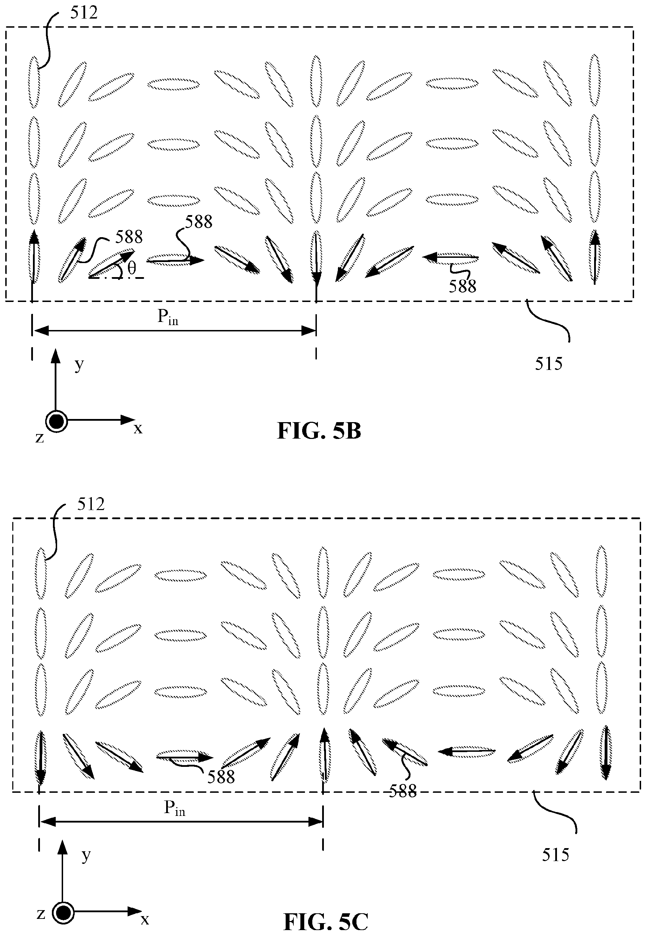

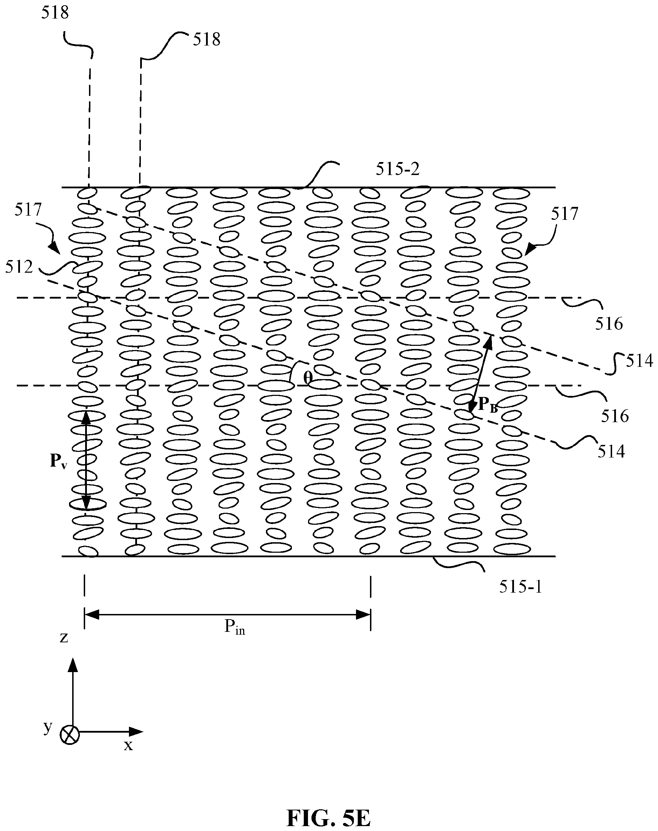

FIG. 5A illustrates a schematic three-dimensional ("3D") view of a liquid crystal polarization hologram ("LCPH") element 500 with a beam 502 incident onto the LCPH element 500 along a -z-axis, according to an embodiment of the present disclosure. FIGs. 5B-5D schematically illustrate various views of a portion of the LCPH element 500 shown in FIG. 5A, showing in-plane orientations of optically anisotropic molecules in the LCPH element 500, according to various embodiments of the present disclosure. FIGs. 5E-5H schematically illustrate various views of a portion of the LCPH element 500 shown in FIG. 5A, showing out-of-plane orientations of optically anisotropic molecules in the LCPH element 500, according to various embodiments of the present disclosure.

The LCPH element 500 may be an embodiment of the polarization hologram master described above, such as the polarization hologram master 205 shown in FIG. 2A, the polarization hologram master 255 shown in FIG. 2B, the polarization hologram master 255-1 shown in FIG. 3A, or the polarization hologram master 255-2 shown in FIG. 3A. As shown in FIG. 5A, although the LCPH element 500 is shown as a rectangular plate shape for illustrative purposes, the LCPH element 500 may have a suitable shape, such as a circular shape. In some embodiments, one or both surfaces along the light propagating path of the beam 502 may have curved shapes. In some embodiments, the LCPH element 500 may be fabricated based on a birefringent medium, e.g., liquid crystal ("LC") materials, which may have an intrinsic orientational order of optically anisotropic molecules that may be locally controlled during the fabrication process. In some embodiments, the LCPH element 500 may be fabricated based on a photosensitive polymer, such as an amorphous polymer, an LC polymer, etc., which may generate an induced (e.g., photo-induced) optical anisotropy and/or an induced (e.g., photo-induced) optic axis orientation.

In some embodiments, the LCPH element 500 may include a birefringent medium (e.g., an LC material) in a form of a layer, which may be referred to as a birefringent medium layer 515. The birefringent medium layer 515 may have a first surface 515-1 and an opposing second surface 515-2. The first surface 515-1 and the second surface 515-2 may be surfaces along the light propagating path of the incident beam 502. The birefringent medium layer 515 may include optically anisotropic molecules (e.g., LC molecules) configured with a 3D orientational pattern to provide a predetermined phase profile associated with a predetermined optical response. In some embodiments, an optic axis of the birefringent medium 515 may be configured with a spatially varying orientation in at least one in-plane direction. For example, the optic axis of the birefringent medium of the birefringent medium layer 515 may periodically or non-periodically vary in at least one in-plane linear direction, in at least one in-plane radial direction, in at least one in-plane circumferential (e.g., azimuthal) direction, or a combination thereof. The LC molecules may be configured with an in-plane orientation pattern, in which the directors of the LC molecules may periodically or non-periodically vary in the at least one in-plane direction. In some embodiments, the optic axis of the birefringent medium of the birefringent medium layer 515 may also be configured with a spatially varying orientation in an out-of-plane direction. The directors of the LC molecules may also be configured with spatially varying orientations in an out-of-plane direction. For example, the optic axis of the LC material (or directors of the LC molecules) may twist in a helical fashion in the out-of-plane direction.

FIGs. 5B-5D schematically illustrate x-y sectional views of a portion of the LCPH element 500 shown in FIG. 5A, showing in-plane orientations of the optically anisotropic molecules 512 in the LCPH element 500, according to various embodiments of the present disclosure. The in-plane orientations of the optically anisotropic molecules 512 in the LCPH element 500 shown in FIGs. 5B-5D are for illustrative purposes. In some embodiments, the optically anisotropic molecules 512 in the LCPH element 500 may have other in-plane orientation patterns. For discussion purposes, rod-like LC molecules 512 are used as examples of the optically anisotropic molecules 512. The rod-like LC molecule 512 may have a longitudinal axis (or an axis in the length direction) and a lateral axis (or an axis in the width direction). The longitudinal axis of the LC molecule 512 may be referred to as a director of the LC molecule 512 or an LC director. An orientation of the LC director may determine a local optic axis orientation or an orientation of the optic axis at a local point of the birefringent medium layer 515. The term "optic axis" may refer to a direction in a crystal. A light propagating in the optic axis direction may not experience birefringence (or double refraction). An optic axis may be a direction rather than a single line: lights that are parallel with that direction may experience no birefringence. The local optic axis may refer to an optic axis within a predetermined region of a crystal. For illustrative purposes, the LC directors of the LC molecules 512 shown in FIGs. 5B-11D are presumed to be within a film plane of the birefringent medium layer 515 with substantially small tilt angles with respect to the surface.

FIG. 5B schematically illustrates an x-y sectional view of a portion of the LCPH element 500, showing a periodic in-plane orientation pattern of the orientations of the LC directors (indicated by arrows 588 in FIG. 5B) of the LC molecules 512 within a film plane of the birefringent medium layer 515. The film plane may be parallel with at least one of the first surface 515-1 or the second surface 515-2. The film plane may be perpendicular to the thickness direction of the birefringent medium layer 515. The orientations of the LC directors within the film plane of the birefringent medium layer 515 may exhibit a periodic rotation in at least one in-plane direction. The at least one in-plane direction is shown as the x-axis direction in FIG. 5B. The periodically varying in-plane orientations of the LC directors form a pattern. The in-plane orientation pattern of the LC directors shown in FIG. 5B may also be referred to as an in-plane grating pattern. Accordingly, the LCPH element 500 may function as a polarization selective grating, e.g., a PVH grating, or a PBP grating, etc.

As shown in FIG. 5B, the LC molecules 512 located in the film plane of the birefringent medium layer 515 may be configured with orientations of LC directors continuously changing (e.g., rotating) in a first predetermined in-plane direction in the film plane. The first predetermined in-plane direction is shown as the x-axis in-plane direction. The continuous rotation exhibited in the orientations of the LC directors may follow a periodic rotation pattern with a uniform (e.g., same) in-plane pitch Pᵢₙ. It is noted that the first predetermined in-plane direction may be any other suitable direction in the film plane of the birefringent medium layer 515, such as the y-axis direction, the radial direction, or the circumferential direction within the x-y plane. The pitch Pᵢₙ along the first predetermined (or x-axis) in-plane direction may be referred to as an in-plane pitch or a horizontal pitch. In some embodiments, the in-plane pitch or a horizontal pitch Pᵢₙ may be tunable through adjusting a voltage applied to the LCPH element 500.

For simplicity of illustration and discussion, the LCPH element 500 is shown in FIG. 5B as a 1D grating. Thus, the orientations in the y-axis direction are the same. In some embodiments, the LCPH element 500 may be a 2D grating, and the orientations in the y-axis direction may also vary. The pattern with the uniform (or same) in-plane pitch Pᵢₙ may be referred to as a periodic LC director in-plane orientation pattern. The in-plane pitch Pᵢₙ may be defined as a distance along the first predetermined (or x-axis) in-plane direction over which the orientations of the LC directors exhibit a rotation by a predetermined value (e.g., 180°). In other words, in the film plane of the birefringent medium layer 515, local optic axis orientations of the birefringent medium layer 515 may vary periodically in the first predetermined (or x-axis) in-plane direction with a pattern having the uniform (or same) in-plane pitch Pᵢₙ.

In addition, in the film plane of the birefringent medium layer 515, the orientations of the directors of the LC molecules 512 may exhibit a rotation in a predetermined rotation direction, e.g., a clockwise direction or a counter-clockwise direction. Accordingly, the rotation exhibited in the orientations of the directors of the LC molecules 512 in the film plane of the birefringent medium layer 515 may exhibit a handedness, e.g., right handedness or left handedness. In the embodiment shown in FIG. 5B, in the film plane of the birefringent medium layer 515. the orientations of the directors of the LC molecules 512 may exhibit a rotation in a clockwise direction. Accordingly, the rotation of the orientations of the directors of the LC molecules 512 in the film plane of the birefringent medium layer 515 may exhibit a left handedness. In some embodiments, the LCPH element 500 having the in-plane orientation pattern shown in FIG. 5B may be polarization selective.

In the embodiment shown in FIG. 5C, in the film plane of the birefringent medium layer 515, the orientations of the directors of the LC molecules 512 may exhibit a rotation in a counter-clockwise direction. Accordingly, the rotation exhibited in the orientations of the directors of the LC molecules 512 the film plane of the birefringent medium layer 515 may exhibit a right handedness. In some embodiments, the LCPH element 500 having the in-plane orientation pattern shown in FIG. 5C may be polarization selective.

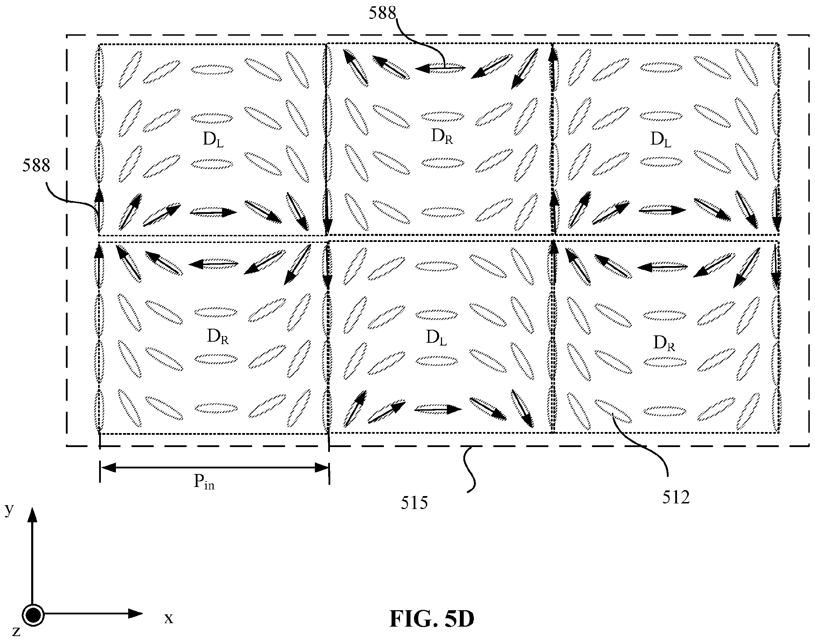

In the embodiment shown in FIG. 5D, in the film plane of the birefringent medium layer 515, domains in which the orientations of the directors of the LC molecules 512 exhibit a rotation in a clockwise direction (referred to as domains D_{L}), and domains in which the orientations of the directors of the LC molecules 512 exhibit a rotation in a counter-clockwise direction (referred to as domains D_{R}), may be alternatingly arranged in at least one in-plane direction. The at least one in-plane direction may include a first (or x-axis) in-plane direction and/or a second (or y-axis) in-plane direction. In some embodiments, the LCPH element 500 having the in-plane orientation pattern shown in FIG. 5D may be polarization non-selective.

FIGs. 5E-5H schematically illustrate y-z sectional views of a portion of the LCPH element 500, showing out-of-plane orientations of the LC directors of the LC molecules 512 in the LCPH element 500, according to various embodiments of the present disclosure. In some embodiments, the out-of-plane direction or orientation may be in the thickness direction of the LCPH element 500. For discussion purposes, FIGs. 5E-5H schematically illustrate out-of-plane (e.g., along z-axis direction) orientations of the LC directors of the LC molecules 512 when the in-plane orientation pattern is a periodic in-plane orientation pattern shown in FIG. 5B. As shown in FIG. 5E, within a volume of the birefringent medium layer 515, the LC molecules 512 may be arranged in a plurality of helical structures 517 with a plurality of helical axes 518 and a helical pitch Pₕ along the helical axes. The azimuthal angles of the LC molecules 512 arranged along a single helical structure 517 may continuously vary around a helical axis 518 in a predetermined rotation direction, e.g., clockwise direction or counter-clockwise direction. In other words, the orientations of the LC directors of the LC molecules 512 arranged along a single helical structure 517 may exhibit a continuous rotation around the helical axis 518 in a predetermined rotation direction. That is, the azimuthal angles associated of the LC directors may exhibit a continuous change around the helical axis in the predetermined rotation direction. Accordingly, the helical structure 517 may exhibit a handedness, e.g., right handedness or left handedness. The helical pitch Pₕ may be defined as a distance along the helical axis 518 over which the orientations of the LC directors exhibit a rotation around the helical axis 518 by 360°, or the azimuthal angles of the LC molecules vary by 360°.

In the embodiment shown in FIG. 5E, the helical axes 518 may be substantially perpendicular to the first surface 515-1 and/or the second surface 515-2 of the birefringent medium layer 515. In other words, the helical axes 518 of the helical structures 517 may extend in a thickness direction (e.g., a z-axis direction) of the birefringent medium layer 515. That is, the LC molecules 512 may have substantially small tilt angles (including zero degree tilt angles), and the LC directors of the LC molecules 512 may be substantially orthogonal to the helical axis 518. The birefringent medium layer 515 may have a vertical pitch Pᵥ, which may be defined as a distance along the thickness direction of the birefringent medium layer 515 over which the orientations of the LC directors of the LC molecules 512 exhibit a rotation around the helical axis 518 by 180° (or the azimuthal angles of the LC directors vary by 180°). In the embodiment shown in FIG. 5E. the vertical pitch Pᵥ may be half of the helical pitch Pₕ.

As shown in FIG. 5E, the LC molecules 512 from the plurality of helical structures 517 having a first same orientation (e.g., same tilt angle and azimuthal angle) may form a first series of parallel refractive index planes 514 periodically distributed within the volume of the birefringent medium layer 515. Although not labeled, the LC molecules 512 with a second same orientation (e.g., same tilt angle and azimuthal angle) different from the first same orientation may form a second series of parallel refractive index planes periodically distributed within the volume of the birefringent medium layer 515. Different series of parallel refractive index planes may be formed by the LC molecules 512 having different orientations. In the same series of parallel and periodically distributed refractive index planes 514, the LC molecules 512 may have the same orientation and the refractive index may be the same. Different series of refractive index planes 514 may correspond to different refractive indices. When the number of the refractive index planes 514 (or the thickness of the birefringent medium layer) increases to a sufficient value, Bragg diffraction may be established according to the principles of volume gratings. Thus, the periodically distributed refractive index planes 514 may also be referred to as Bragg planes 514. In some embodiments, as shown in FIG. 5E, the refractive index planes 514 may be slanted with respect to the first surface 515-1 or the second surface 515-2. In some embodiments, the refractive index planes 514 may be perpendicular to or parallel with the first surface 515-1 or the second surface 515-2. Within the birefringent medium layer 515, there may exist different series of Bragg planes. A distance (or a period) between adjacent Bragg planes 514 of the same series may be referred to as a Bragg period P_{B}. The different series of Bragg planes formed within the volume of the birefringent medium layer 515 may produce a varying refractive index profile that is periodically distributed in the volume of the birefringent medium layer 515. The birefringent medium layer 515 may diffract an input light satisfying a Bragg condition through Bragg diffraction.

As shown in FIG. 5E, the birefringent medium layer 515 may also include a plurality of LC molecule director planes (or molecule director planes) 516 arranged in parallel with one another within the volume of the birefringent medium layer 515. An LC molecule director plane (or an LC director plane) 516 may be a plane formed by or including the LC directors of the LC molecules 512. In the example shown in FIG. 5E, the LC directors in the LC director plane 516 have different orientations, i.e., the orientations of the LC directors vary in the x-axis direction. The Bragg plane 514 may form an angle 0 with respect to the LC molecule director plane 516. In the embodiment shown in FIG. 5E, the angle θ may be an acute angle, e.g., 0° < θ < 90°. The LCPH element 500 including the birefringent medium layer 515 shown in FIG. 5B may function as a transmissive PVH element, e.g., a transmissive PVH grating.

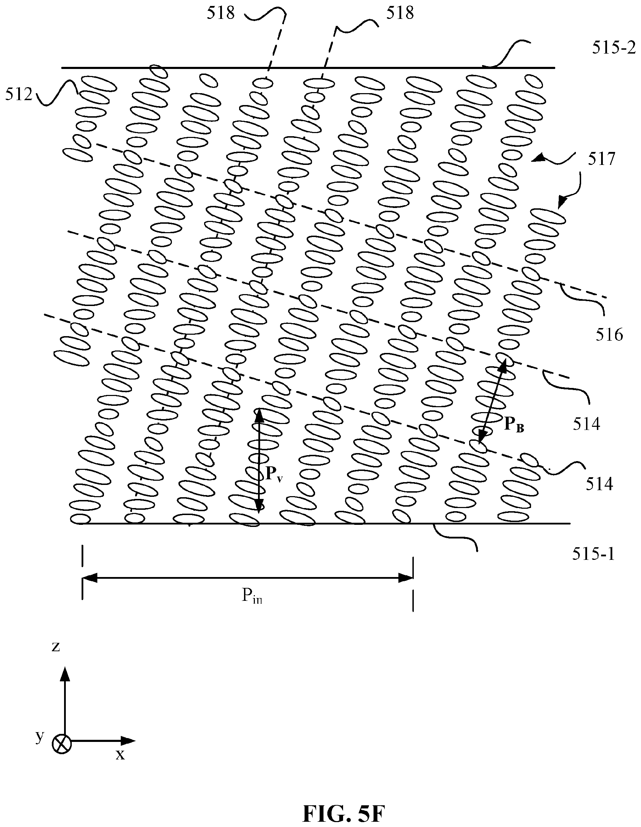

In the embodiment shown in FIG. 5F, the helical axes 518 of helical structures 517 may be tilted with respect to the first surface 515-1 and/or the second surface 515-2 of the birefringent medium layer 515 (or with respect to the thickness direction of the birefringent medium layer 515). For example, the helical axes 518 of the helical structures 517 may have an acute angle or obtuse angle with respect to the first surface 515-1 and/or the second surface 515-2 of the birefringent medium layer 515. In some embodiments, the LC directors of the LC molecule 512 may be substantially orthogonal to the helical axes 518 (i.e., the tilt angle may be substantially zero degree). In some embodiments, the LC directors of the LC molecule 512 may be tilted with respect to the helical axes 518 at an acute angle. The birefringent medium layer 515 may have a vertical periodicity (or pitch) Pᵥ. In the embodiment shown in FIG. 5F, an angle θ (not shown) between the LC director plane 516 and the Bragg plane 514 may be substantially 0° or 180°. That is, the LC director plane 516 may be substantially parallel with the Bragg plane 514. In the example shown in FIG. 5F, the orientations of the directors in the molecule director plane 516 may be substantially the same. The LCPH element 500 including the birefringent medium layer 515 shown in FIG. 5F may function as a reflective PVH element, e.g., a reflective PVH grating.

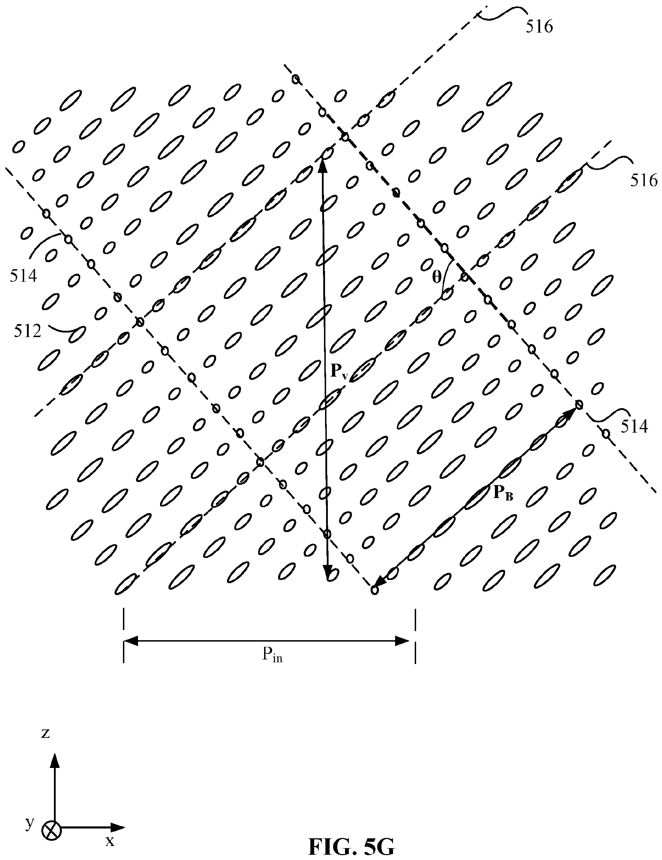

In the embodiment shown in FIG. 5G, the birefringent medium layer 515 may also include a plurality of LC director planes 516 arranged in parallel within the volume of the birefringent medium layer 515. In the embodiment shown in FIG. 5F, an angle θ between the LC director plane 516 and the Bragg plane 514 may be a substantially right angle, e.g., θ=90°. That is, the LC director plane 516 may be substantially orthogonal to the Bragg plane 514. In the example shown in FIG. 5F, the LC directors in the LC director plane 516 may have different orientations. In some embodiments, the LCPH element 500 including the birefringent medium layer 515 shown in FIG. 5F may function as a transmissive PVH element, e.g., a transmissive PVH grating.

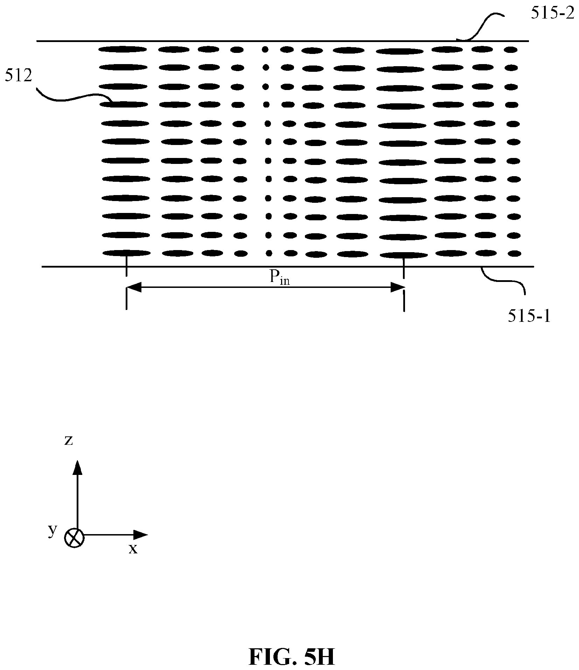

In the embodiment shown in FIG. 5H, in a volume of the birefringent medium layer 515, along the thickness direction (e.g., the z-axis direction) of the birefringent medium layer 515, the directors (or the azimuth angles) of the LC molecules 512 may remain in the same orientation (or same angle value) from the first surface 515-1 to the second surface 515-2 of the birefringent medium layer 515. In some embodiments, the thickness of the birefringent medium layer 515 may be configured as d=λ/(2*Δn), where λ is a design wavelength, Δn is the birefringence of the LC material of the birefringent medium layer 515, and Δn =nₑ-nₒ, where nₑ and nₒ are the extraordinary and ordinary refractive indices of the LC material, respectively. In some embodiments, the LCPH element 500 including the birefringent medium layer 515 shown in FIG. 5F may function as a PBP element, e.g., a PBP grating.

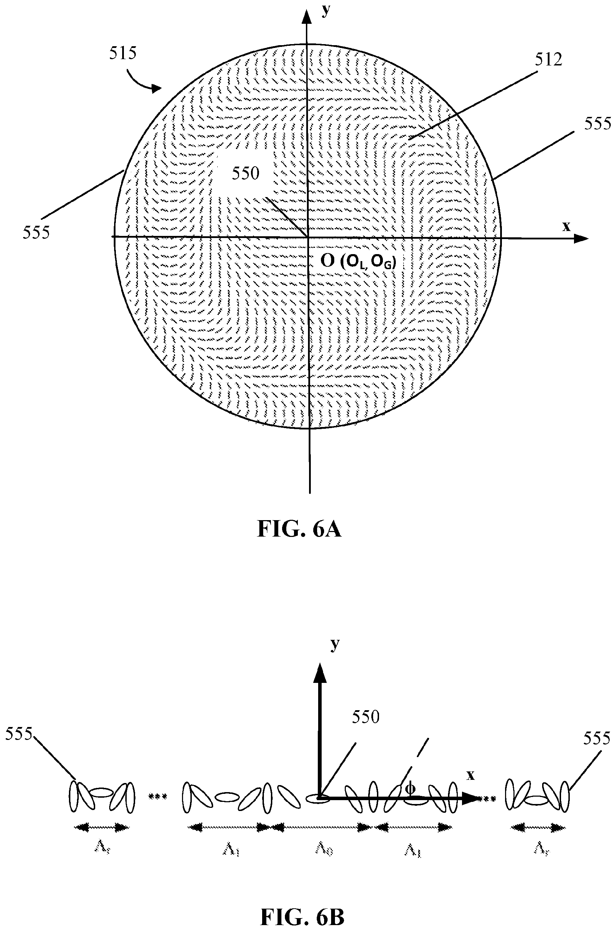

FIG. 6A schematically illustrates an x-y sectional view of a portion of the LCPH element 500 shown in FIG. 5A, showing in-plane orientations of the optically anisotropic molecules 512 in the film plane of the birefringent medium layer 515 in the LCPH element 500, according to an embodiment of the present disclosure. FIG. 6B illustrates a section of an LC director field taken along an x-axis in the film plane of the birefringent medium layer 515. The LCPH element 500 having the in-plane orientation pattern shown in FIGs. 6A and 6B may function as an LCPH lens, e.g., a PBP lens, or a PVH lens, etc. The LCPH lens 500 having the in-plane orientation pattern shown in FIGs. 6A and 6B may function as an on-axis focusing spherical lens.

FIG. 6A shows that the LCPH lens 500 has a circular shape. The orientations of the LC molecules 512 located within the film plane of the birefringent medium layer 515 may be configured with an in-plane orientation pattern having a varying pitch in at least two opposite in-plane directions from a lens center ("O") 550 to opposite lens peripheries 555. For example, the orientations of the LC directors of LC molecules 512 located in the film plane of the birefringent medium layer 515 may exhibit a continuous rotation in at least two opposite in-plane directions (e.g., a plurality of opposite radial directions) from the lens center 550 to the opposite lens peripheries 555 with a varying pitch. The orientations of the LC directors from the lens center 550 to the opposite lens peripheries 555 may exhibit a rotation in a same rotation direction (e.g., clockwise, or counter-clockwise). A pitch Λ of the in-plane orientation pattern may be defined as a distance in the in-plane direction (e.g., a radial direction) over which the orientations of the LC directors (or azimuthal angles φ of the LC molecules 512) change by a predetermined angle (e.g., 180°) from a predetermined initial state.

As shown in FIG. 6B, according to the LC director field along the x-axis direction, the pitch A may be a function of the distance from the lens center 550. The pitch A may monotonically decrease from the lens center 550 to the lens peripheries 555 in the at least two opposite in-plane directions (e.g., two opposite radial directions) in the x-y plane, e.g., An > Ai > ... > Λᵣ. An is the pitch at a central region of the lens pattern, which may be the largest. The pitch Λᵣ is the pitch at a periphery region (e.g., periphery 555) of the lens pattern, which may be the smallest. In some embodiments, the azimuthal angle Q of the LC molecule 512 may change in proportional to the distance from the lens center 550 to a local point of the birefringent medium layer 515 at which the LC molecule 512 is located. In some embodiments, the in-plane orientation pattern of the orientations of the LC directors shown in FIGs. 6A and 6B may also be referred to as a lens pattern (e.g., a spherical lens pattern). The LCPH lens 500 may be considered as an LCPH grating having a varying pitch.

As shown in FIGs. 6A and 6B, a lens pattern center (O_{L}) and a geometry center (O_{G}) (e.g., a center of lens aperture) of the LCPH lens 500 functioning as on-axis focusing spherical lens may substantially overlap with one another, at the lens center ("O") 550. The lens pattern center (O_{L}) may be a center of the lens pattern of the LCPH lens 500 functioning as on-axis focusing spherical lens, and may also be a symmetry center of the lens pattern The geometry center (O_{G}) may be defined as a center of a shape of the effective light receiving area (i.e., an aperture) of the LCPH lens 500 functioning as an on-axis focusing spherical lens.

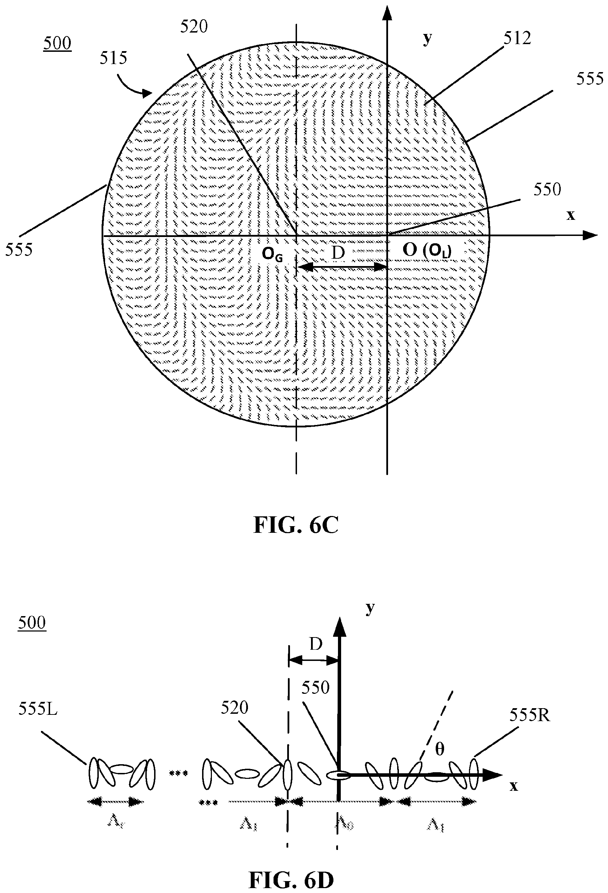

FIG. 6C schematically illustrates an x-y sectional view of a portion of the LCPH element 500 shown in FIG. 5A, showing in-plane orientations of the optically anisotropic molecules 512 in the film plane of the birefringent medium layer 515 in the LCPH element 500, according to an embodiment of the present disclosure. FIG. 6D illustrates a section of an LC director field taken along an x-axis in the film plane of the birefringent medium layer 515. The LCPH element 500 having the in-plane orientation pattern shown in FIGs. 6C and 6D may function as an LCPH lens, e.g., a PBP lens, or a PVH lens, etc. The LCPH lens 500 having the in-plane orientation pattern shown in FIGs. 6C and 6D may function as an off-axis focusing spherical lens. The LCPH lens 500 may also be referred to as a freeform LCPH element. The systems described above may such a freeform LCPH element as the polarization hologram master for fabricating various freeform HOEs.

As shown in FIGs. 6C and 6D, the orientations of the LC molecules 512 located in the film plane of the birefringent medium layer 515 may exhibit an in-plane orientation pattern having a varying pitch in at least two opposite in-plane directions from a lens pattern center (O_{L}) 550 to opposite lens peripheries 555. The lens pattern center (O_{L}) 550 and a geometry center (O_{G}) 520 of the LCPH lens 500 functioning as an off-axis focusing spherical lens may not overlap with one another. Instead, the lens pattern center (O_{L}) 550 may be shifted by a predetermined distance D in a predetermined direction (e.g., the x-axis direction in FIGs. 6C and 6D) from the geometry center (O_{G}) 520. Referring to FIGs. 6A-6D, an off-axis focusing LCPH lens (e.g., those shown in FIGs. 6C and 6D) may be considered as a lens obtained by shifting the lens pattern center of a corresponding on-axis focusing LCPH lens (e.g., those shown in FIGs. 6A and 6B) with respect to the geometry center of the on-axis focusing LCPH lens. The lens pattern center of the corresponding on-axis focusing LCPH lens may also be a lens pattern center of the off-axis focusing LCPH lens. That is, the off-axis focusing LCPH lens may have an on-axis focusing counterpart with the same lens pattern center.

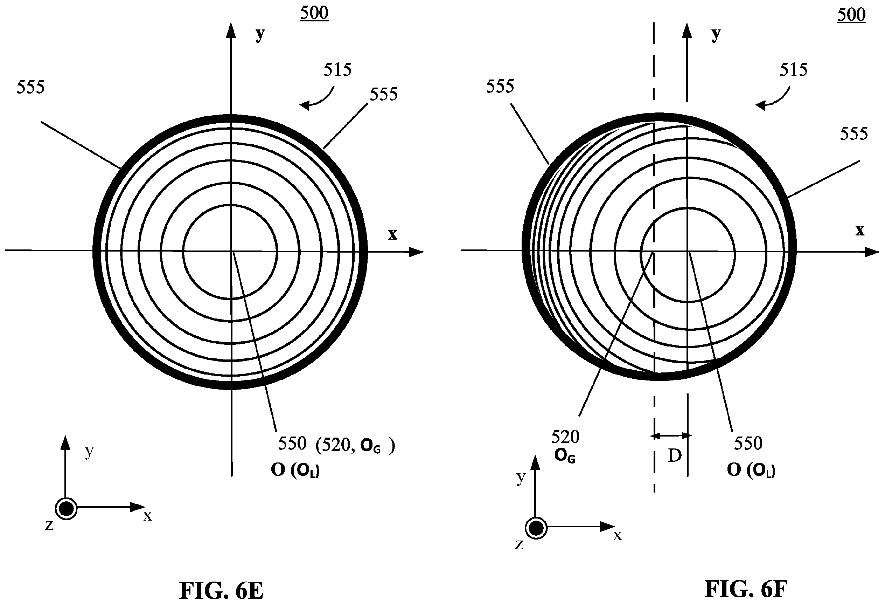

FIG. 6E illustrates the configuration of fringes and a varying periodicity of the LCPH lens 500 functioning as an on-axis focusing spherical lens, according to an embodiment of the present disclosure. FIG. 6F illustrates the configuration of fringes and a varying periodicity of the LCPH lens 500 functioning as an off-axis focusing spherical lens, according to an embodiment of the present disclosure. A fringe (or grating fringe) of the LCPH lens 500 refers to a set of local points at which the azimuthal angles of the optic axis (or the rotation angles of the optic axis starting from the lens pattern center to the local points in the radial direction) are the same. The LCPH lens 500 may have a plurality of fringes. For the LCPH lens 500 functioning as a spherical lens, the fringes may be concentric rings. Circles or arcs in FIGs. 6E and 6F represent grating fringes. Local points of the optic axis on the same grating fringe may have the same azimuthal angle θ (or rotation angle). Local points of the optic axis on two adjacent grating fringes may have a change of π in the azimuthal angle θ. Thus, a difference between the radii of two adjacent grating fringes may represent the period P of the lens pattern of the LCPH lens 500.

As shown in FIG. 6E, for the LCPH lens 500 functioning as an on-axis focusing spherical lens, the lens pattern center (O_{L}) 550 may correspond to the geometry center (O_{G}) 520 of the LCPH lens 500. The fringes of the LCPH lens 500 over the entire lens may be centrosymmetric with respect to the lens pattern center (O_{L}) 550 in the two opposite radial directions. In addition, the fringes of the LCPH lens 500 may be symmetric with respect to an in-plane lens pattern center axis of the LCPH lens 500. The in-plane lens pattern center axis refers to an axis passing through the lens pattern center 550 that is within the film plane of the birefringent medium layer 515 of the LCPH lens 500. The period P of the lens pattern of the LCPH lens 500 may monotonically change (e.g., monotonically decrease) in the LCPH lens 500 from the lens pattern center (O_{L}) 550 in the opposite radial directions, i.e., from the lens pattern center (O_{L}) 550 to the opposite lens peripheries 555.

As shown in FIG. 6F, for the LCPH lens 500 functioning as an off-axis focusing spherical lens, the lens pattern center (O_{L}) 550 may not correspond to the geometry center (O_{G}) 520 of the LCPH lens 500. The fringes of the LCPH lens 500 over the entire lens may not be centrosymmetric with respect to the lens pattern center (O_{L}) 550. Instead, only the fringes in a predetermined region of the entire lens including the lens pattern center (O_{L}) 550 may be centrosymmetric with respect to the lens pattern center (O_{L}) 550. In addition, only the fringes in the predetermined region of the entire lens including the lens pattern center (O_{L}) 550 may be symmetric with respect to the in-plane lens pattern center axis of the LCPH lens 500. The period P of the lens pattern of the LCPH lens 500 may monotonically change (eg., monotonically decrease) in the entire lens from the lens pattern center (O_{L}) 550 in the opposite radial directions, i.e., from the lens pattern center (O_{L}) 550 to the opposite lens peripheries 555.

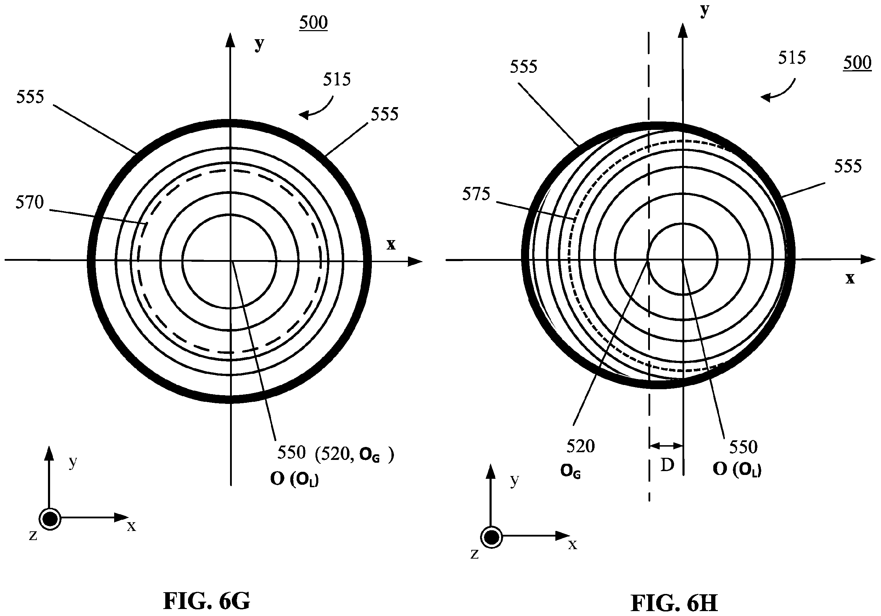

FIG. 6G illustrates the configuration of fringes and a varying periodicity of the LCPH lens 500 functioning as an on-axis focusing aspherical lens, according to an embodiment of the present disclosure. FIG. 6H illustrates the configuration of fringes and a varying periodicity of the LCPH lens 500 functioning as an off-axis focusing aspherical lens, according to an embodiment of the present disclosure. The LCPH lens 500 functioning as an on-axis focusing aspherical lens or an off-axis focusing aspherical lens may also be referred to as a freeform LCPH element. The freeform LCPH element may be used in the above-described systems as the polarization hologram master to fabricate various freeform HOEs. For the LCPH lens 500 functioning as an spherical lens, the fringes may be concentric rings.

As shown in FIG. 6G, for the LCPH lens 500 functioning as an on-axis focusing aspherical lens, the lens pattern center (O_{L}) 550 may correspond to the geometry center (O_{G}) 520 of the LCPH lens 500. The fringes of the LCPH lens 500 over the entire lens may be centrosymmetric with respect to the lens pattern center (O_{L}) 550 in the two opposite radial directions. In addition, the fringes of the LCPH lens 500 may be symmetric with respect to the in-plane lens pattern center axis of the LCPH lens 500. The period P of the lens pattern of the LCPH lens 500 may not monotonically change (e.g., may not monotonically decrease) in the opposite radial directions from the lens pattern center (O_{L}) 550 to the opposite lens peripheries 555. Instead, the period P of the lens pattern of the LCPH lens 500 may monotonically change (e.g., monotonically decrease) only in a portion of the lens including the lens pattern center (O_{L}) 550 (less than the entire lens), in the opposite radial directions from the lens pattern center (O_{L}) 550 to the opposite lens peripheries 515, for example, within a portion of the lens enclosed by a grating fringe represented by a dashed circle 570 shown in FIG. 6G. For portions outside of the dashed circle 570, the period P of the lens pattern of the LCPH lens 500 may monotonically increase from the dashed circle 570 to the opposite lens peripheries 555 in the opposite radial directions. Although not shown, in some embodiments, the period P of the lens pattern of the LCPH lens 500 may first monotonically decrease, then monotonically increase, then monotonically decrease again, and so on, in at least one of the opposite radial directions from the lens pattern center (O_{L}) 550.

As shown in FIG. 6H, for the LCPH lens 500 functioning as an off-axis focusing aspherical lens, the lens pattern center (O_{L}) 550 may not correspond to the geometry center (O_{G}) 520 of the LCPH lens 500. The fringes of the LCPH lens 500 over the entire lens may not be centrosymmetric with respect to the lens pattern center (O_{L}) 550. Instead, only the fringes in a predetermined region of the entire lens including the lens pattern center (O_{L}) 550 may be centrosymmetric with respect to the lens pattern center (O_{L}) 550. In addition, only the fringes in the predetermined region of the entire lens including the lens pattern center (O_{L}) 550 may be symmetric with respect to the in-plane lens pattern center axis of the LCPH lens 500. The period P of the lens pattern of the LCPH lens 500 may not monotonically change (e.g., may not monotonically decrease) in the opposite radial directions from the lens pattern center (O_{L}) 550 to the opposite lens peripheries 555. Instead, the period P of the lens pattern of the LCPH lens 500 may monotonically change (e.g., monotonically decrease) only in a portion of the lens including the lens pattern center (O_{L}) 550 (less than the entire lens), in the opposite radial directions from the lens pattern center (O_{L}) 550 to the opposite lens peripheries 515, for example, within a portion of the lens enclosed by a grating fringe represented by a dashed circle 575. For portions of the lens outside of the dashed circle 575, the period P of the lens pattern of the LCPH lens 500 may monotonically increase from the dashed circle 575 to the opposite lens peripheries 555 in the opposite radial directions. Although not shown, in some embodiments, the period P of the lens pattern of the LCPH lens 500 may first monotonically decrease, then monotonically increase, then monotonically decrease again, and so on, in at least one of the opposite radial directions from the lens pattern center (O_{L}) 550.

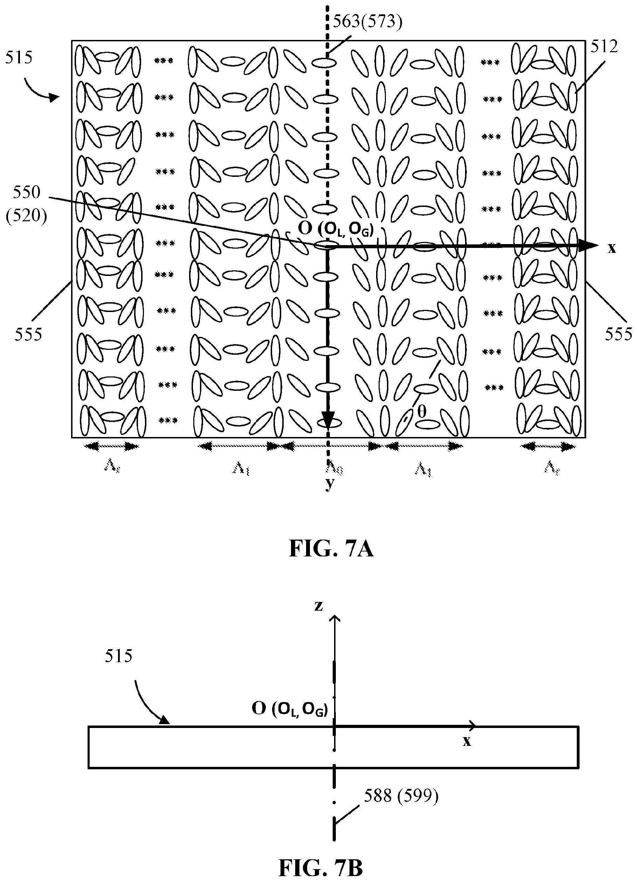

FIG. 7A schematically illustrates an x-y sectional view of a portion of the LCPH element 500 shown in FIG. 5A, showing in-plane orientations of the optically anisotropic molecules 512 in the film plane of the birefringent medium layer 515 in the LCPH element 500, according to an embodiment of the present disclosure. The LCPH lens 500 having the in-plane orientation pattern shown in FIG. 7A may function as an on-axis focusing cylindrical lens, which may focus a beam into a line (e.g., a line of focal points or a line focus). For discussion purposes, FIG. 7A shows that the LCPH lens 500 has a rectangular shape (or a rectangular lens aperture). A width direction of LCPH lens 500 may be referred to as a lateral direction (e.g., an x-axis direction in FIG. 7A), and a length direction of the LCPH lens 500 may be referred to as a longitudinal direction (e.g., a y-axis direction in FIG. 7A).

The LCPH lens 500 may be considered as a 1D example of the LCPH spherical lens, and the at least two opposite in-plane directions in the LCPH lens 500 may include at least two opposite lateral directions (e.g., the +x-axis and -x-axis directions). For example, as shown in FIG. 7A, the orientations of the LC molecules 512 located in the film plane of the birefringent medium layer 515 may be configured with an in-plane orientation pattern having a varying pitch in at least two opposite lateral directions, from the lens pattern center ("O_{L}") 550 to the opposite lens peripheries 555. The orientations of the LC directors located on the same side of an in-plane lens pattern center axis 563 and at a same distance from the in-plane lens pattern center axis 563 may be substantially the same. The rotations of the orientations of the LC directors from the lens pattern center ("O_{L}") 550 to the opposite lens peripheries 555 in the two opposite lateral directions may exhibit a same handedness (e.g., right, or left handedness).

The directors of the LC molecules 512 (or azimuthal angles of the LC molecules 512) may be configured with a continuous in-plane rotation pattern with a varying pitch (Λ₀, Λ₁, ... , Λᵣ) from the from the lens pattern center ("O_{L}") 550 to opposite lens peripheries 555 in the two opposite lateral directions. As shown in FIG. 7A, the pitch of the lens pattern may vary with the distance to the in-plane lens pattern center axis 563 in the lateral direction. In some embodiments, the pitch of the lens pattern may monotonically decrease as the distance to the in-plane lens pattern center axis 563 in the lateral direction increases, i.e., Λ₀ > Λ₁ > ... > Λᵣ, where Λ₀ is the pitch at a central portion of the lens pattern, which may be the largest. The pitch Λᵣ is the pitch at an edge or periphery region of the lens pattern, which may be the smallest. In other words, an azimuthal angle changing rate of the optic axis of the birefringent medium layer 515 (or an azimuthal angle changing rate of the LC molecules) may increase from the lens pattern center ("O_{L}") 550 to the lens periphery 555 in the lateral direction. The azimuthal angles of the optic axis of the birefringent medium layer 515 (or the azimuthal angle changing rate of the LC molecules) at locations on the same side of an in-plane lens pattern center axis 563 and having a same distance from the in-plane lens pattern center axis 563 in the lateral direction, may be substantially the same.

The lens pattern center (O_{L}) of the LCPH lens 500 may be a point at which the azimuthal angle changing rate is the smallest. A geometry center (O_{G}) of the LCPH lens 500 may be the center of the rectangular lens shape. For example, the LCPH lens 500 may have two symmetric axes for the shape of the aperture, e.g., a lateral symmetric axis in a lateral direction (or width direction) of the LCPH lens 500 and a longitudinal symmetric axis in a longitudinal direction (or length direction) of the LCPH lens 500. The geometry center (O_{G}) of the LCPH lens 500 may be a point of intersection of the two symmetric axes. When the LCPH lens 500 has a rectangular shape, the geometry center (O_{G}) may also be a point of intersection of two diagonals. The LCPH lens 500 may have a plurality of points, at each of which an azimuthal angle changing rate of the optic axis (or an azimuthal angle changing rate of the LC molecules) of the birefringent medium layer 515 in the at least two opposite in-plane directions may be the smallest. The plurality of points, at each of which an azimuthal angle changing rate is the smallest may be arranged in a line. The line may be referred to as the in-plane lens pattern center axis 563 of the LCPH lens 500. The in-plane lens pattern center axis 563 may be in the longitudinal direction. The lens pattern center (O_{L}) 550 of the LCPH lens 500 may also be considered as one of the plurality of points, which is located on a same symmetric axis (e.g., the lateral symmetric axis) with the geometry center (O_{G}) of the LCPH lens 500. In other words, the lens pattern center (O_{L}) 550 is also a point of intersection of the in-plane lens pattern center axis 563 and the lateral symmetric axis. In FIG. 7A, the geometry center (O_{G}) 520 may coincide with the lens pattern center (O_{L}) 550 at the origin (point "O'' in FIG. 7 A) of the x-y plane.

FIG. 7B illustrates a side view of the LCPH lens 500 having a lens pattern shown in FIG. 7A, according to an embodiment of the present disclosure. The side view shows an out-of-plane lens pattern center axis 588 passing through the lens pattern center (O_{L}) 550 and an out-of-plane geometry center axis 599 passing through the geometry center (O_{G}) 520. The out-of-plane lens pattern center axis 588 and the out-of-plane geometry center axis 599 may be perpendicular to the surface plane (e.g., the x-y plane). That is, the out-of-plane lens pattern center axis 588 and the out-of-plane geometry center axis 599 may be in the z-axis direction or the thickness direction of the LCPH lens 500. Referring to FIG. 7A and FIG. 7B, because the lens pattern center (O_{L}) 550 and the geometry center (O_{G}) 520 coincide with one another, the out-of-plane lens pattern center axis 588 and the out-of-plane geometry center axis 599 also coincide with one another.

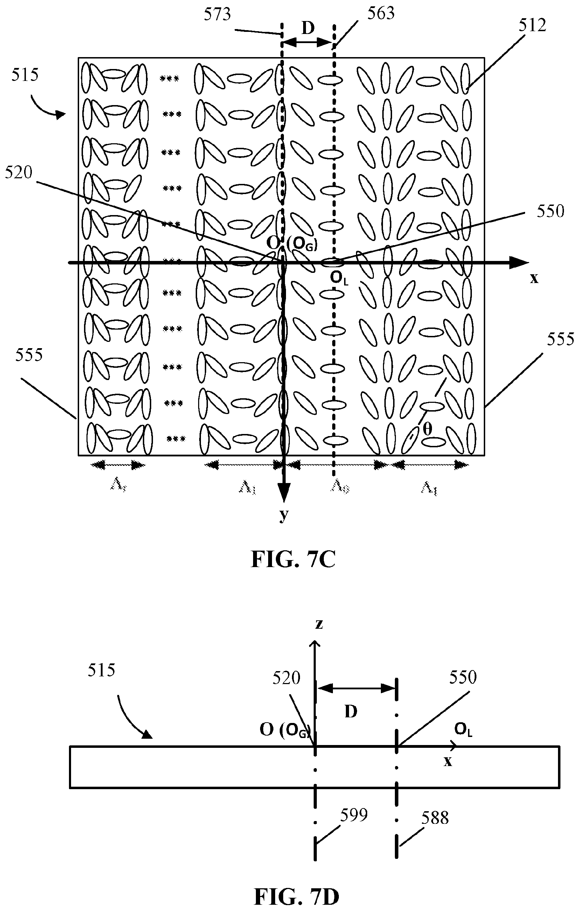

FIG. 7C schematically illustrates an x-y sectional view of a portion of the LCPH element 500 shown in FIG. 5A, showing in-plane orientations of the optically anisotropic molecules 512 in the film plane of the birefringent medium layer 515 in the LCPH element 500, according to an embodiment of the present disclosure. The LCPH lens 500 having the in-plane orientation pattern shown in FIG. 7A may function as an off-axis focusing cylindrical lens. The LCPH lens 500 functioning as an off-axis focusing cylindrical lens may also be referred to as a freeform LCPH element. The freeform LCPH element may be used in the above-described system as the polarization hologram master to fabricate various freeform HOEs.

In the embodiment shown in FIG. 7C, the origin (point "O'' in FIG. 7C) of the x-y plane corresponds to the geometry center (O_{G}) 520 of the LCPH lens 500. The lens pattern center (O_{L}) 550 of the LCPH lens 500 may not coincide with the geometry center (O_{G}) 520. Instead, the lens pattern center (O_{L}) 550 may be shifted by a predetermined distance D in a predetermined direction from the geometry center (O_{G}) 520. Accordingly, the in-plane lens pattern center axis 563 may not coincide with the in-plane geometry center axis 573. Instead, the in-plane lens pattern center axis 563 may be shifted by the predetermined distance D in a predetermined direction from the in-plane geometry center axis 573. In the embodiment shown in FIG. 7C, the lens pattern center (O_{L}) 550 is shifted by the distance D in the +x direction from the geometry center (O_{G}). Accordingly, the in-plane lens pattern center axis 563 is shifted by the distance D in the +x direction from the in-plane geometry center axis 573. This shift is for illustrative purposes and is not intended to limit to the scope of the present disclosure. The shift may be in other suitable directions and for other suitable distances. For example, in some embodiments, the lens pattern center (O_{L}) 550 may be shifted by a predetermined distance in the x-axis direction from the geometry center (O_{G}) 520. In some embodiments, the predetermined direction may be other directions.

FIG. 7D illustrates a side view of the LCPH lens 500 having a lens pattern shown in FIG. 7C, according to an embodiment of the present disclosure. The side view shows an out-of-plane lens pattern center axis 588 and an out-of-plane geometry center axis 599 passing through the lens pattern center (O_{L}) 550 and the geometry center (O_{G}) 520, respectively. The out-of-plane lens pattern center axis 588 and the out-of-plane geometry center axis 599 may be perpendicular to the surface plane (e.g., the x-y plane). That is, the out-of-plane lens pattern center axis 588 and the out-of-plane geometry center axis 599 may be in the z-axis direction or the thickness direction of the LCPH lens 500. Referring to FIG. 7C and FIG. 7D, the lens pattern center (O_{L}) 550 is shifted from the geometry center (O_{G}) 520 for the predetermined distance D. The shift may also correspond to the shift or distance between the parallel out-of-plane lens pattern center axis 588 and the out-of-plane geometry center axis 599.

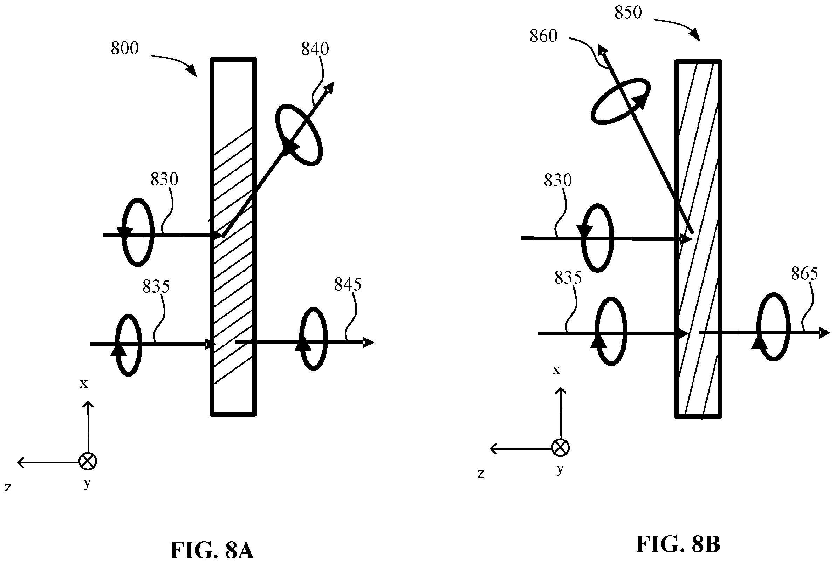

FIG. 8A illustrates diffraction and transmission of the LCPH element 500 functioning as a transmissive PVH element 800, according to an embodiment of the present disclosure. The transmissive PVH element 800 may be configured to substantially forwardly diffract a circularly polarized beam or an elliptically polarized beam having a first handedness (e.g., a handedness that is the same as the handedness of the rotation of the LC directors at the LC director plane) as a diffracted beam (e.g., the 1^{st} order diffracted beam). The transmissive PVH element 800 may substantially transmit (e.g., with negligible diffraction) a circularly polarized beam having a second handedness that is opposite to the first handedness as a transmitted beam with negligible or zero diffraction. In some embodiments, the transmissive PVH element 800 may be configured to reverse the handedness of the circularly polarized beam diffracted thereby. For example, the diffracted beam output from the transmissive PVH element 800 may be a circularly polarized beam with the second handedness reversed by the transmissive PVH element 800. In some embodiments, the transmissive PVH element 800 may be configured to maintain the handedness of the circularly polarized beam transmitted thereby. For example, the transmitted beam may be a circularly polarized beam with the second handedness.

In some embodiments, the PVH element 800 may also transmit the circularly polarized beam having the first handedness as a transmitted beam. The transmission of the circularly polarized beam having the first handedness may be much lower than the forward diffraction of the circularly polarized beam having the first handedness, and much lower than the transmission of the circularly polarized beam having the second handedness. In some embodiments, the PVH element 800 may also forwardly diffract the circularly polarized beam having the second handedness as a diffracted beam. The forward diffraction of the circularly polarized beam having the second handedness may be much lower than the transmission of the circularly polarized beam having the second handedness, and much lower than the forward diffraction of the circularly polarized beam having the first handedness.

For discussion purposes, FIG. 8A shows the transmissive PVH element 800 as a right-handed transmissive PVH, which is configured to substantially forwardly diffract an RHCP beam 830 as an LHCP beam 840, and substantially transmit (e.g., with negligible diffraction) an LHCP beam 835 as an LHCP beam 845. The transmission of the RHCP beam 830 and the forward diffraction of the LHCP beam 835 are not shown in FIG. 8A.

FIG. 8B illustrates diffraction and transmission of the LCPH element 500 functioning as a reflective PVH element 850, according to an embodiment of the present disclosure. The reflective PVH element 850 may be configured to substantially backwardly diffract a circularly polarized beam or an elliptically polarized beam having a first handedness (e.g., a handedness that is the same as the handedness of the helical structure) as a diffracted beam (e.g., the 1^{st} diffracted beam), and substantially transmit (e.g., with negligible or zero diffraction) a circularly polarized beam having a second handedness that is opposite to the first handedness as a transmitted beam. In some embodiments, the reflective PVH element 850 may be configured to substantially maintain the handedness of the circularly polarized beam diffracted thereby and the handedness of the circularly polarized beam transmitted thereby. For example, the diffracted beam may be a circularly polarized beam with the first handedness, and the transmitted beam may be a circularly polarized beam with the second handedness substantially.

In some embodiments, the PVH element 850 may also transmit the circularly polarized beam having the first handedness as a transmitted beam. The transmission of the circularly polarized beam having the first handedness may be much lower than the backward diffraction of the circularly polarized beam having the first handedness, and much lower than the transmission of the circularly polarized beam having the second handedness. In some embodiments, the PVH element 850 may also backwardly diffract the circularly polarized beam having the second handedness as a diffracted beam. The backward diffraction of the circularly polarized beam having the second handedness may be much lower than the transmission of the circularly polarized beam having the second handedness, and much lower than the backward diffraction of the circularly polarized beam having the first handedness.

For discussion purposes, FIG. 8B shows that the reflective PVH element 850 is a right-handed reflective PVH, which is configured to substantially backwardly diffract an RHCP beam 830 as an RHCP beam 860, and substantially transmit (e.g., with negligible diffraction) an LHCP beam 835 as an LHCP beam 865. The transmission of the RHCP beam 830 and the backward diffraction of the LHCP beam 835 are not shown in FIG. 8B.

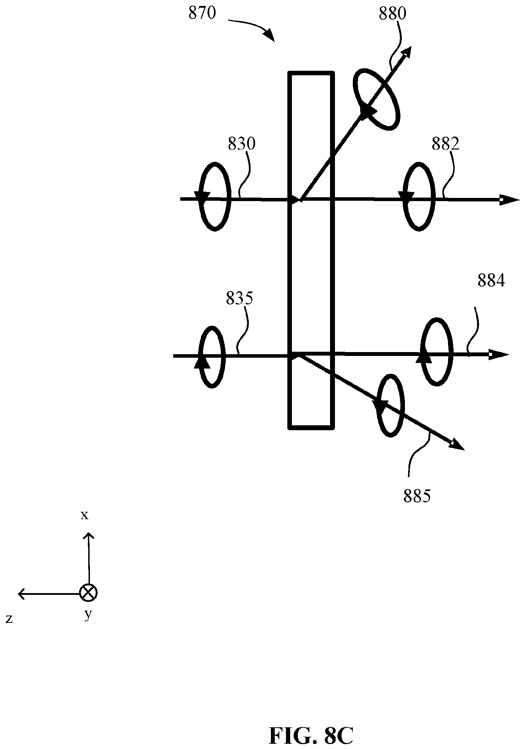

FIG. 8C schematically illustrates diffraction of the LCPH element shown in FIG. 5A functioning as a PBP element 870, according to an embodiment of the present disclosure. The PBP element 870 may be configured to operate in a positive state to substantially forwardly diffract a circularly polarized light having a first handedness in a positive diffraction angle, and operate in a negative state to substantially forwardly diffract a circularly polarized light having a second handedness opposite to the first handedness in a negative diffraction angle. The PBP element 870 operating in the positive state or the negative state may reverse the handedness of a circularly polarized beam diffracted thereby. In some embodiments, the optical state (e.g., the positive or negative state) of the PBP element 870 may depend on the handedness of a circularly polarized input beam, the handedness of the rotation of the orientations of the directors of the LC molecules within the optical film of the birefringent medium layer.

In some embodiments, the PBP element 870 operating in the positive state may also diffract the circularly polarized beam having the first handedness as a 0^{th} order diffracted beam (that is a transmitted beam). The transmission of the circularly polarized beam having the first handedness may be much lower than the forward ward diffraction of the circularly polarized beam having the first handedness. In some embodiments, the PBP element 870 operating in the negative state may also transmit the circularly polarized beam having the second handedness as a 0^{th} order diffracted beam (that is a transmitted beam). The transmission of the circularly polarized beam having the second handedness may be much lower than the forward ward diffraction of the circularly polarized beam having the second handedness. The PBP element 870 operating in the positive state or the negative state may maintain the handedness of a circularly polarized beam transmitted therethrough. In some embodiments, when the thickness of the birefringent medium layer is configured as d=λ/(2*Δn), where λ is a wavelength of the input circularly polarized beam, Δn is the birefringence of the LC material of the birefringent medium layer, and Δn =nₑ-nₒ, where nₑ and nₒ are the extraordinary and ordinary refractive indices of the LC material, respectively, the diffraction efficiency of the PBP element 870 may be almost 100%, and the 0^{th} order diffracted beam may be negligible.

For example, as shown in FIG. 8C, the PBP element 870 may be configured to operate in a positive state for an RHCP beam 830 (having a wavelength in a predetermined wavelength range), and forwardly diffract the RHCP beam 830 as an LHCP beam 880 (e.g., +1^{st} order diffracted beam) having a positive diffraction angle (e.g., +θ), and as an RHCP beam 882 (the 0^{th} order diffracted beam). The PBP element 870 may be configured to operate in a negative state for an LHCP beam 835 (having the wavelength in the predetermined wavelength range), and forwardly diffract the LHCP beam 835 as an RHCP beam 885(e.g., -1^{st} order diffracted beam) having a negative diffraction angle (e.g., -θ) and an LHCP beam 884 (the 0^{th} order diffracted beam).

In some embodiments, although not shown, the PBP element 870 may be configured to operate in a positive state for an LHCP beam, and may forwardly diffract the LHCP beam in a positive angle (e.g., +θ). The PBP element 870 may operate in a negative state for an RHCP beam, and may forwardly diffract the RHCP beam in a negative angle (e.g., -θ).

In some embodiments, the present disclosure provides a system. The system includes a light outputting element configured to output a first beam propagating toward a beam interference zone from a first side of the beam interference zone. The system also includes a wavefront shaping assembly disposed at a second side of the beam interference zone and including a polarization hologram, the wavefront shaping assembly being configured to reflect the first beam as a second beam propagating toward the beam interference zone from the second side. The first beam and the second beam are linearly polarized beams, and are configured to interfere with one another within the beam interference zone to generate an interference pattern that is recordable in a recording medium layer disposed in the beam interference zone.

In some embodiments, the polarization hologram is configured with a predetermined phase profile, and the second beam is configured with a predetermined wavefront that is associated with the predetermined phase profile of the polarization hologram. In some embodiments, the polarization hologram includes a reflective polarization volume hologram ("PVH") element. In some embodiments, the wavefront shaping assembly further includes a waveplate disposed between the polarization hologram and the beam interference zone. In some embodiments, the waveplate is configured to convert the first beam received from the light outputting element into a first polarized beam having a predetermined handedness toward the polarization hologram. The polarization hologram is configured to reflect the first polarized beam back to the waveplate as a second polarized beam having the predetermined handedness. The waveplate is configured to convert the second polarized beam received from the polarization hologram into the second beam propagating toward the beam interference zone from the second side.

In some embodiments, the present disclosure provides a system. The system includes a light outputting element configured to output a first beam propagating toward a beam interference zone from a first side of the beam interference zone. The system includes a wavefront shaping assembly including a polarization hologram, the wavefront shaping assembly being disposed between the light outputting element and the beam interference zone, and configured to convert the first beam into a second beam propagating toward the beam interference zone from the first side. The second beam is configured to interfere with a third beam within the beam interference zone to generate an interference pattern that is recordable in a recording medium layer disposed in the beam interference zone. The third beam propagates toward the beam interference zone from a second side of the beam interference zone. In some embodiments, the first beam and the third beam are linearly polarized beams having the same polarization direction, and the interference pattern is an intensity interference pattern. In some embodiments, the wavefront shaping assembly further includes a waveplate disposed between the polarization hologram and the beam interference zone, and a polarizer disposed between the waveplate and the beam interference zone. In some embodiments, the polarization hologram includes a transmissive polarization volume hologram ("PVH") element or a Pancharatnam-Berry phase ("PBP") element. In some embodiments, the first beam is a polarized input beam having a first handedness, the polarization hologram is configured with a predetermined phase profile, and is configured to convert the first beam into a first polarized beam having a second handedness that is opposite to the first handedness and a second polarized beam having the first handedness, and the first polarized beam is configured with a predetermined wavefront associated with the predetermined phase profile of the polarization hologram. In some embodiments, the wavefront shaping assembly further includes a waveplate disposed between the polarization hologram and the beam interference zone, and a polarizer disposed between the waveplate and the beam interference zone. The waveplate is configured to respectively convert the first polarized beam and the second polarized beam into a first linearly polarized beam and a second linearly polarized beam having orthogonal polarization directions toward the polarizer. The polarizer is configured to transmit the first linearly polarized beam as the second beam propagating toward the beam interference zone from the first side, and block the second linearly polarized beam. In some embodiments, the light outputting element is a first light outputting element, and the system further comprises: a second light outputting element disposed at the second side of the beam interference zone, and configured to output the third beam propagating toward the beam interference zone from the second side. In some embodiments, the light outputting element is a first light outputting element, the wavefront shaping assembly is a first wavefront shaping assembly, the polarization hologram is a first polarization hologram, and the system further comprises: a second light outputting element disposed at the second side of the beam interference zone, and configured to output a fourth beam propagating toward the beam interference zone from the second side, and a second wavefront shaping assembly including a second polarization hologram, the second wavefront shaping assembly being disposed between the second light outputting element and the beam interference zone, and configured to convert the fourth beam into the third beam propagating toward the beam interference zone from the second side. In some embodiments, the first wavefront shaping assembly further includes a first waveplate disposed between the first polarization hologram and the beam interference zone, and a first polarizer disposed between the first waveplate and the beam interference zone, and the second wavefront shaping assembly further includes a second waveplate disposed between the second polarization hologram and the beam interference zone, and a second polarizer disposed between the second waveplate and the beam interference zone. In some embodiments, the second polarization hologram includes a transmissive polarization volume hologram ("PVH") element or a Pancharatnam-Berry phase ("PBP") element.

In some embodiments, the present disclosure provides a system. The system includes a first light outputting element configured to output a first beam propagating toward a beam interference zone from a first side of the beam interference zone. The system also includes a first wavefront shaping assembly including a first polarization hologram, the first wavefront shaping assembly being disposed between the first light outputting element and the beam interference zone, and configured to convert the first beam into a second beam propagating toward the beam interference zone from the first side. The system includes a second wavefront shaping assembly including a second polarization hologram, the second wavefront shaping assembly being disposed at a second side of the beam interference zone, and configured to reflect the second beam back as a third beam propagating toward the beam interference zone from the second side. The second beam and the third beam are linearly polarized beams, and are configured to interfere with one another within the beam interference zone to generate an interference pattern that is recordable in a recording medium layer disposed in the beam interference zone. In some embodiments, the first wavefront shaping assembly further includes a first waveplate disposed between the first polarization hologram and the beam interference zone, and a first polarizer disposed between the first waveplate and the beam interference zone. In some embodiments, the second wavefront shaping assembly further includes a second waveplate disposed between the second polarization hologram and the beam interference zone. In some embodiments, the first polarization hologram includes a transmissive polarization volume hologram ("PVH") element or a Pancharatnam-Berry phase ("PBP") element, and the second polarization hologram includes a reflective PVH element. In some embodiments, the first polarization hologram is configured with a first predetermined phase profile, the second polarization hologram is configured with a second predetermined phase profile, the second beam is configured with a first predetermined wavefront associated with the first predetermined phase profile, and the third beam is configured with a second predetermined wavefront associated with the first predetermined phase profile and the second predetermined phase profile.

In some embodiments, the present disclosure provides a system. The system includes a first light outputting element configured to output a first beam propagating toward a beam interference zone from a first side of the beam interference zone. The system also includes a wavefront shaping assembly disposed between the first light outputting element and the beam interference zone, and including a polarization hologram, the wavefront shaping assembly being configured to convert the first beam into a second beam propagating toward the beam interference zone from the first side. The system also includes a second light outputting element disposed at a second side of the beam interference zone, and configured to output a third beam propagating toward the beam interference zone from the second side. The second beam and the third beam are linearly polarized, and are configured to interfere with one another within the beam interference zone to generate an interference pattern.

In some embodiments, the wavefront shaping assembly further includes a waveplate disposed between the polarization hologram and the beam interference zone. In some embodiments, the wavefront shaping assembly further includes a polarizer disposed between the waveplate and the beam interference zone. In some embodiments, the polarization hologram is configured with a predetermined phase profile. The polarization hologram is configured to convert a polarized input beam having a first handedness as a first polarized output beam having a predetermined wavefront associated with the predetermined phase profile and a second handedness that is opposite to the first handedness, and a second polarized output beam having the first handedness.

In some embodiments, the present disclosure provides a system. The system includes a first light outputting element configured to output a first beam propagating toward a beam interference zone from a first side of the beam interference zone. The system also includes a first wavefront shaping assembly disposed between the first light outputting element and the beam interference zone, and including a first polarization hologram, the first wavefront shaping assembly being configured to convert the first beam into a second beam propagating toward the beam interference zone from the first side. The system also includes a second light outputting element disposed at a second side of the beam interference zone, and configured to output a third beam propagating toward the beam interference zone from the second side. The system further includes a second wavefront shaping assembly disposed between the second light outputting element and the beam interference zone, and including a second polarization hologram, the second wavefront shaping assembly being configured to convert the third beam into a fourth beam propagating toward the beam interference zone from the second side. The second beam and the fourth beam are linearly polarized beams, and are configured to interfere with one another within the beam interference zone to generate an interference pattern.

In some embodiments, the first wavefront shaping assembly further includes a first waveplate disposed between the first polarization hologram and the beam interference zone. In some embodiments, the first wavefront shaping assembly further includes a first polarizer disposed between the first waveplate and the beam interference zone. In some embodiments, the first polarization hologram is configured with a first predetermined phase profile. The first polarization hologram is configured to convert a first polarized input beam having a first predetermined handedness as a first polarized output beam having a first predetermined wavefront associated with the first predetermined phase profile and a handedness that is opposite to the first predetermined handedness, and a second polarized output beam having the first predetermined handedness.

In some embodiments, the second wavefront shaping assembly further includes a second waveplate disposed between the second polarization hologram and the beam interference zone In some embodiments, the second wavefront shaping assembly further includes a second polarizer disposed between the second waveplate and the beam interference zone. In some embodiments, the second polarization hologram is configured with a second predetermined phase profile. The second polarization hologram is configured to convert a second polarized input beam having a second predetermined handedness as a third polarized output beam having a second predetermined wavefront associated with the second predetermined phase profile and a handedness that is opposite to the second predetermined handedness, and a fourth polarized output beam having the second predetermined handedness.

In some embodiments, the present disclosure provides a system. The system includes a first light outputting element configured to output a first beam propagating toward a beam interference zone from a first side of the beam interference zone. The system also includes a first wavefront shaping assembly disposed between the first light outputting element and the beam interference zone, and including a first polarization hologram, the first wavefront shaping assembly being configured to convert the first beam into a second beam propagating toward the beam interference zone from the first side. The system also includes a second wavefront shaping assembly disposed at a second side of the beam interference zone, and including a second polarization hologram, the second wavefront shaping assembly being configured to reflect the second beam back as a third beam propagating toward the beam interference zone from the second side. The second beam and the third beam are linearly polarized beams, and are configured to interfere with one another within the beam interference zone to generate an interference pattern.

In some embodiments, the first wavefront shaping assembly further includes a first waveplate disposed between the first polarization hologram and the beam interference zone. In some embodiments, the first wavefront shaping assembly further includes a first polarizer disposed between the first waveplate and the beam interference zone. In some embodiments, the second wavefront shaping assembly further includes a second waveplate disposed between the second polarization hologram and the beam interference zone. In some embodiments, the first polarization hologram includes a transmissive PVH element or a Pancharatnam-Berry phase ("PBP") element. The second polarization hologram includes a reflective PVH element.

In some embodiments, the present disclosure provides a method. The method includes directing a first beam to propagate through a beam interference zone toward a wavefront shaping assembly, wherein the first beam propagates toward the beam interference zone from a first side of the beam interference zone. The method also includes reflecting, by the wavefront shaping assembly including a polarization hologram, the first beam back toward the beam interference zone as a second beam, wherein the second beam propagates toward the beam interference zone from a second side of the beam interference zone. The first beam and the second beam are linearly polarized beams and are configured to interfere with one another within the beam interference zone to generate an interference pattern.

In some embodiments, the polarization hologram is configured with a predetermined phase profile, and the second beam has a predetermined wavefront that is associated with the predetermined phase profile of the polarization hologram. In some embodiments, the polarization hologram includes a reflective polarization volume hologram ("PVH") element, the method further includes: reflecting, by the reflective PVH element, a first polarized beam having a predetermined handedness as a second polarized beam having the predetermined handedness and the predetermined wavefront.

In some embodiments, the wavefront shaping assembly further includes a waveplate disposed between the polarization hologram and the beam interference zone, the method further includes: converting, by the waveplate, the first beam into the first polarized beam propagating toward the polarization hologram, and converting, by the waveplate, the second polarized beam output from the polarization hologram into the second beam.

In some embodiments, the present disclosure provides a method. The method includes directing a first beam to propagate toward a wavefront shaping assembly. The method also includes converting, by the wavefront shaping assembly including a polarization hologram, the first beam into a second beam propagating toward a beam interference zone from a first side of the beam interference zone. The method also includes directing a third beam to propagate toward the beam interference zone from a second side of the beam interference zone. The second beam and the third beam are linearly polarized beams and are configured to interfere with one another within the beam interference zone to generate an interference pattern.

In some embodiments, the wavefront shaping assembly further includes a waveplate disposed between the polarization hologram and the beam interference zone. In some embodiments, the wavefront shaping assembly further includes a polarizer disposed between the waveplate and the beam interference zone.

In some embodiments, the polarization hologram is configured with a predetermined phase profile, and the method further includes: converting, by the polarization hologram, the first beam that is a polarized input beam having a first handedness as a first polarized output beam having a predetermined wavefront associated with the predetermined phase profile and a second handedness that is opposite to the first handedness, and a second polarized output beam having the first handedness.

In some embodiments, the present disclosure provides a method. The method includes directing a first beam to propagate toward a first wavefront shaping assembly. The method also includes converting, by the first wavefront shaping assembly including a first polarization hologram, the first beam into a second beam propagating toward a beam interference zone from a first side of the beam interference zone. The method also includes directing a third beam to propagate through a second wavefront shaping assembly. The method also includes converting, by the second wavefront shaping assembly including a second polarization hologram, the third beam into a fourth beam propagating toward a beam interference zone from a second side of the beam interference zone. The second beam and the fourth beam are linearly polarized beams and are configured to interfere with one another within the beam interference zone to generate an interference pattern.

In some embodiments, the first wavefront shaping assembly further includes a first waveplate disposed between the first polarization hologram and the beam interference zone. In some embodiments, the first wavefront shaping assembly further includes a first polarizer disposed between the first waveplate and the beam interference zone. In some embodiments, the first polarization hologram is configured with a first predetermined phase profile, and the method further includes: converting, by the first polarization hologram, the first beam that is a first polarized input beam having a first predetermined handedness as a first polarized output beam having a first predetermined wavefront associated with the first predetermined phase profile and a handedness that is opposite to the first predetermined handedness, and a second polarized output beam having the first predetermined handedness.

In some embodiments, the second wavefront shaping assembly further includes a second waveplate disposed between the second polarization hologram and the beam interference zone In some embodiments, the second wavefront shaping assembly further includes a second polarizer disposed between the second waveplate and the beam interference zone. In some embodiments, the second polarization hologram is configured with a second predetermined phase profile, and the method further includes: converting, by the second polarization hologram, the third beam that is a second polarized input beam having a second predetermined handedness as a third polarized output beam having a second predetermined wavefront associated with the second predetermined phase profile and a handedness that is opposite to the second predetermined handedness, and a fourth polarized output beam having the second predetermined handedness.

In some embodiments, the present disclosure provides a method. The method includes directing a first beam to propagate toward a first wavefront shaping assembly. The method also includes converting, by the first wavefront shaping assembly including a first polarization hologram, the first beam into a second beam propagating through a beam interference zone from a first side of the beam interference zone. The method also includes reflecting, by a second wavefront shaping assembly including a second polarization hologram, the second beam back toward the beam interference zone as a third beam, wherein the third beam propagates toward the beam interference zone from a second side of the beam interference zone. The second beam and the third beam are linearly polarized beams and are configured to interfere with one another within the beam interference zone to generate an interference pattern.

In some embodiments, the first wavefront shaping assembly further includes a first waveplate disposed between the first polarization hologram and the beam interference zone. In some embodiments, the first wavefront shaping assembly further includes a first polarizer disposed between the first waveplate and the beam interference zone. In some embodiments, the second wavefront shaping assembly further includes a second waveplate disposed between the second polarization hologram and the beam interference zone. In some embodiments, the first polarization hologram includes a transmissive PVH element or a Pancharatnam-Berry phase ("PBP") element, and the second polarization hologram includes a reflective PVH element.

In some embodiments, the present disclosure provides a method. The method includes outputting, by a light outputting element, a first beam propagating toward a beam interference zone from a first side of the beam interference zone. The method also includes converting, by a wavefront shaping assembly including a polarization hologram, the first beam into a second beam propagating toward a beam interference zone from a first side of the beam interference zone. The wavefront shaping assembly is disposed between the light outputting element and the beam interference zone. The second beam is configured to interfere with a third beam within the beam interference zone to generate an interference pattern that is recordable in a recording medium layer disposed in the beam interference zone. The third beam propagates toward the beam interference zone from a second side of the beam interference zone. In some embodiments, the first beam and the third beam are linearly polarized beams having the same polarization direction, and the interference pattern is an intensity interference pattern. In some embodiments, the wavefront shaping assembly further includes a waveplate disposed between the polarization hologram and the beam interference zone, and a polarizer disposed between the waveplate and the beam interference zone. In some embodiments, the polarization hologram includes a transmissive polarization volume hologram ("PVH") element or a Pancharatnam-Berry phase ("PBP") element. In some embodiments, the first beam is a polarized input beam having a first handedness, and the polarization hologram is configured with a predetermined phase profile. The method further includes converting, by the polarization hologram, the first beam into a first polarized beam having a second handedness that is opposite to the first handedness and a second polarized beam having the first handedness. The first polarized beam is configured with a predetermined wavefront associated with the predetermined phase profile of the polarization hologram. In some embodiments, the wavefront shaping assembly further includes a waveplate disposed between the polarization hologram and the beam interference zone, and a polarizer disposed between the waveplate and the beam interference zone. The method further includes: respectively converting, by the waveplate the first polarized beam and the second polarized beam into a first linearly polarized beam and a second linearly polarized beam having orthogonal polarization directions toward the polarizer, and transmitting, by the polarizer, the first linearly polarized beam as the second beam propagating toward the beam interference zone from the first side, and block the second linearly polarized beam.

In some embodiments, the light outputting element is a first light outputting element, the method further includes: outputting, by a second light outputting element disposed at the second side of the beam interference zone, the third beam propagating toward the beam interference zone from the second side.

In some embodiments, the light outputting element is a first light outputting element, the wavefront shaping assembly is a first wavefront shaping assembly, the polarization hologram is a first polarization hologram. The method further includes, outputting, by a second light outputting element disposed at the second side of the beam interference zone, a fourth beam propagating toward the beam interference zone from the second side. In some embodiments, the method further includes, converting, by a second wavefront shaping assembly including a second polarization hologram and disposed between the second light outputting element and the beam interference zone, the fourth beam into the third beam propagating toward the beam interference zone from the second side.

In some embodiments, the first wavefront shaping assembly further includes a first waveplate disposed between the first polarization hologram and the beam interference zone, and a first polarizer disposed between the first waveplate and the beam interference zone, and the second wavefront shaping assembly further includes a second waveplate disposed between the second polarization hologram and the beam interference zone, and a second polarizer disposed between the second waveplate and the beam interference zone. The second polarization hologram includes a transmissive polarization volume hologram ("PVH") element or a Pancharatnam-Berry phase ("PBP") element

The foregoing description of the embodiments of the present disclosure have been presented for the purpose of illustration. It is not intended to be exhaustive or to limit the disclosure to the precise forms disclosed. Persons skilled in the relevant art can appreciate that modifications and variations are possible in light of the above disclosure.

Some portions of this description may describe the embodiments of the present disclosure in terms of algorithms and symbolic representations of operations on information. These operations, while described functionally, computationally, or logically, may be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware and/or software modules, alone or in combination with other devices. In one embodiment, a software module is implemented with a computer program product including a computer-readable medium containing computer program code, which can be executed by a computer processor for performing any or all of the steps, operations, or processes described. In some embodiments, a hardware module may include hardware components such as a device, a system, an optical element, a controller, an electrical circuit, a logic gate, etc.

Embodiments of the present disclosure may also relate to an apparatus for performing the operations herein. This apparatus may be specially constructed for the specific purposes, and/or it may include a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. The non-transitory computer-readable storage medium can be a suitable medium that can store program codes, for example, a magnetic disk, an optical disk, a read-only memory ("ROM"), or a random access memory ("RAM"), an Electrically Programmable read only memory ("EPROM"), an Electrically Erasable Programmable read only memory ("EEPROM"), a register, a hard disk, a solid-state disk drive, a smart media card ("SMC"), a secure digital card ("SD"), a flash card, etc. Furthermore, computing systems described in the specification may include a single processor or may be architectures employing multiple processors for increased computing capability. The processor may be a central processing unit ("CPU"), a graphics processing unit ("GPU"), or another suitable processing device configured to process data and/or performing computation based on data. The processor may include both software and hardware components. For example, the processor may include a hardware component, such as an application-specific integrated circuit ("ASIC"), a programmable logic device ("PLD"), or a combination thereof. The PLD may be a complex programmable logic device ("CPLD"), a field-programmable gate array ("FPGA"), etc.

Embodiments of the present disclosure may also relate to a product that is produced by a computing process described herein. Such a product may include information resulting from a computing process, where the information is stored on a non-transitory, tangible computer readable storage medium and may include any embodiment of a computer program product or other data combination described herein.

Further, when an embodiment illustrated in a drawing shows a single element, it is understood that the embodiment or an embodiment not shown in the figures but within the scope of the present disclosure may include a plurality of such elements. Likewise, when an embodiment illustrated in a drawing shows a plurality of such elements, it is understood that the embodiment or an embodiment not shown in the figures but within the scope of the present disclosure may include only one such element. The number of elements illustrated in the drawing is for illustration purposes only, and should not be construed as limiting the scope of the embodiment. Moreover, unless otherwise noted, the embodiments shown in the drawings are not mutually exclusive, and they may be combined in a suitable manner. For example, elements shown in one figure/embodiment but not shown in another figure/embodiment may nevertheless be included in the other figure/embodiment. In an optical device disclosed herein including one or more optical layers, films, plates, or elements, the numbers of the layers, films, plates, or elements shown in the figures are for illustrative purposes only. In other embodiments not shown in the figures, which are still within the scope of the present disclosure, the same or different layers, films, plates, or elements shown in the same or different figures/embodiments may be combined or repeated in various manners to form a stack.

Aspects of the invention are set out in the following series of numbered clauses.
1. A system, comprising:
   a light outputting element configured to output a first beam propagating toward a beam interference zone from a first side of the beam interference zone; and
   a wavefront shaping assembly including a polarization hologram, the wavefront shaping assembly being disposed at a second side of the beam interference zone, and configured to reflect the first beam transmitted through the beam interference zone as a second beam propagating toward the beam interference zone from the second side,
   wherein the first beam and the second beam are linearly polarized beams, and are configured to interfere with one another within the beam interference zone to generate an interference pattern that is recordable in a recording medium layer disposed in the beam interference zone.
2. The system of clause 1, wherein the polarization hologram is configured with a predetermined phase profile, and the second beam is configured with a predetermined wavefront that is associated with the predetermined phase profile; and/or the polarization hologram includes a reflective polarization volume hologram ("PVH") element.
3. The system of clause 1 or 2, wherein
   the wavefront shaping assembly further includes a waveplate disposed between the polarization hologram and the beam interference zone,
   the waveplate is configured to convert the first beam received from the light outputting element into a first polarized beam having a predetermined handedness toward the polarization hologram,
   the polarization hologram is configured to reflect the first polarized beam back to the waveplate as a second polarized beam having the predetermined handedness, and
   the waveplate is configured to convert the second polarized beam received from the polarization hologram into the second beam propagating toward the beam interference zone from the second side.
4. The system of any one of the preceding clauses, wherein the first beam and the second beam have the same polarization direction, and the interference pattern is an intensity interference pattern.
5. A system, comprising:
   a light outputting element configured to output a first beam propagating toward a beam interference zone from a first side of the beam interference zone; and
   a wavefront shaping assembly including a polarization hologram, the wavefront shaping assembly being disposed between the light outputting element and the beam interference zone, and configured to convert the first beam into a second beam propagating toward the beam interference zone from the first side,
   wherein the second beam is configured to interfere with a third beam within the beam interference zone to generate an interference pattern that is recordable in a recording medium layer disposed in the beam interference zone, and
   wherein the third beam propagates toward the beam interference zone from a second side of the beam interference zone.
6. The system of clause 5, wherein the first beam and the third beam are linearly polarized beams having the same polarization direction, and the interference pattern is an intensity interference pattern.
7. The system of clause 5 or 6, wherein the wavefront shaping assembly further includes a waveplate disposed between the polarization hologram and the beam interference zone, and a polarizer disposed between the waveplate and the beam interference zone; preferably wherein the waveplate is configured to respectively convert the first polarized beam and the second polarized beam into a first linearly polarized beam and a second linearly polarized beam having orthogonal polarization directions toward the polarizer, and preferably wherein the polarizer is configured to transmit the first linearly polarized beam as the second beam propagating toward the beam interference zone from the first side, and block the second linearly polarized beam
8. The system of any one of clauses 5 to 7, wherein the polarization hologram includes a transmissive polarization volume hologram ("PVH") element or a Pancharatnam-Berry phase ("PBP") element.
9. The system of any one of clauses 5 to 8, wherein:
   the first beam is a polarized input beam having a first handedness,
   the polarization hologram is configured with a predetermined phase profile, and is configured to convert the first beam into a first polarized beam having a second handedness that is opposite to the first handedness and a second polarized beam having the first handedness, and
   the first polarized beam is configured with a predetermined wavefront associated with the predetermined phase profile of the polarization hologram.
10. The system of any one of clauses 5 to 9, wherein the light outputting element is a first light outputting element, and the system further comprises:
   a second light outputting element disposed at the second side of the beam interference zone, and configured to output the third beam propagating toward the beam interference zone from the second side.
11. The system of any one of clauses 5 to 9, wherein the light outputting element is a first light outputting element, the wavefront shaping assembly is a first wavefront shaping assembly, the polarization hologram is a first polarization hologram, and the system further comprises:
   a second light outputting element disposed at the second side of the beam interference zone, and configured to output a fourth beam propagating toward the beam interference zone from the second side, and
   a second wavefront shaping assembly including a second polarization hologram, the second wavefront shaping assembly being disposed between the second light outputting element and the beam interference zone, and configured to convert the fourth beam into the third beam propagating toward the beam interference zone from the second side;
   preferably wherein the first wavefront shaping assembly further includes a first waveplate disposed between the first polarization hologram and the beam interference zone, and a first polarizer disposed between the first waveplate and the beam interference zone, and
   the second wavefront shaping assembly further includes a second waveplate disposed between the second polarization hologram and the beam interference zone, and a second polarizer disposed between the second waveplate and the beam interference zone;
   and preferably wherein the second polarization hologram includes a transmissive polarization volume hologram ("PVH") element or a Pancharatnam-Berry phase ("PBP") element.
12. A system, comprising:
   a first light outputting element configured to output a first beam propagating toward a beam interference zone from a first side of the beam interference zone;
   a first wavefront shaping assembly including a first polarization hologram, the first wavefront shaping assembly being disposed between the first light outputting element and the beam interference zone, and configured to convert the first beam into a second beam propagating toward the beam interference zone from the first side; and
   a second wavefront shaping assembly including a second polarization hologram, the second wavefront shaping assembly being disposed at a second side of the beam interference zone, and configured to reflect the second beam back as a third beam propagating toward the beam interference zone from the second side,
   wherein the second beam and the third beam are linearly polarized beams, and are configured to interfere with one another within the beam interference zone to generate an interference pattern that is recordable in a recording medium layer disposed in the beam interference zone.
13. The system of clause 12, wherein the first wavefront shaping assembly further includes:
   a first waveplate disposed between the first polarization hologram and the beam interference zone, and
   a first polarizer disposed between the first waveplate and the beam interference zone;
   preferably wherein the second wavefront shaping assembly further includes a second waveplate disposed between the second polarization hologram and the beam interference zone.
14. The system of clause 12 or 13, wherein
   the first polarization hologram includes a transmissive polarization volume hologram ("PVH") element or a Pancharatnam-Berry phase ("PBP") element, and
   the second polarization hologram includes a reflective PVH element.
15. The system of any one of clauses 12 to 14, wherein:
   the first polarization hologram is configured with a first predetermined phase profile,
   the second polarization hologram is configured with a second predetermined phase profile,
   the second beam is configured with a first predetermined wavefront associated with the first predetermined phase profile, and
   the third beam is configured with a second predetermined wavefront associated with the first predetermined phase profile and the second predetermined phase profile.

Various embodiments have been described to illustrate the exemplary implementations. Based on the disclosed embodiments, a person having ordinary skills in the art may make various other changes, modifications, rearrangements, and substitutions without departing from the scope of the present disclosure. Thus, the present disclosure is not limited to the above described embodiments. The present disclosure may be embodied in other equivalent forms without departing from the scope of the present disclosure. The scope of the present disclosure is defined in the appended claims.

## Claims

1. A system, comprising:
a light outputting element configured to output a first beam propagating toward a beam interference zone from a first side of the beam interference zone; and
a wavefront shaping assembly including a polarization hologram, the wavefront shaping assembly being disposed at a second side of the beam interference zone, and configured to reflect the first beam transmitted through the beam interference zone as a second beam propagating toward the beam interference zone from the second side,
wherein the first beam and the second beam are linearly polarized beams, and are configured to interfere with one another within the beam interference zone to generate an interference pattern that is recordable in a recording medium layer disposed in the beam interference zone,
wherein:
the wavefront shaping assembly further includes a waveplate disposed between the polarization hologram and the beam interference zone,
the waveplate is configured to convert the first beam received from the light outputting element into a first polarized beam having a predetermined handedness toward the polarization hologram,
the polarization hologram is configured to reflect the first polarized beam back to the waveplate as a second polarized beam having the predetermined handedness, and
the waveplate is configured to convert the second polarized beam received from the polarization hologram into the second beam propagating toward the beam interference zone from the second side.

2. The system of claim 1, wherein the polarization hologram is configured with a predetermined phase profile, and the second beam is configured with a predetermined wavefront that is associated with the predetermined phase profile; and/or the polarization hologram includes a reflective polarization volume hologram ("PVH") element.

3. The system of any one of the preceding claims, wherein the first beam and the second beam have the same polarization direction, and the interference pattern is an intensity interference pattern.
